# EUROPEAN PATENT APPLICATION

(11) **EP 4 253 120 A1**
(43) Date of publication of application: **04.10.2023**
(21) Application number: 22173561.6
(22) Date of filing: 16.05.2022
(51) Int. Cl.: B60K 17/34, B60K 17/342, B60K 17/344, B60K 1/00, B60K 1/04

(54) **OFF-ROAD VEHICLE**

(30) Priority: 01.04.2022 US 202263326378 P; 11.05.2022 US 202217741596
(71) Applicant: Arctic Cat Inc., Thief River Falls, MN 56701 (US); TEXTRON, INC., Providence, RI 02903 (US)
(72) Inventor: Kemp, Ricky Veldee, Augusta, 30907, GA (US); Pabon, Joel, North Augusta, 29860, SC (US); Broennimann, Marcel, Aiken, 29803, SC (US); Claussen, Larry Dean, Evans, 30809, GA (US); Sorenson, Derek, Thief River Falls, 56701, MN (US); MacDonald, Todd, Smiths Falls, K7A4S4 (CA)
(74) Representative: Taruttis, Tilman

(57) **Abstract**

An off-road vehicle includes a frame defining a front of the off-road vehicle and a rear of the off-road vehicle, and a battery assembly supported by the frame. The battery assembly is constructed and arranged to store electric power. The off-road vehicle further includes an electric propulsion motor constructed and arranged to provide off-road vehicle propulsion using the electric power. The battery assembly is closer to the front of the off-road vehicle than the electric propulsion motor, and the electric propulsion motor is closer to the rear of the off-road vehicle than the battery assembly.

## Description

### BACKGROUND

Off-road recreational vehicles, such as side-by-side recreational off-highway vehicles ("ROVs") or all-terrain vehicles ("ATVs"), are quite capable in a wide variety of riding environments and situations, whether for sport or utility purposes. The vehicles can be easy to enter and exit and easy to operate with controls and ergonomics somewhat similar to automobiles. However, unlike most automobiles, off-road recreational vehicles can be driven on harsh off-road terrain.

### SUMMARY

Embodiments are directed to an off-road vehicle frame which includes a main frame section defining a front of the off-road vehicle and a rear of the off-road vehicle. The off-road vehicle frame further includes a first subsection coupled with the main frame section, the first subsection being constructed and arranged to support a battery assembly that stores electric power. The off-road vehicle frame further includes a second subsection coupled with the main frame section, the second subsection being constructed and arranged to support an electric propulsion motor that provides off-road vehicle propulsion using the electric power. The first subsection is closer to the front of the off-road vehicle than the second subsection, and the second subsection is closer to the rear of the off-road vehicle than the first subsection.

Another embodiments are directed to an off-road vehicle which includes a frame, a battery assembly, and an electric propulsion motor. The frame defines a front of the off-road vehicle and a rear of the off-road vehicle. The battery assembly is supported by the frame, and is constructed and arranged to store electric power. The electric propulsion motor is constructed and arranged to provide off-road vehicle propulsion using the electric power. The battery assembly is closer to the front of the off-road vehicle than the electric propulsion motor, and the electric propulsion motor is closer to the rear of the off-road vehicle than the battery assembly.

Yet other embodiments are directed to a method of providing an off-road vehicle. The method includes providing a frame that defines a front of the off-road vehicle and a rear of the off-road vehicle. The method further includes attaching a battery assembly to the frame, the battery assembly being constructed and arranged to store electric power. The method further includes installing an electric propulsion motor constructed and arranged to provide off-road vehicle propulsion using the electric power, the battery assembly being closer to the front of the off-road vehicle than the electric propulsion motor, and the electric propulsion motor being closer to the rear of the off-road vehicle than the battery assembly.

In some arrangements, the frame includes a first frame section and a second frame section. The first frame section supports a front suspension and the battery assembly. Additionally, the second frame section couples with the first frame section and supports a rear suspension and the electric propulsion motor.

In some arrangements, the battery assembly includes a set of battery units. Additionally, the first frame section includes a left portion, a right portion, a set of cross-members extending between the left portion and the right portion to fixedly position the left portion and the right portion apart and define a first frame space between the front of the off-road vehicle and the second frame section. The first frame section further includes a base portion coupled with the left portion and the right portion and disposed within a lower region of the first frame space, the base portion supporting at least a portion of the set of battery units within the first frame space.

In some arrangements, the set of battery units includes a stack of battery units including a bottom battery unit and a top battery unit. The bottom battery unit (i) fastens directly to the base portion and (ii) supports at least one other battery unit of the set of battery units above the base portion. The top battery unit fastens indirectly to the base portion via at least the bottom battery unit.

In some arrangements, the battery units of the set of battery units are physically arranged in a stacked configuration. Additionally, the battery assembly further includes a set of bus bars constructed and arranged to electrically connect the battery units of the set of battery units together and physically support to the battery units of the set of battery units in respective positions within the stack configuration.

In some arrangements, the off-road vehicle further includes a motor controller coupled with the electric propulsion motor, the motor controller being constructed and arranged to control operation of the electric propulsion motor. Additionally, the second frame section includes a left portion, a right portion, and a set of cross-members extending between the left portion and the right portion to fixedly position the left portion and the right portion apart and define a second frame space between the first frame section and the rear of the off-road vehicle, the motor controller and at least a portion of the electric propulsion motor residing within the second frame space.

In some arrangements, the off-road vehicle further includes a transaxle having a housing supported by the frame, an input portion constructed and arranged to receive rotation about a transaxle input axis from the electric propulsion motor, an output portion that couples with at least one of the front and rear suspensions. Additionally, the electric propulsion motor includes a stator fastened to the housing of the transaxle, and a rotor that engages directly with the input portion of the transaxle, the rotor being constructed and arranged to rotate relative to the stator about a rotor axis that is parallel to the transaxle input axis in response to operation of the motor controller.

In some arrangements, the off-road vehicle further includes a transaxle having a housing supported by the frame, an input portion constructed and arranged to receive rotation about a transaxle input axis from the electric propulsion motor, an output portion that couples with at least one of the front and rear suspensions. Additionally, the off-road vehicle includes a belt drive assembly coupled with the input portion. Furthermore, the electric propulsion motor includes a stator supported by the frame, and a rotor that engages with the belt drive assembly to drive the input portion of the transaxle, the rotor being constructed and arranged to rotate relative to the stator about a rotor axis that is parallel to the transaxle input axis in response to operation of the motor controller.

In some arrangements, the off-road vehicle further includes a position sensor (e.g., a Hall Effect sensor, a potentiometer, etc.) coupled with the motor controller, the position sensor being supported by a handle bar which is able to pivot relative to the frame. The position sensor is constructed and arranged to provide a position sensor signal to the motor controller for off-road vehicle speed control.

In some arrangements, the off-road vehicle further includes a battery management system (BMS) coupled with the battery assembly, the BMS being constructed and arranged to control electrical access to the battery assembly. Additionally, the second frame section further includes a set of BMS brackets coupled with the set of cross-members, the set of BMS brackets supporting at least a portion of the BMS within the second frame space.

In some arrangements, the off-road vehicle further includes an onboard charger coupled with the BMS, the onboard charger being constructed and arranged to charge the battery assembly through the BMS. Additionally, the second frame section is constructed and arranged to support a seat at a seat location above the second frame space. Furthermore, the onboard charger is supported by the second frame section and disposed at least partly between the second frame space and the seat location.

In some arrangements, the off-road vehicle further includes a charge port coupled with the onboard charger. The charge port is constructed and arranged to provide the onboard charger with electrical access to an external power source, the charge port being supported by the frame at a charge port location which is higher than the onboard charger and forward of the seat location.

In some arrangements, the off-road vehicle further includes an auxiliary power supply coupled with the BMS, the auxiliary power supply being constructed and arranged to store auxiliary power. The auxiliary power supply is supported by the frame at an auxiliary power supply location which is adjacent to the onboard charger and under the seat location.

In some arrangements, the auxiliary power supply is constructed and arranged to provide power to the BMS when the BMS transitions the battery assembly between a long term sleep mode and a normal operating mode. The long term sleep mode is a state for the battery assembly when the off-road vehicle is intended to remain idle for an extended period of time (e.g., over an hour, overnight, a week, etc.).

In some arrangements, the off-road vehicle further includes a winch supported by the frame and coupled with the auxiliary power supply. The auxiliary power supply is constructed and arranged to provide power to the winch during winch operation.

In some arrangements, the off-road vehicle further includes a front pair of wheels supported by the front suspension, and a rear pair of wheels supported by the rear suspension. The front and rear pairs of wheels are arranged in a quad configuration in which at least a portion of the first frame section is between the wheels of the front pair and at least a portion of the second frame section is between the wheels of the back pair.

In some arrangements, at least a portion of the battery assembly resides between a first vertical plane passing through the front suspension and a second vertical plane passing through the rear suspension. Additionally, at least a portion of the electric propulsion motor resides between the first vertical plane passing through the front suspension and the second vertical plane passing through the rear suspension.

Another embodiment is directed to an off-road vehicle which includes:
(A) a frame extending from a front of the off-road vehicle to a rear of the off-road vehicle;
(B) a battery assembly supported by the frame, the battery assembly being constructed and arranged to store electric power;
(C) an electric propulsion motor constructed and arranged to provide off-road vehicle propulsion using the electric power, the electric propulsion motor includes an output shaft defining an axis of rotation that intersects a line extending parallel to a longitudinal centerline of the off-road vehicle, wherein the line is positioned above at least a portion of the battery assembly when the battery is coupled to the motor.

In some arrangements, the frame includes an upper frame and a lower frame. The lower frame includes a first width and a second width that is greater than the first width. Additionally, the second width is positioned rearward of the first width. Furthermore, the battery assembly is positioned along at least a portion of the first width and at least a portion of the second width, and wherein the battery assembly has a width that is greater than the first width.

In some arrangements, the lower frame comprises foot support frame members extending upward and outboard therefrom. Additionally, the battery assembly is optionally positioned higher than the foot support frame members. Furthermore, at least a portion of the battery assembly is positioned rearward of a forward end of the foot support frame members along the longitudinal centerline of the off-road vehicle.

In some arrangements, the frame includes an upper frame and a lower frame. The upper frame includes a first width and a second width that is less than the first width. The second width is positioned rearward of the first width. Additionally, the battery assembly is positioned beneath the first width and forward of the second width.

In some arrangements, the off-road vehicle further includes two front wheels defining a first axis of rotation, and two rear wheels defining a second axis of rotation. The battery assembly is positioned entirely above a line extending through the first axis of rotation and the second axis of rotation.

Another embodiment is directed to an off-road vehicle which includes an upper frame extending from a front of the off-road vehicle to a rear of the off-road vehicle, a battery assembly supported by the frame, the battery assembly being constructed and arranged to store electric power, and an electric propulsion motor constructed and arranged to provide off-road vehicle propulsion using the electric power. Additionally, the off-road vehicle includes an electrical component positioned at least partially above a portion of the upper frame.

In some arrangements, the electrical component is an auxiliary power supply and/or an onboard charger.

In some arrangements, the off-road vehicle further includes a BMS that is secured to the upper frame.

In some arrangements, the BMS is positioned along the longitudinal axis of the off-road vehicle forward of the electrical component and rearward of the battery assembly.

Another embodiment is directed to an off road vehicle which includes a frame extending from a front of the off road vehicle to a rear of the off road vehicle, the frame including an upper frame and a lower frame, and a battery assembly supported by the frame, the battery assembly being constructed and arranged to store electric power. The off-road vehicle further includes an electric propulsion motor constructed and arranged to provide off road vehicle propulsion using the electric power, a BMS, a motor controller, a pair of rear wheels comprising tires, and a pair of front wheels comprising tires. At least 95% of the mass of the motor controller, the battery management system, and the battery assembly is positioned along a longitudinal centerline of the vehicle between the forwardmost portion of the rear tires and the rearwardmost portion of the front tires.

Another embodiment is directed to an off road vehicle which includes a frame extending from a front of the off road vehicle to a rear of the off road vehicle, the frame including an upper frame and a lower frame, and a battery assembly supported by the frame, the battery assembly being constructed and arranged to store electric power. The off-road vehicle further includes an electric propulsion motor constructed and arranged to provide off road vehicle propulsion using the electric power, a BMS, a motor controller, a pair of rear wheels comprising tires, and a steering column. At least 95% of the mass of the motor controller, the battery management system, and the battery assembly is positioned along a longitudinal centerline of the vehicle forward of the forwardmost portion of the rear tires and rearward of a point on the steering column that is positioned above at least a portion of the upper frame.

In some arrangements, the point on the steering column is positioned above the highest portion of the upper frame and forward along the centerline of the vehicle of a rearwardmost portion of a front tire.

In accordance with certain embodiment, an off road vehicle includes:
(A) a frame including a lower frame extending along at least a portion of a longitudinal centerline of the vehicle towards a rear of the vehicle;
(B) a pair of rear wheels including tires, the rear wheels being positioned on opposite sides of the lower frame;
(C) a battery assembly supported by the frame; and
(D) an electric motor powered by the battery, the motor being positioned at least partially between the rear wheels and extends outboard of at least a portion of the lower frame that is positioned between the rear wheels.

In some arrangements, the electric motor includes an axis of rotation that extends perpendicular to the longitudinal centerline of the vehicle.

In some arrangements, the axis of rotation of the electric motor intersects a line extending parallel to the longitudinal centerline of the off-road vehicle. Additionally, the line is positioned above at least a portion of the battery assembly when the battery is coupled to the motor.

In some arrangements, at least a portion of the battery assembly is positioned lower than an axis of rotation of the electric motor.

In some arrangements, the electric motor is entirely positioned higher than an axis of rotation of the rear wheels.

In accordance with certain embodiment, an off road vehicle includes:
(A) a frame;
(B) a pair of front wheels including tires, the front wheels defining an axis of rotation;
(C) a pair of rear wheels including tires, the rear wheels defining another axis of rotation,
(D) a battery assembly supported by the frame; and
(E) an electric motor powered by the battery, the electric motor being positioned at least partially between the rear wheels.

The battery assembly and the electric motor are positioned above a plane that extends along the length of the vehicle and intersects the axis of rotation of the front wheels and the axis of rotation of the rear wheels.

In accordance with certain embodiment, an off road vehicle includes:
(A) a frame;
(B) a straddle-type seat;
(C) a battery assembly;
(D) an electric motor powered by the battery;
(E) a transaxle operably connected to the electric motor, the transaxle including a transaxle housing; and
(F) an electrical component supported by the transaxle.

In some arrangements, the electric motor is supported by the transaxle housing.

In some arrangements, the off road vehicle further includes a drive shaft operably coupled to the transaxle. The transaxle is operably coupled to a pair of rear wheels. The electric motor is positioned along a longitudinal centerline of the vehicle rearward of the battery assembly.

In some arrangements, the off road vehicle further includes a first bracket secured to the transaxle housing that extends forward from the transaxle housing. The electrical component is positioned along the longitudinal centerline of the vehicle rearward of the battery assembly and forward of the transaxle housing. The frame includes an upper frame member and a lower frame member. The electrical component is suspended by the bracket vertically apart from the upper frame member and the lower frame member.

In some arrangements, the off road vehicle further includes a second bracket secured to the transaxle housing. The electric motor is connected to the second bracket and suspended vertically apart from the upper frame member and the lower frame member.

In some arrangements, the second bracket extends forward from the transaxle housing. The electric motor is positioned along the longitudinal centerline of the vehicle forward of the transaxle housing. The frame includes an upper frame member and a lower frame member. The electric motor is suspended by the bracket vertically apart from the upper frame member and the lower frame member.

In some arrangements, the electric motor is positioned between the first bracket and the second bracket.

Other embodiments are directed to higher and lower level systems, assemblies, apparatus, processing circuits, etc. Some embodiments are directed to various processes, componentry and circuitry which involve an off-road vehicle.

This Summary is provided merely for purposes of summarizing certain example embodiments so as to provide a basic understanding of some aspects of the disclosure. Accordingly, it will be appreciated that the above described example embodiments are merely examples and should not be construed to narrow the scope or spirit of the disclosure in any way. Other embodiments, aspects, and advantages will become apparent from the following detailed description taken in conjunction with the accompanying drawings which illustrate, by way of example, the principles of the described embodiments.

### BRIEF DESCRIPTION OF THE DRAWINGS

The foregoing and other objects, features and advantages will be apparent from the following description of particular embodiments of the present disclosure, as illustrated in the accompanying drawings in which like reference characters refer to the same parts throughout the different views. The drawings are not necessarily to scale, emphasis instead being placed upon illustrating the principles of various embodiments of the present disclosure.

This written disclosure describes illustrative embodiments that are non-limiting and non-exhaustive. Reference is made to illustrative embodiments that are depicted in the figures, in which:
FIGS. 1A-F illustrate perspective views of an off-road vehicle, according to some embodiments of the present disclosure.
FIGS. 2A-F illustrate perspective views of a partial off-road vehicle including suspension components, according to some embodiments of the present disclosure.
FIGS. 3A-C illustrate perspective views of a partial off-road vehicle including driveline components, according to some embodiments of the present disclosure.
FIGS. 4A-H illustrate perspective views of a partial off-road vehicle showing frame components, according to some embodiments of the present disclosure.
FIGS. 5A-F illustrate perspective views of a partial off-road vehicle showing frame components including a removable rear frame assembly, according to some embodiments of the present disclosure.
FIGS. 6A-H illustrate perspective views of a partial off-road vehicle showing frame components with an engine, according to some embodiments of the present disclosure.
FIGS. 7A-H illustrate perspective and cross-sectional views of a partial off-road vehicle showing steering components, according to some embodiments of the present disclosure.
FIGS. 8A-D illustrate perspective views of a lower steering post collar and bellcrank, according to some embodiments of the present disclosure.
FIGS. 9A-B illustrate perspective views of a shifting assembly, according to some embodiments of the present disclosure.
FIGS. 10A-B illustrate perspective views of a partial off-road vehicle including a brake assembly, according to some embodiments of the present disclosure.
FIGS. 11A-X illustrate perspective views of an exhaust and air handling system, according to some embodiments of the present disclosure.
FIGS. 12A-B illustrate perspective views of a CVT air handling system, according to some embodiments of the present disclosure.
FIGS. 13A-I illustrate perspective views of a fuel system, according to some embodiments of the present disclosure.
FIG. 14 illustrates a perspective view of a cooling system, according to some embodiments of the present disclosure.
FIGS. 15A-T illustrate perspective views of body panels and footwells of an off-road vehicle, according to some embodiments of the present disclosure.
FIGS. 16A-B illustrate perspective views of seat supports of an off-road vehicle, according to some embodiments of the present disclosure.
FIG. 17 illustrates a perspective view of a winch system, according to some embodiments of the present disclosure.
FIG. 18 illustrates particular aspects of an off-road vehicle frame in accordance with certain embodiments.
FIGS. 19A and 19B illustrate front and rear views an electric off-road vehicle which utilizes the frame of FIG. 18 in accordance with certain embodiments.
FIG. 20 illustrates a block diagram view of electrical components of the electric off-road vehicle in accordance with certain embodiments.
FIGS. 21A and 21B illustrate side views of electrical components of the electric off-road vehicle in accordance with certain embodiments.
FIGS. 22A and 22B illustrate side and top views of portions of the electric off-road vehicle in accordance with certain embodiments.
FIG. 23 illustrates a perspective view of the off-road vehicle frame in accordance with certain embodiments.
FIG. 24 illustrates a perspective view of a portion of the electric off-road vehicle in accordance with certain embodiments.
FIG. 25 illustrates a side view of a portion of the electric off-road vehicle in accordance with certain embodiments.
FIG. 26 is a flowchart of a procedure for providing an electric off-road vehicle in accordance with certain embodiments.
FIGS. 27-68 illustrate further details of electric off-road vehicles in accordance with certain embodiments.

### DETAILED DESCRIPTION

Improved techniques involve utilizing an off-road vehicle frame which is constructed and arranged to support, among other things, a battery assembly and an electric propulsion motor. The battery assembly stores electric power. Additionally, the electric propulsion motor provides off-road vehicle propulsion using the electric power. In certain arrangements, the battery assembly is supported by the frame closer to the front of the off-road vehicle than the electric propulsion motor, and the electric propulsion motor is supported by the frame closer to the rear of the off-road vehicle than the battery assembly.

The various individual features of the particular arrangements, configurations, and embodiments disclosed herein can be combined in any desired manner that makes technological sense. Additionally, such features are hereby combined in this manner to form all possible combinations, variants and permutations except to the extent that such combinations, variants and/or permutations have been expressly excluded or are impractical. Support for such combinations, variants and permutations is considered to exist in this document.

Embodiments of the present disclosure describe various aspects of an off-road vehicle, such as an ATV (all-terrain vehicle). Embodiments include a removable frame assembly for ease of engine and transaxle assembly and for great consistency of parts among various models. The disclosure here describes an air handling, cooling, and exhaust system optimized for handling muddy and wet off-road conditions of the vehicle. Also described within is a front rack support bracket that connects and support various components, saving space and reducing part count. Embodiments within also discuss a molded foot well system that lays flat for shipping and storage in a first configuration and when in second configuration (installation configuration), provides additional structural and aesthetic benefits to the vehicle. Numerous additional embodiments are disclosed herein that provide for a higher performing, lighter weight, narrower, and more efficiently built off-road vehicle.

This application incorporates by reference the subject matter of Application titled, "ENGINE", having Application Number 16/816,201, filed March 11, 2020, and having inventors Eberhard Wizgall and Dominik Hermann.

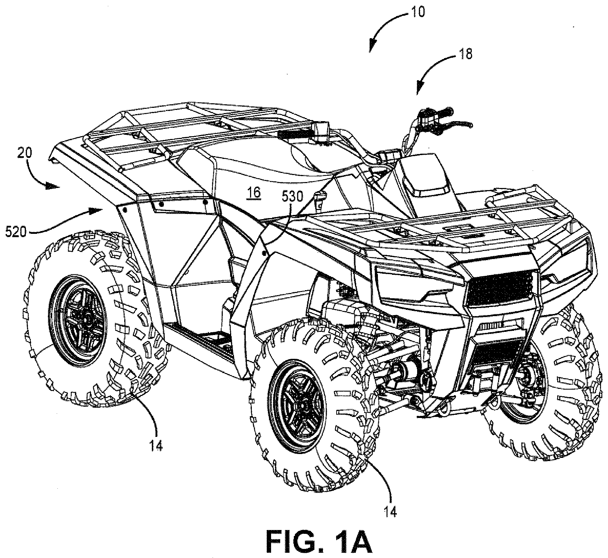

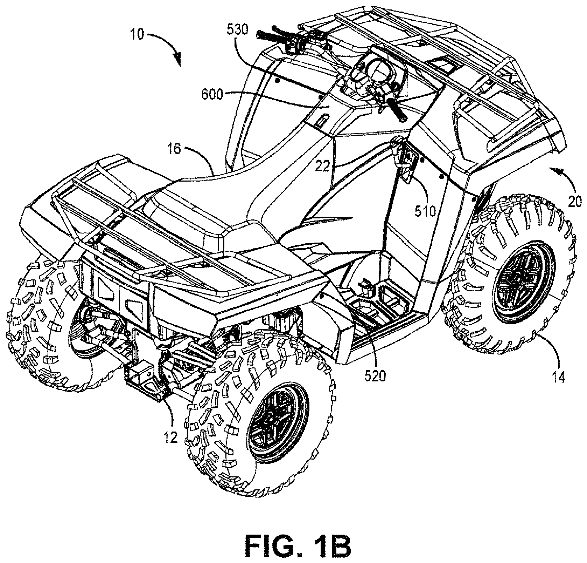

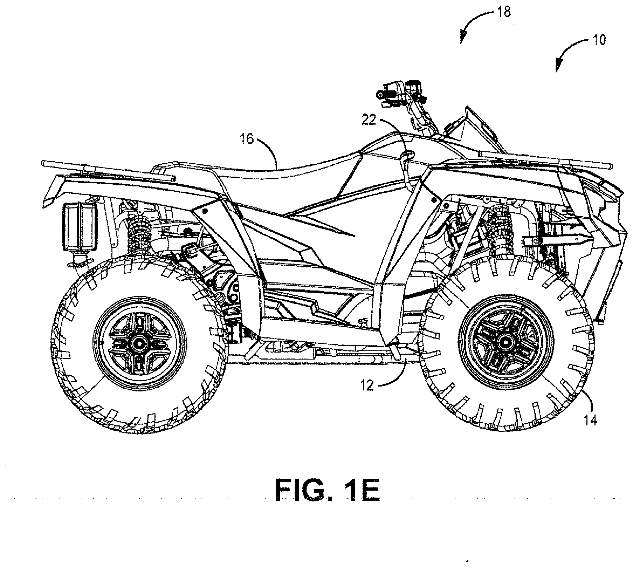

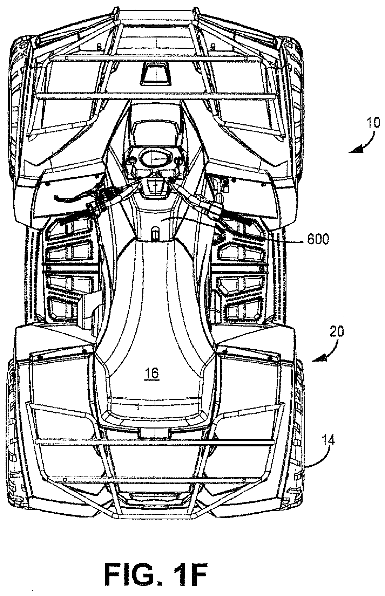

As shown in FIGS. 1A-F, in some embodiments, an off-road vehicle 10 has frame 12 (FIGS. 1B and IE), a plurality of ground engaging members 14, a straddle or saddle seat 16, operator controls 18, and a plurality of body panels 20. As further shown in FIG. 1B, in at least some embodiments, the off-road vehicle 10 includes a shifter 22. Shifter 22 permits the operator to select a transmission setting such as: park, reverse, neutral, high, low.

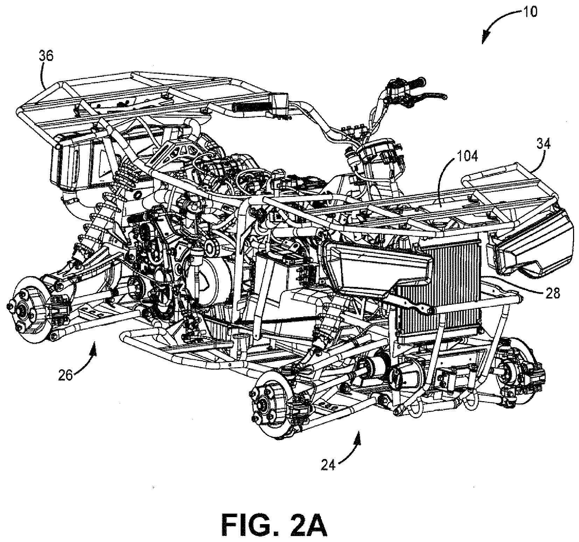

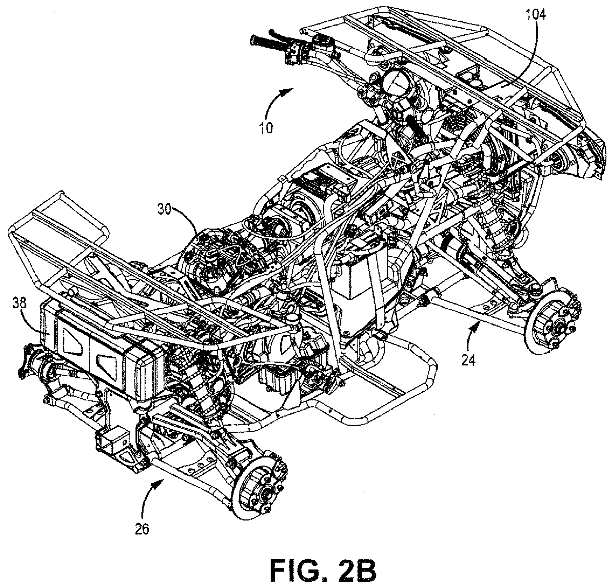

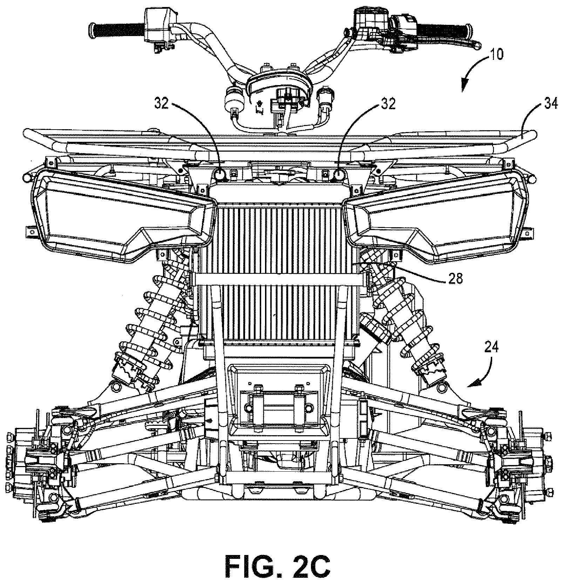

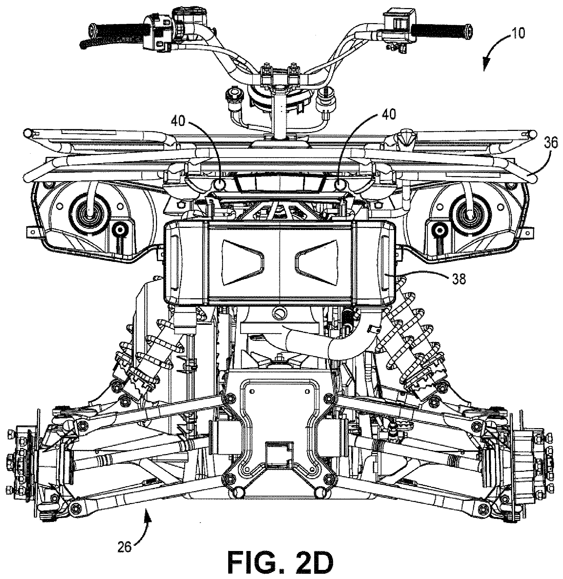

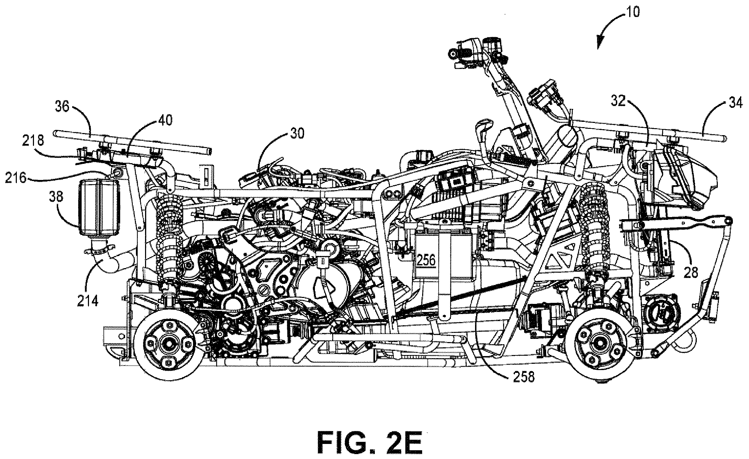

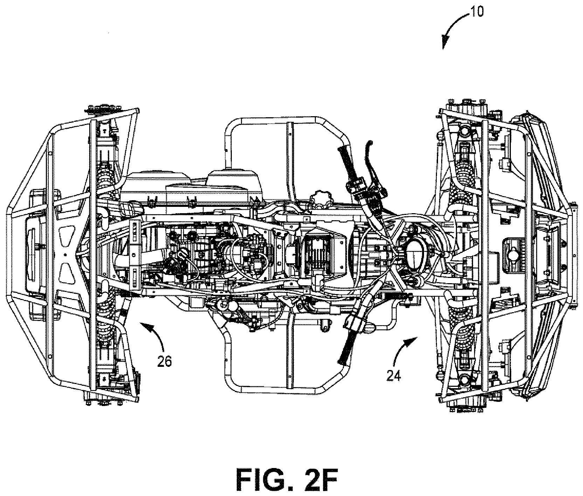

With regard to FIGS. 2A-F, in some embodiments, the off-road vehicle 10 further includes a front suspension 24 and rear suspension 26, each pivotally coupled to the frame 12. The off-road vehicle 10 has a radiator 28 to cool the coolant which, in turn, acts to cool the prime mover 30 (e.g., engine). As shown in FIG. 2E, in some embodiments, the radiator 28 is located below forward frame members 32. In some embodiments, the forward frame members 32 support front rack 34. Turning to FIG. 2B. a muffler 38 is located at the rear of off-road vehicle 10 below rearward frame members 40 (FIG. 2E). Rear rack 36 is located above rearward frame members 40.

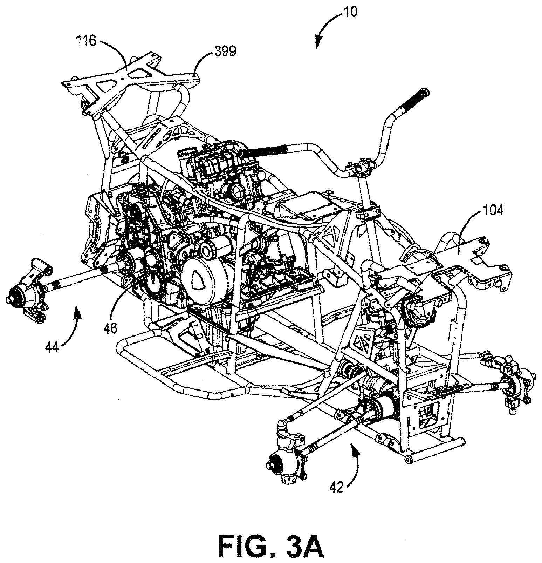

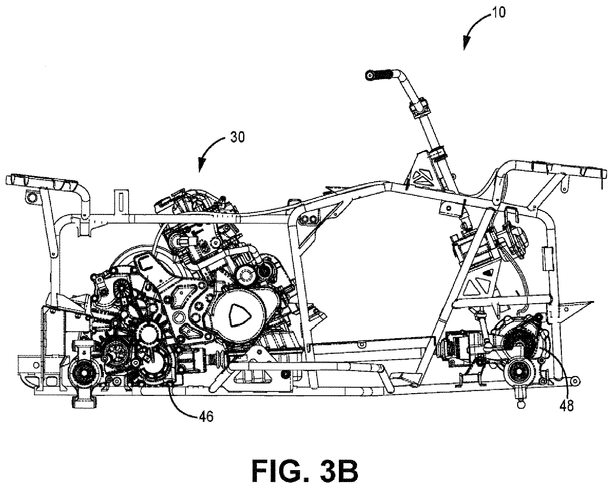

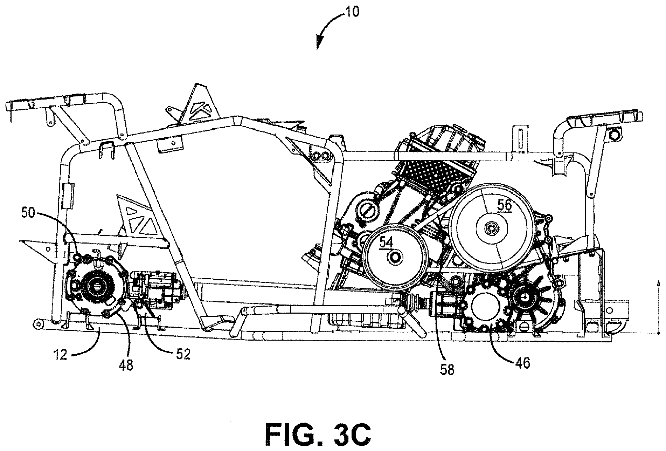

Turning to FIGS. 3A-C, the off-road vehicle 10 is shown to illustrate various driveline components. In some embodiments, the off-road vehicle 10 includes front CV (constant velocity) assemblies 42 and rear CV assemblies 44. In some embodiments, each of the rear CV assemblies 44 extends laterally from transaxle 46. Front CV assemblies 42 extend laterally from front gearcase 48. As shown in FIG. 3C, the front gearcase 48 is attached to the frame 12 via one or more attachment locations. For example, as shown, the front gearcase 48 is attached to the frame 12 at a front of front gearcase 48 at upper gearcase attachment location 50. Further, as shown, the front gearcase 48 is attached to the frame 12 at a rear of the gearcase 48 at a lower gearcase attachment location 52, which is rearward and below the upper gearcase attachment location 50. With regard to FIG. 3B, in some embodiments, the prime mover 30 is a single cylinder engine having a cylinder that extends vertically and rearwardly. The prime mover 30 (e.g. combustion engine) has a drive clutch 54 rotatably attached thereto. The drive clutch 54 can be rotatably coupled to driven clutch 56, for example via a belt 58 extending therebetween. The driven clutch 56 is, in turn, coupled to transaxle 46.

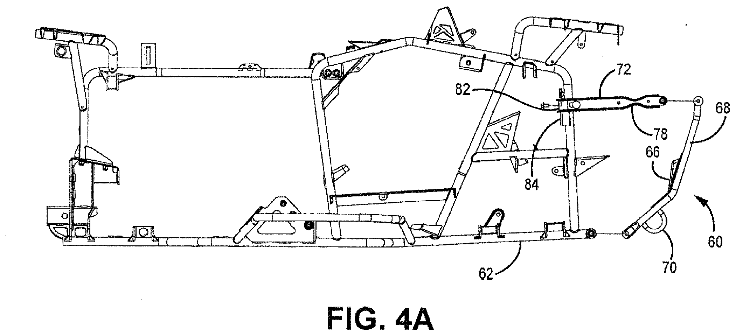

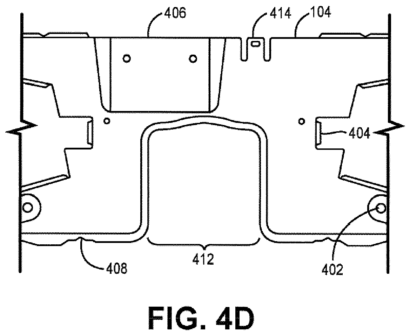

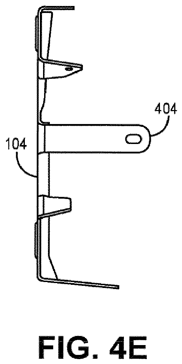

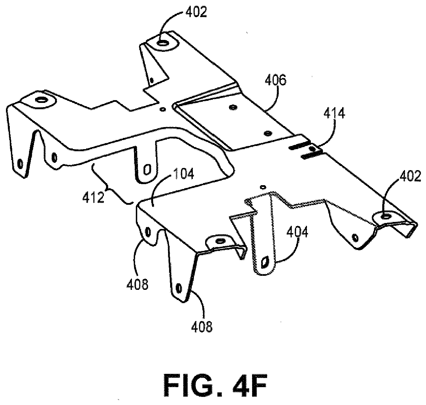

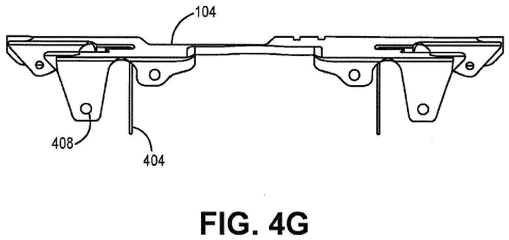

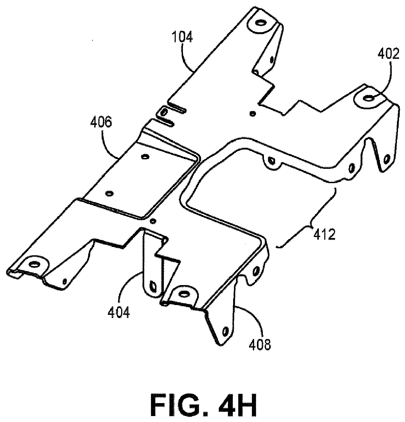

FIGS. 4A-H show various details of the frame 12 in accordance with certain embodiments. The frame 12 is well-suited for a combustion engine off-road vehicle as well as an electric propulsion motor off-road vehicle.

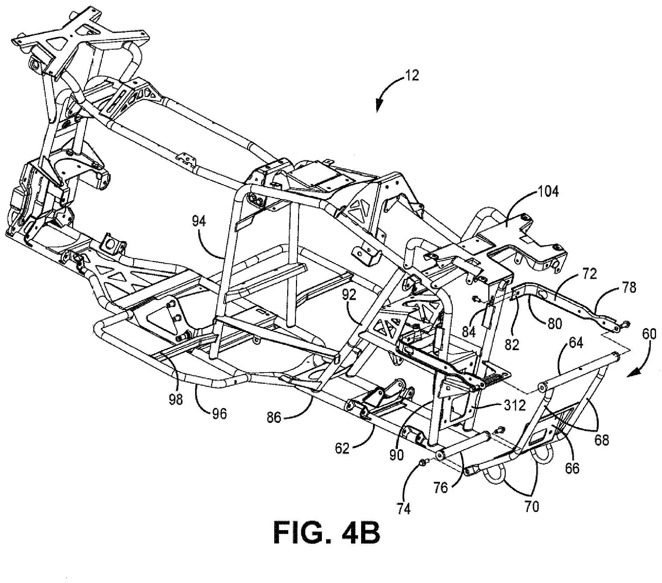

As shown in FIGS. 4A and 4B, in some embodiments, frame 12 includes a removable front frame portion 60. Removable front frame portion 60 is removably attached to a front portion of the main frame 62 via one or more fasteners. In some embodiments, the removable front frame portion 60 includes an upper cross member 64 (e.g., tube), a middle cross member 66, and removable upstanding members 68. As further shown, in some embodiments, the removable front frame portion 60 includes loop members 70 (e.g., tow hooks) which are, for example, attached (e.g., welded) to the removable upstanding members 68. The removable front frame portion 60 can be utilized as an internal bumper (inside out body panels) or as an external bumper (outside the body panels), and the portion 60 can be interchangeable and differently sized between multiple models. This is another example of a single assembly line having the capability to create multiple models using the same base frame 12.

As shown in FIGS. 4A-C, in some embodiments, the removable front frame portion 60 is coupled to the main frame 62 via removable frame portion connecting brackets 72 and via lower fasteners 74 that extend through holes in the removable upstanding members 68 and into portions of the main frame 62. In some embodiments, the lower fasteners 74 are coupled to lower front cross member 76. As illustrated in FIG. 4B, for example, the removable frame portion connecting brackets 72 have a waist portion 78, which is narrower than adjacent portions, a bent portion 80, and a main frame attachment portion

82. The main frame attachment portion 82 is removably attached to the main frame 62, for example via brackets 84.

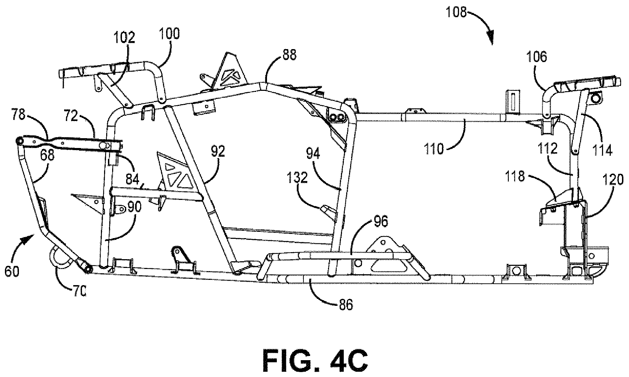

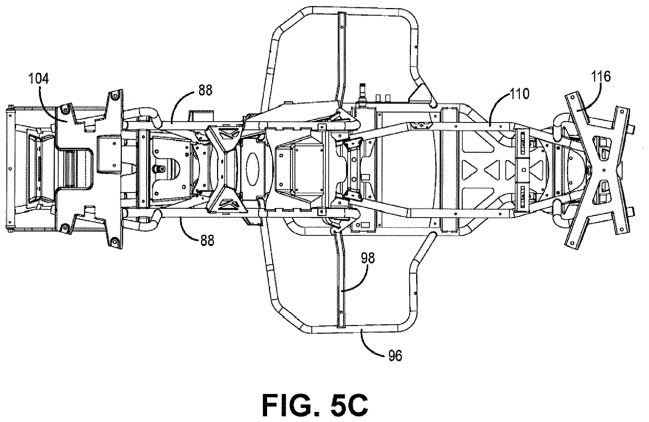

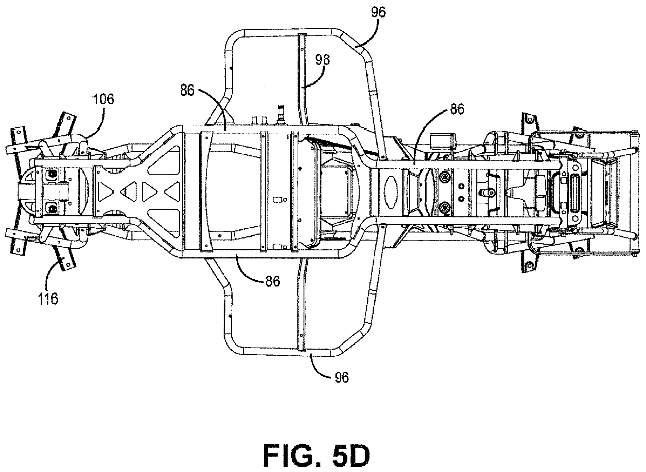

In some embodiments, the frame 12 has lower longitudinal members 86 (FIG. 5D) extending along the length of the main frame 62. Further, in some embodiments, the frame 12 has upper longitudinal members 88 (FIGS. 4B, 5C). As shown in FIG. 4C, respective upper longitudinal members 88 are attached to respective lower longitudinal members 86 via one or more vertical members, such as first vertical member 90, second vertical member 92, and third vertical member 94. In some embodiments, a respective upper longitudinal member 88 is formed integrally with a first vertical member 90 and a third vertical member 94, for example by bending a tube. In some embodiments, second vertical member 92 is welded to an upper longitudinal member 88 at an upper portion of the second vertical member 92 and is further welded to lower longitudinal members 86 at a lower portion of the second vertical member 92. Such an arrangement is illustrative and other configurations for attachment and arrangement are permissible.

In some embodiments, foot perimeter members 96 extend outwardly from lower longitudinal members 86. Further, in some embodiments, a foot support member 98 is attached to the respective foot perimeter member 96 and a third vertical member 94.

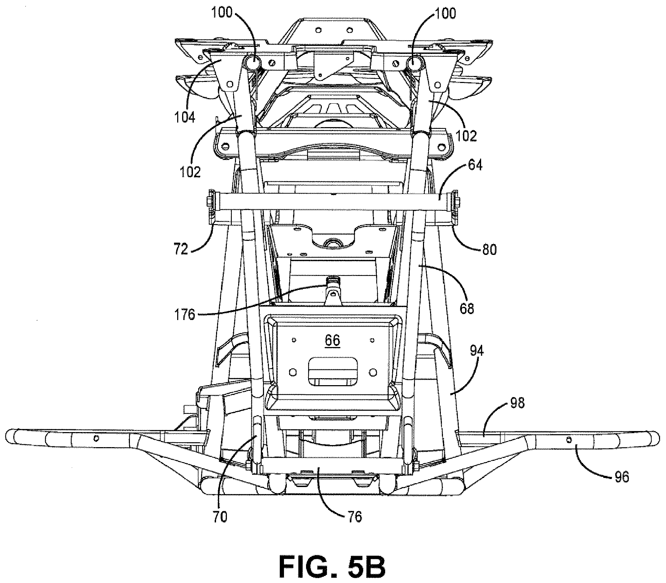

As shown in FIGS. 4B, 4C and 5B, in some embodiments, first front rack support tubes 100 are attached to upper longitudinal member 88. Further, second front rack support tubes 102 are, in some embodiments, attached to upper longitudinal member 88 and also to first front rack support tubes 100. In some embodiments, a front rack support bracket 104 is attached to first front rack support tubes 100. In some embodiments, the front rack 34 is coupled to the front rack support bracket 104, for example via one or more fasteners.

Front rack support bracket 104 provides structural support as part of the frame 12 to connect and secure front rack 34, but also provides attachment components and support for a radiator 28 as part of the cooling system, voltage regulator, and headlights 276. The front rack support bracket 104 connects to front rack 36 at connection components 402 (i.e., holes). The connection components 402 are spaced substantially similar to rear connection components 399 of rear support bracket 116 (see FIG. 3A), such that the same sized rack can be placed both in the front and the rear, reducing the overall part count and simplifying replacement of one of the racks. Connection components 402 can support any fastener, weldment, male/female securement system, such that the front rack 36 is secure and held fast to the front rack support bracket 104. The front rack support 104 can be manufactured of steel, or any material with enough strength and rigidity to support the various components connected to and supported by bracket 104.

Cutout section 412 allows for a user or service technician to easily access the radiator 28, without removal of the radiator 28, front rack support bracket 104, or front rack 36. Headlights 276 can be supported and attached at connection tabs 408. Connection brackets 404 hold and secure to radiator 28. Additionally, the front rack bracket 104 supports various electrical components, such as a voltage regulator at recess 406 and optional flasher relay at 414, for example. Recess or depression 406 is purposely tipped or angled back from the horizontal plane of the front rack support bracket, such that the depression is generally level with the ground or angled slightly towards the rear of the vehicle. This allows for water drainage and prevents pooling which can corrode electrical connections.

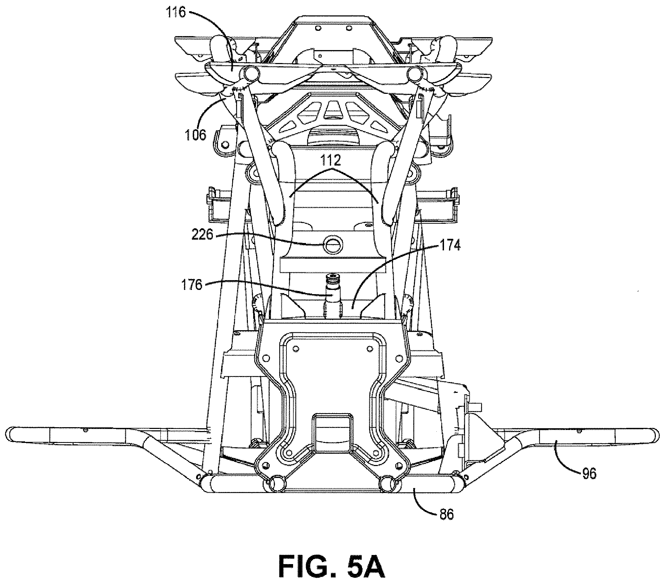

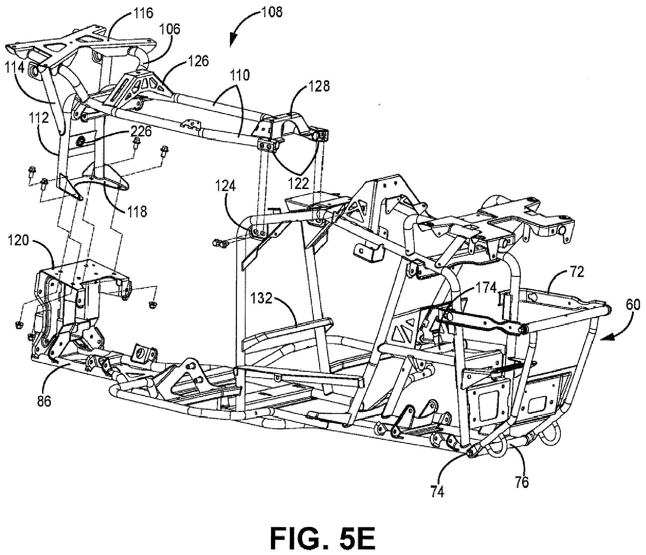

As shown in FIGS. 4C, 5A, and 5E, in some embodiments, the off-road vehicle 10 includes a removable rear frame assembly 108. In some embodiments, the removable rear frame assembly 108 is removably attached to the main frame 62, for example via a plurality of fasteners, as illustrated in FIG. 5E. As further shown in FIG. 5E, the removable rear frame assembly 108 includes longitudinal rear upper frame members 110 and fourth vertical members 112. In some embodiments, a respective longitudinal rear upper frame member 110 is formed integrally with a respective fourth vertical member 112. First rear rack support tubes 106 are attached to respective longitudinal rear upper frame members 110 and second rear rack support tubes 114. A rear rack support bracket 116 (see FIG. 3A) is, in turn, supported by the first rear rack support tubes 106 and the second rear rack support tubes 114. Rear rack support bracket 116 supports the rear rack 36 at connection components 399 (i.e., holes for fasteners).

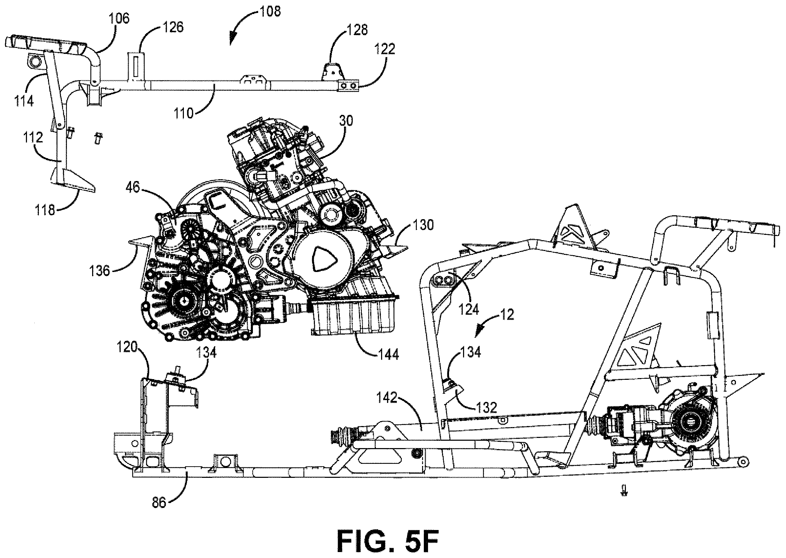

With additional reference to FIGS. 5E and 5F, in some embodiments, the removable rear frame assembly 108 includes a first coupling bracket 118 at lower end portions of the fourth vertical members 112. The first coupling bracket 118 is removably attached to second coupling bracket 120 which, in some embodiments, if fixedly attached to lower longitudinal members 86 and is formed from a bent and/or stamped piece of sheet metal. The first coupling bracket 118 can also support attachment positions for rearward accessories, such as a rear bumper. As further shown in FIG. 5F, removal of the rear frame assembly 108 permits removal of the prime mover 30 and/or transaxle 46. In some embodiments, the prime mover 30 and transaxle 46 can be installed or removed as an assembly.

In some embodiments, the removable rear frame assembly 108 further includes forward coupling members 122. As illustrated in FIG. 5E, the forward coupling members 122 are removably attached to main frame coupling brackets 124. In some embodiments, the forward coupling members 122 are threaded, thereby permitting fasteners to pass through apertures in the main frame coupling brackets 124 and be threaded into respective forward coupling members 122. In some embodiments, the removable rear frame assembly 108 includes one or more seat support brackets, such as rear seat support bracket 126 and front seat support bracket 128.

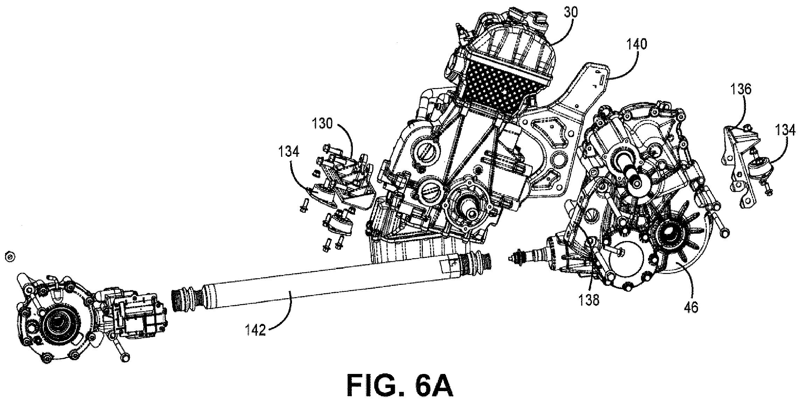

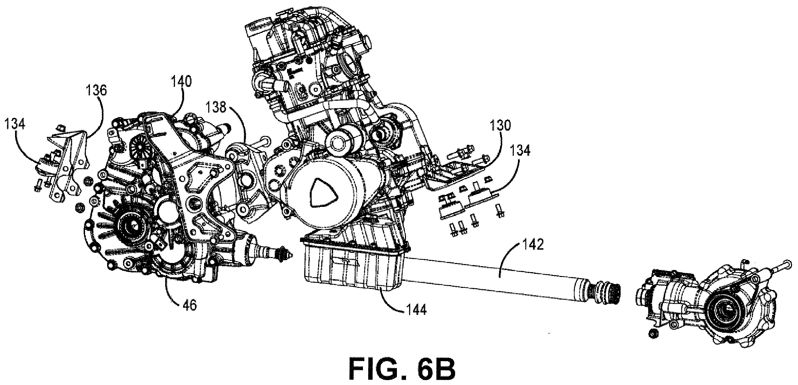

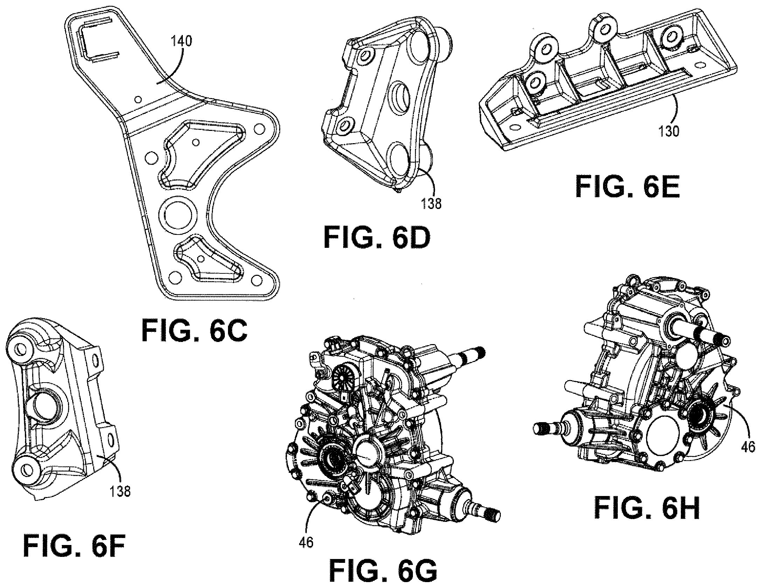

Referring to FIGS. 5F, 6A-H, in some embodiments, the prime mover 30 is removably coupled to the frame 12 via front mount 130. In some embodiments, the front mount 130 is removably coupled to the prime mover 30. Further, in some embodiments, the front mount 130 removably coupled to the motor mount bracket 132 via one or more vibration isolators 134. In one embodiment, the prime mover 30 is mounted a two forward points and single rearward mounting position, to allow for the A-arms 208, 210 of the suspension to be positioned closer to together. The prime mover 30 can be positioned along the length of the off-road vehicle and between the width of the upper A-arm mounting positions and lower A-arm mounting positions. The isolators 134 can be rubber pucks, for example, and can be different stiffnesses between front and rear engine mounts. For example, the rearward vibration isolator 134 is harder than the front mount isolators 134. The isolators 134 can be mounted at an angle to the ground or to a horizontal plane of the frame or vehicle, in one embodiment. Transaxle 46 is removably coupled to transaxle support bracket 136 which, in some embodiments, is removably coupled to second coupling bracket 120 via one or more vibration isolators 134. The second coupling bracket 120 also provides mounting points for the upper A-arm 208, a rear section of the frame, and rear bumper accessories. The transaxle 46 is removably coupled to the prime mover 30 via one or more bridging members, such as left side bridging member 138 and right side bridging member 140. As further shown in FIG. 6A, in some embodiments, a driveshaft 142 which extends forwardly from transaxle 46 to front gearcase 48. In some embodiments, the driveshaft 142 extends under a portion of the prime mover 30 and a portion of the oil pan 144 is laterally offset therefrom. In some embodiments, the oil pan 144 has a bottom that extends below the driveshaft 142.

By having the engine 30 and transaxle 46 rigidly mounted together, the center- to-center distance of the CVT clutches can be better maintained. Further, the clutch cover 234 or compartment can be better sealed due to the less movement imparted by the engine/transaxle assembly. Overall vibration of the system is lower due to the lower longitudinal member 86 being positioned adjacent the transaxle 46 and allow for a direct mounting to the frame 12. The engine 30/transaxle 46 can be utilized in this configuration in both ATVs and side-by-side off-road vehicle configurations.

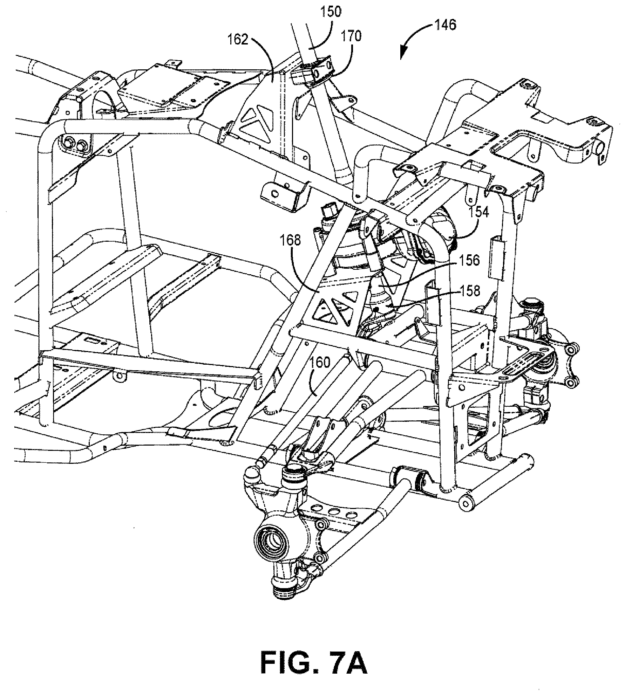

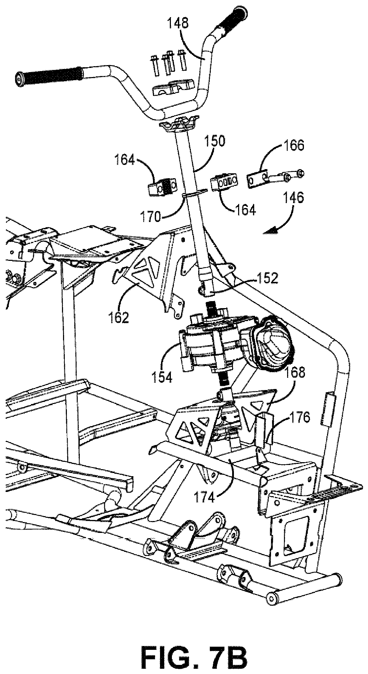

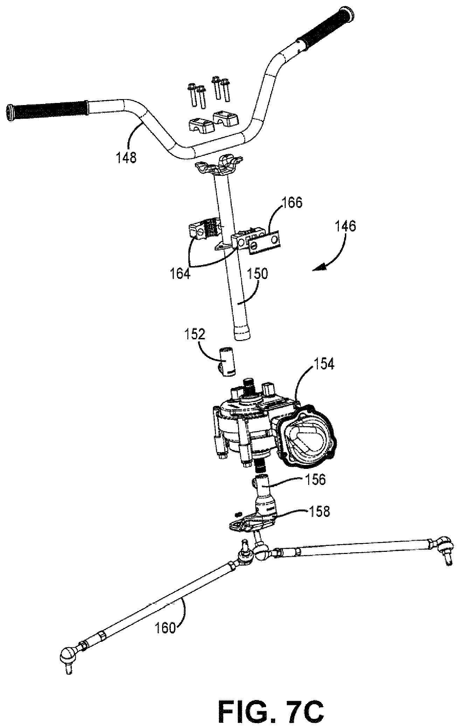

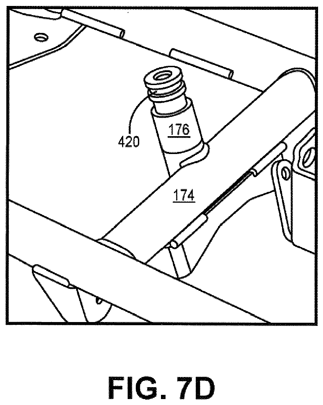

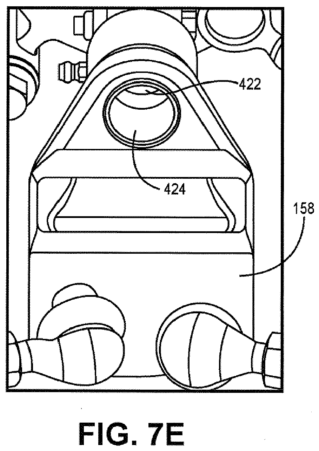

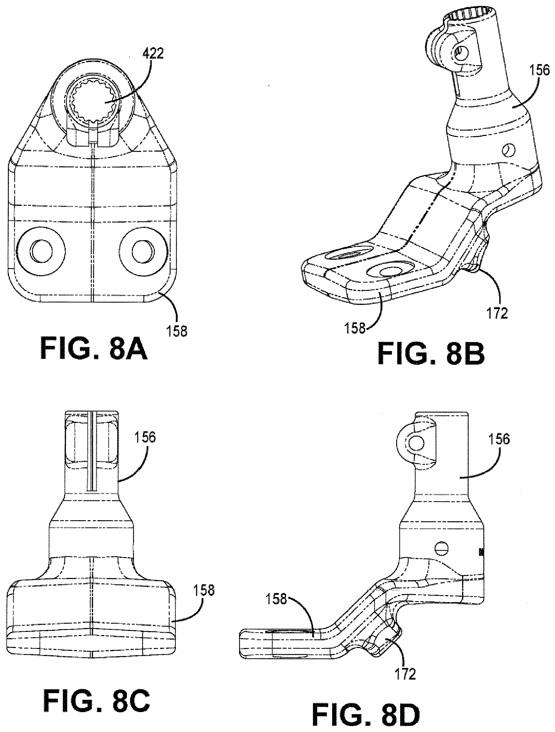

Turning to FIGS. 7A-H, a steering assembly 146 is shown. Steering assembly includes, in some embodiments, handlebars 148, steering post 150, upper steering post collar 152, EPS unit 154 (electronic power steering), lower steering post collar 156, bellcrank 158, and tie-rods 160. Steering post 150 is rotatably coupled to upper steering fixture member 162 via steering post couplers 164 and strip member 166. Fasteners extend through apertures in the post couplers 164 and strip member 166 to affix the steering post 150 to the upper steering fixture member 162. EPS unit 154 is fixedly attached to EPS support fixture 168, for example via one or more fasteners. In some embodiments, the steering post 150 has steering stop member 170 affixed thereto. The steering stop member 170 limits rotation of the handlebars 148 when a portion of the steering stop member 170 bumps up against the upper steering fixture member 162. As shown in FIGS. 8A-D, in some embodiments, the lower steering post collar 156 and bellcrank 158 are formed integrally, for example as a single cast component.

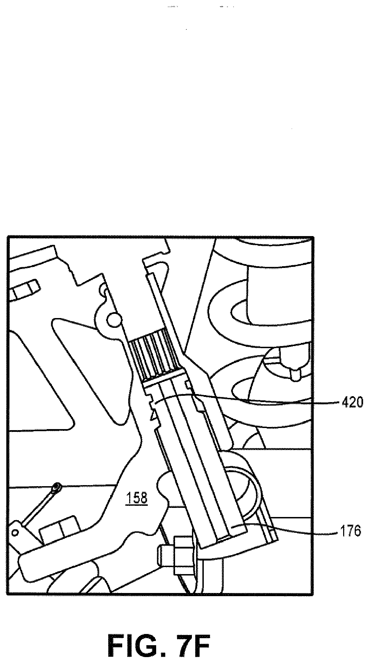

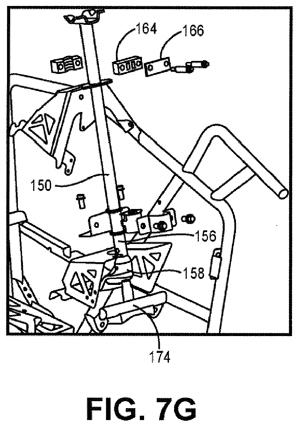

Upper steering post collar 152 includes a through-channel 422 in the forged component that mates with a flared steering post 150 at an upper portion of the collar 152 (see cross-sectional view in FIG. 7F). The lower steering post collar 156 can optionally connect with an EPS unit 154 or in a non-EPS model (see FIG. 7G), can connect directly with post 150. The lower steering post collar 156 can optionally include a polymeric bushing 424 at an upper portion, to reduce friction and stress. At a lower portion, the collar 156 includes a splined collar for connection with steering hub 176, eliminating the need for additional bearings. The steering hub 176 includes grooves 420 for retaining one or more O-rings, for sealing in fluid (i.e., lubricant). The hub 176 can be welded to the frame 12. or integrally formed with the frame 12 or frame components, such as steering cross tube 174.

In some embodiments, the bellcrank 158 (see FIGS. 8A-D) includes a protruding portion 172 which can act as a steering stop to prevent over-rotation. In some embodiments, the protruding portion 172 bumps into steering cross tube 174 (FIGS. 5A and 5E). In some embodiments, a portion of the lower steering post collar 156 and/or bellcrank 158 fits over steering hub 176. In some embodiments, the steering hub 176 extends upwardly and rearwardly from the steering cross tube and, in some embodiments, it extends along the axis of the steering post 150 to provide rigidity and support for the steering assembly.

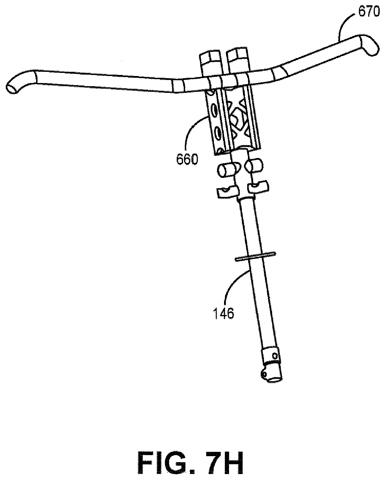

FIG. 7H shows an alternative steering assembly 146 including riser 660 that allows for varying heights of riders and user comfort. The riser 660 allows for two degrees of rotational freedom. Additionally, the handlebars include curved ends 670 for additional user gripping and control during use in an off-road environment.

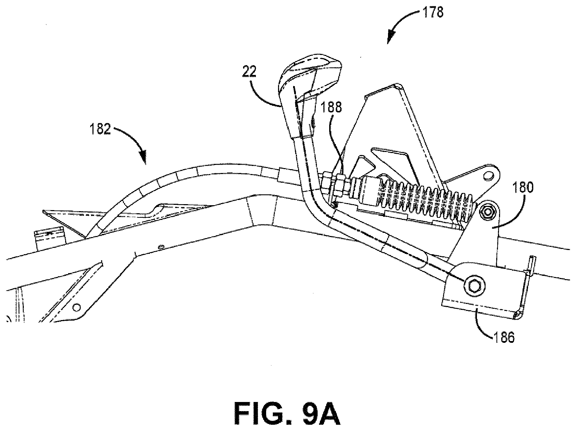

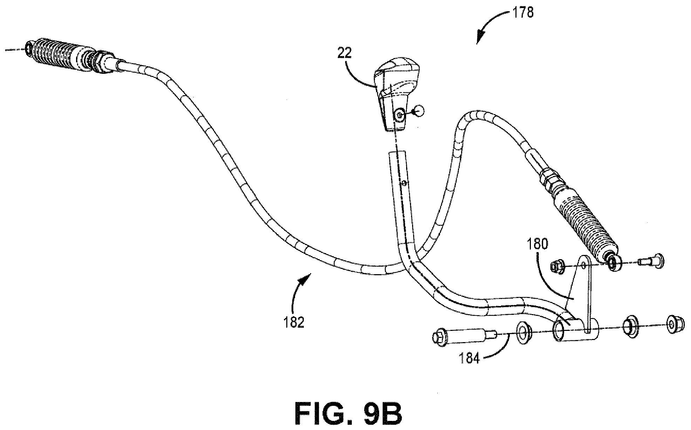

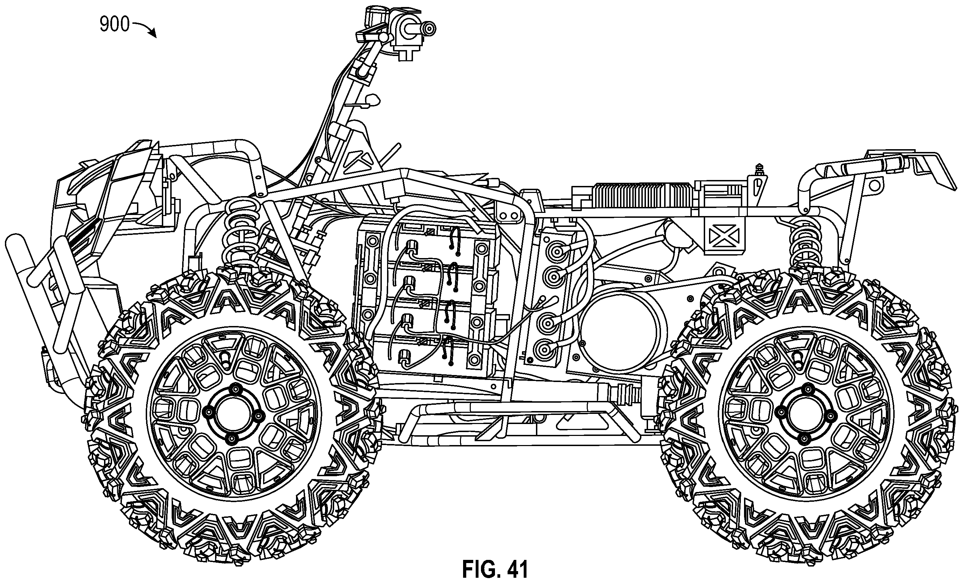

Turning to FIGS. 9A-B, a shifter assembly 178 includes a shifter 22, shifter bellcrank 180, and shifter cable assembly 182. In some embodiments, the shifter 22 includes a shifter handle and shifter bar, as shown in exploded view in FIG. 41. Shifter 22 is attached to shifter bellcrank 180 for example by welding. In some embodiments. the shifter 22 rotates, along with shifter bellcrank 180, about shifter axis 184. Shifter 22 and shifter bellcrank 180 are rotatably coupled to shifter bracket member 186. Further, shifter cable assembly 182 is held in place via cable assembly bracket 188. A first end of the shifter cable assembly 182 is coupled to shifter bellcrank 180, while a second end of the shifter cable assembly is coupled to a gear shift arm on the transaxle 46.

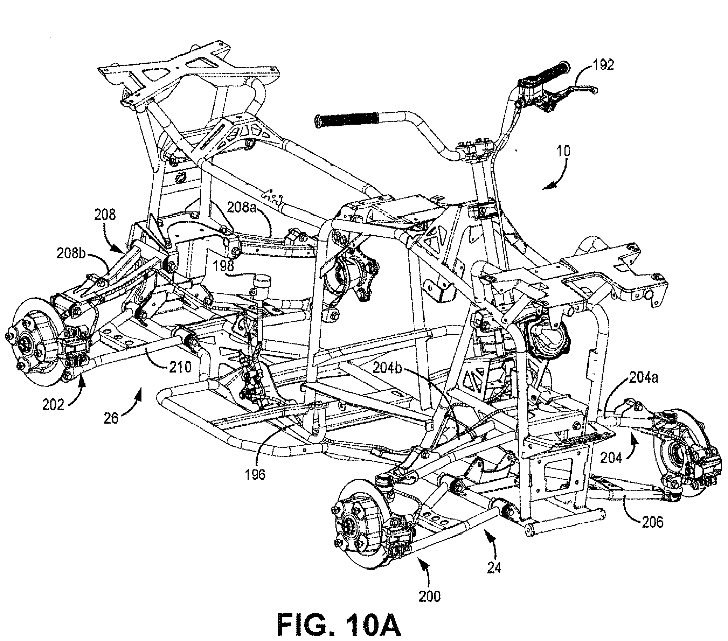

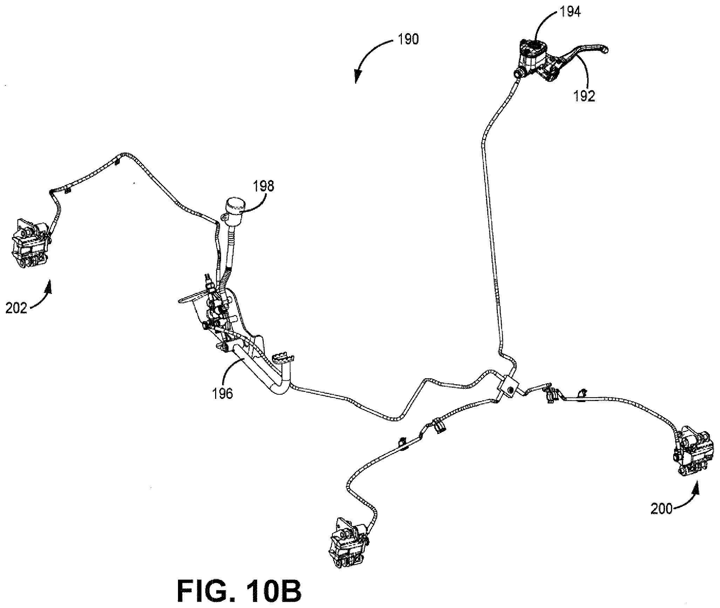

With regard to FIGS. 10A-B, a brake assembly 190 is shown. In some embodiments, the brake assembly 190 includes a hand brake lever 192 and hand brake master cylinder 194, a foot brake lever 196 and foot brake master cylinder 198, front caliper assemblies 200, and rear caliper assembly 202.

As further shown in FIG. 10A, the front suspension 24 includes front upper A-arms 204 and front lower A-arms 206. In some embodiments, the front upper A-arms 204 are universal such that the front upper left A-arm 204a is the same as the front upper right A-arm 204b. In some embodiments, the rear suspension 26 includes rear upper A-arms 208 and rear lower A-arms 210. In some embodiments, the rear upper A-arms 208 are universal such that the rear upper left A-arm 208a is the same as the rear upper right A-arm 208b.

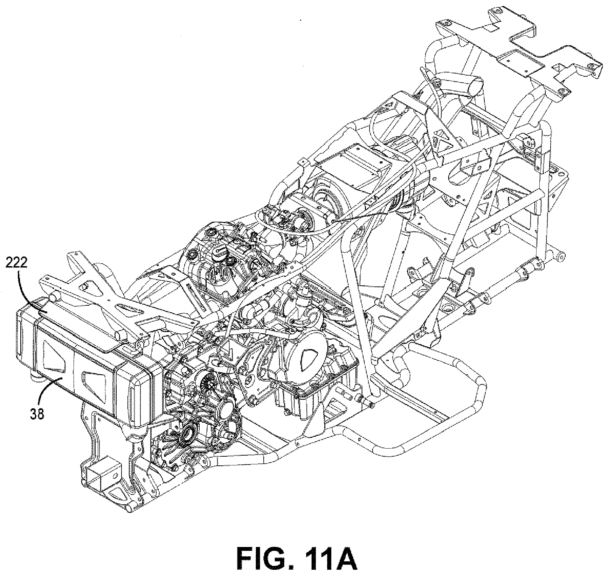

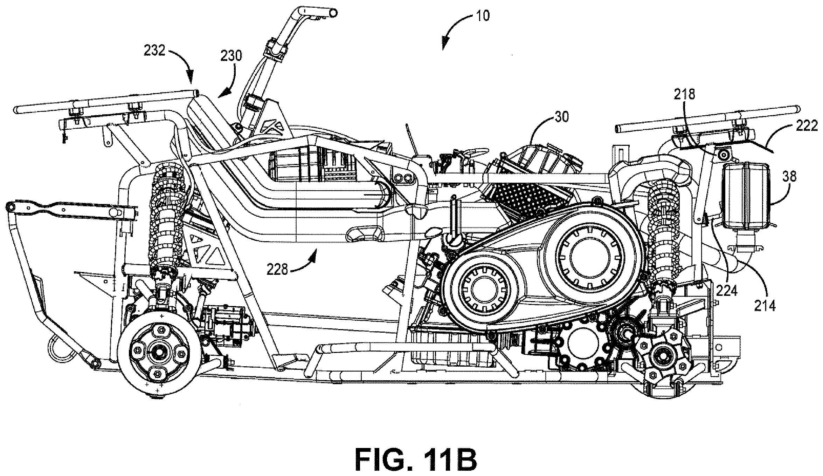

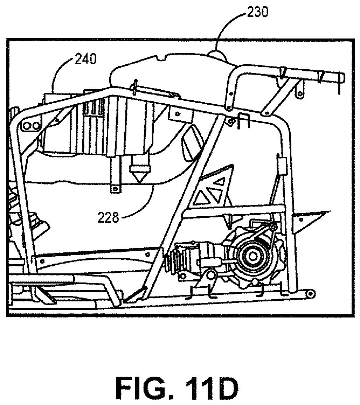

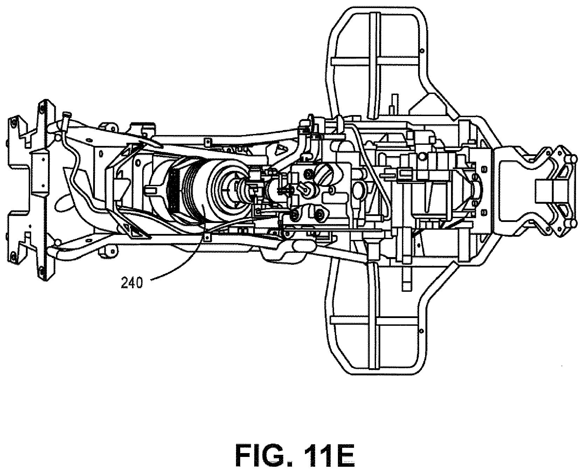

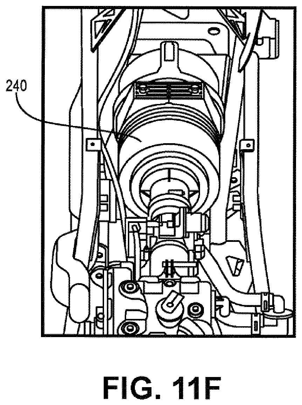

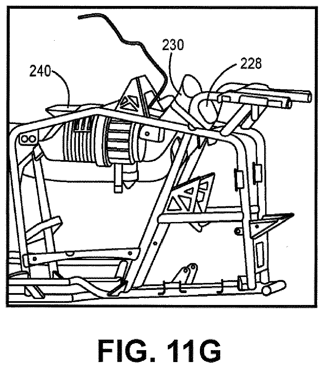

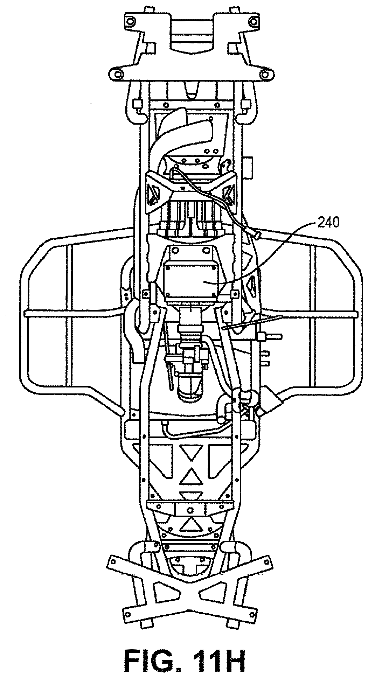

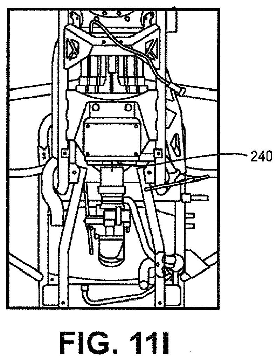

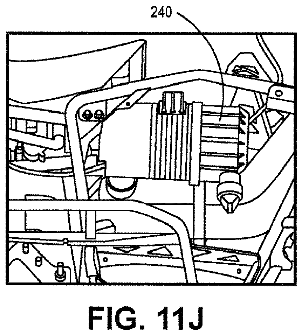

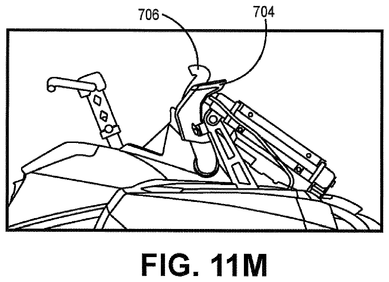

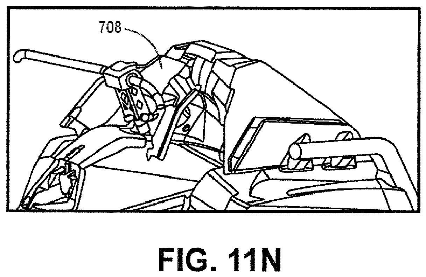

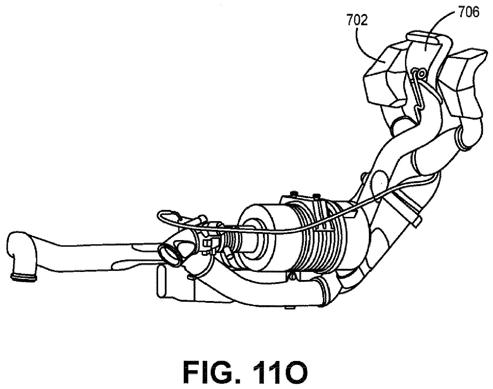

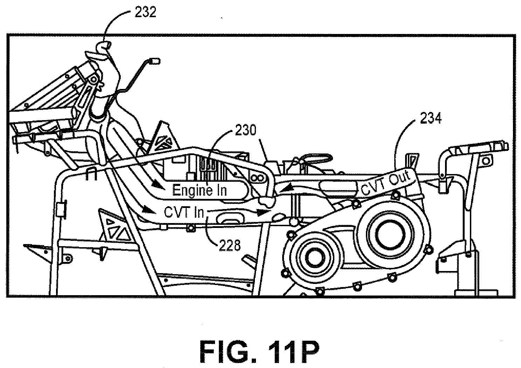

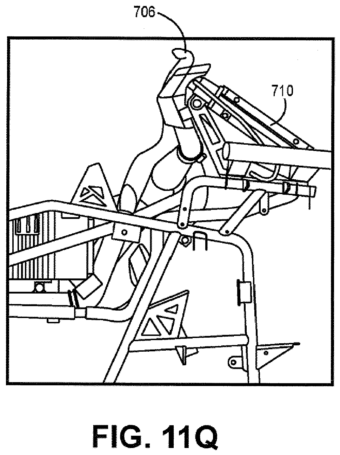

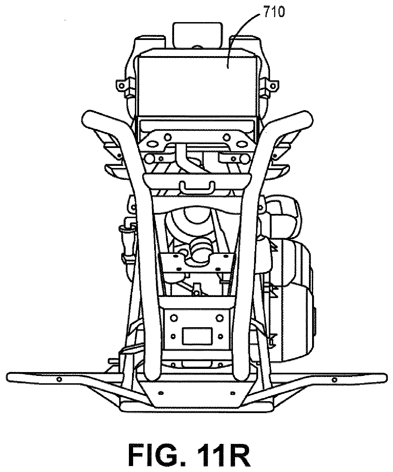

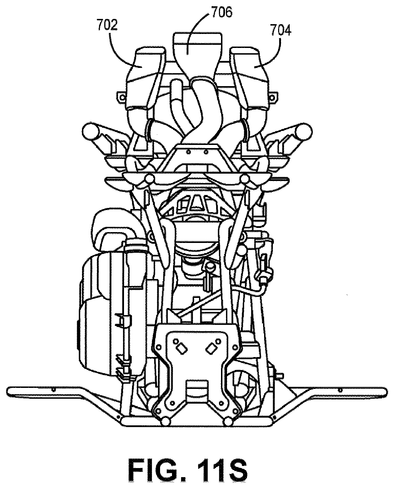

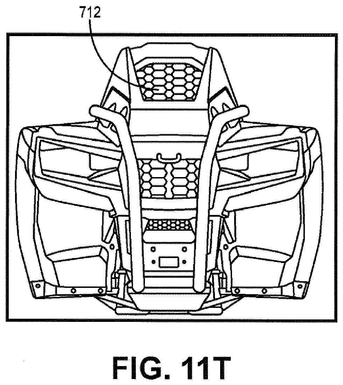

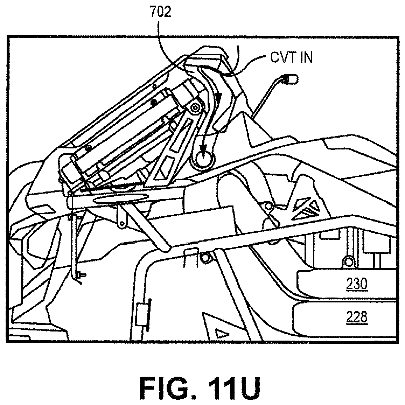

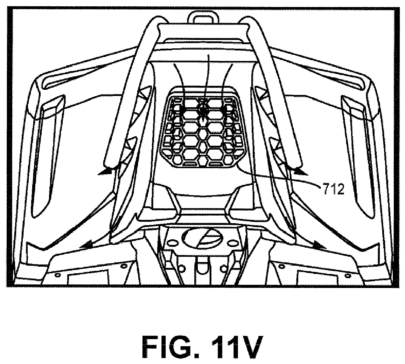

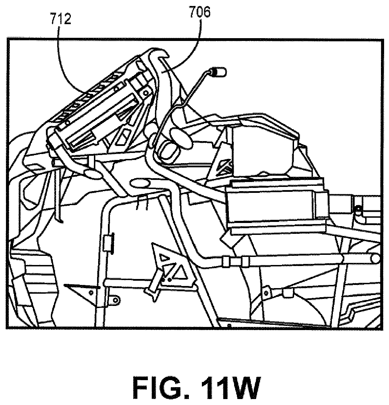

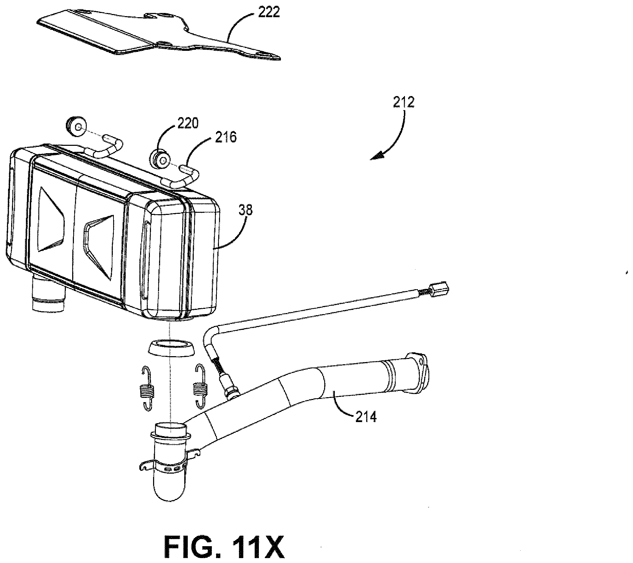

Turning to FIGS. 11A-X, in some embodiments, an exhaust system 212 includes an exhaust tube 214 and a muffler 38. As shown in FIG. 2E, the exhaust tube 214 extends between the prime mover 30 and the muffler 38. In some embodiments, the exhaust system 212 includes muffler hangars 216 which hang muffler 38 from muffler hangar brackets 218 (FIGS. 2E and 11B) via isolator members 220. Further, in some embodiments, the exhaust system 212 includes muffler standoff member 224 (FIG. 11B, 11X), which couples the muffler 38 to the frame 12 via an additional isolator member 220 via muffler support aperture 226 (FIG. 5A). In addition, in some embodiments, a shield member 222 is utilized. As will be appreciated, in some embodiments, the exhaust tube 214 extends rearwardly out of the prime mover 30 and does not need to wrap around the prime mover 30. Such an arrangement advantageously allows for more compact packaging.

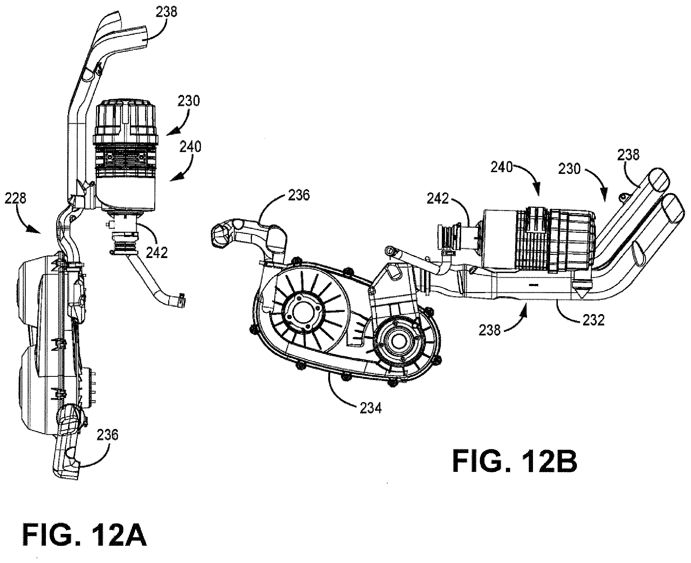

Now referencing FIGS. 11B-W, 12A, and 12B, in some embodiments. the off-road vehicle 10 includes an CVT air system 228 and a prime mover intake system 230. In some embodiments, the CVT air system 228 includes an intake duct 232, CVT housing 234, and CVT exhaust duct 236. In some embodiments, the prime mover intake system 230 is configured to intake combustion air for the prime mover 30. In some embodiments, the prime mover intake system 230 includes a prime mover intake duct 238 and air filter assembly 240, and a prime mover supply duct 242. Air moves from the atmosphere through the prime mover intake duct 238 before entering the air filter assembly 240. From there, the air is filtered with a filter element (not shown) and is then routed through the prime mover supply duct 242 to the throttle body and into the prime mover 30. In one embodiment, the air system 228 utilizes a cyclonic or cylindrical air filter assembly 240.

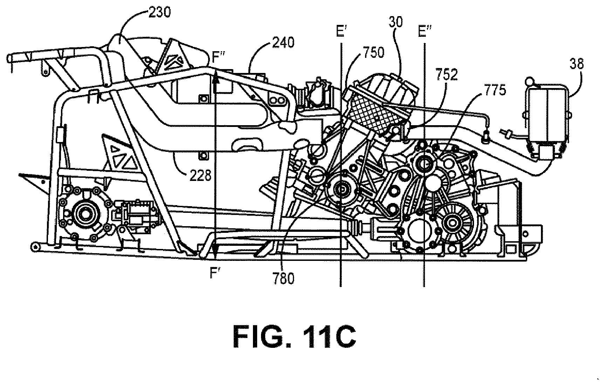

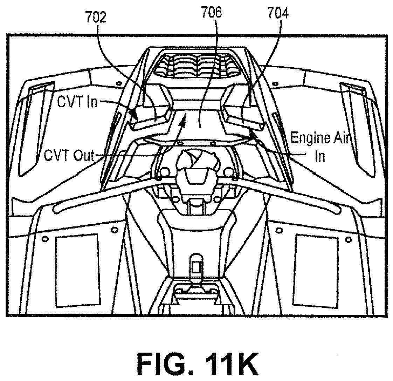

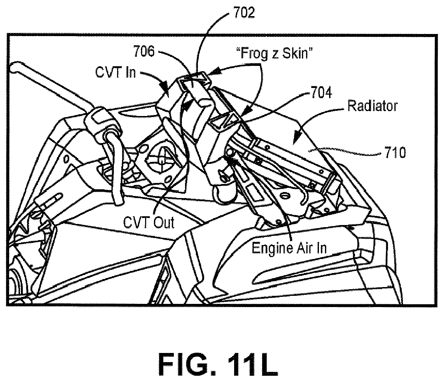

In some embodiments, the air system 228 and prime mover intake system 230 are positioned higher in the frame than traditional ATV designs, which protects against water or mud interference in the systems. For example, the systems 228 and 230 can be positioned the plane of the transaxle input 775 (see FIG. 11C). In another example, the systems 228 and 230 can be positioned more than 50% the distance between the lower frame components and tallest frame components (see line F'-F" in FIG. 11C). The systems 228, 230 can be positioned about 50% the distance, about 60% the distance, or anywhere between 40% and 80% the distance between lower frame components and tallest frame components. Additionally, the radiator 28 is positioned at a high point in the vehicle and CVT air intake 702, engine air intake 704, and CVT air outputs 706 are located similarly near or at a high point in the vehicle to help prevent water and mud from interfering with the air handling systems (see FIG. 11K for one embodiment and FIG. 11L for an alternative embodiment). A radiator cover or skin 710 can be utilized to further prevent water and mud infiltration, without significantly affecting air flow. A removable cover 708 can be used to protect and access the cooling system, for example.

Also shown in FIG. 11C is a shortened air path between the filter assembly 240 and cylinder head input ports 750. Reducing this distance improves engine performance. The filter assembly 240 can be positioned between the steering column and forward half of the rear frame assembly 108, in order to achieve this shortened distance. Alternatively, the filter assembly 240 is positioned above the fuel tank 246. In one embodiment, one or more of the cylinder head input ports 750 and exhaust ports 752 can be positioned between the engine output 780 and transaxle input 775 (see lines E' and E" in FIG. 11C). In another embodiment, all of the cylinder head input ports 750 and exhaust ports 752 can be positioned between the engine output 780 and transaxle input 775.

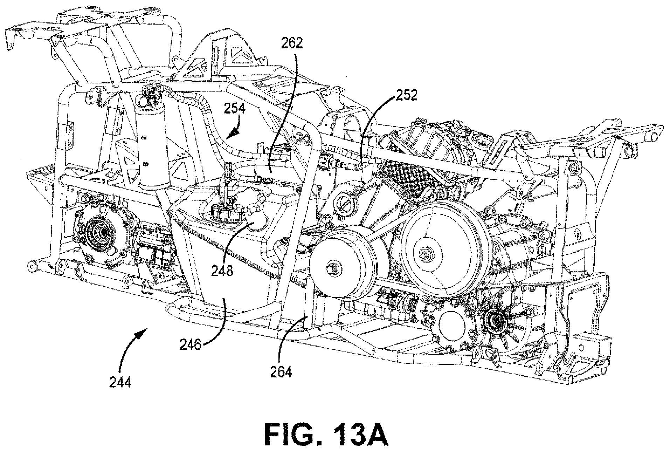

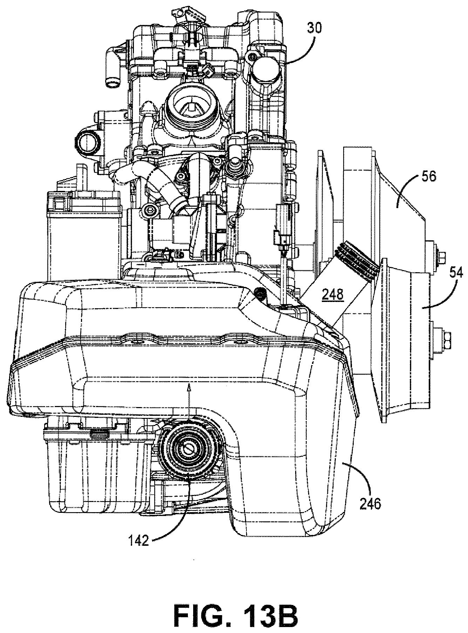

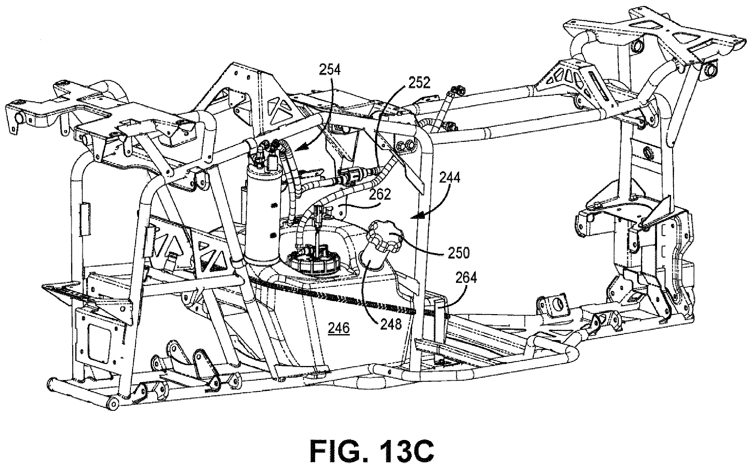

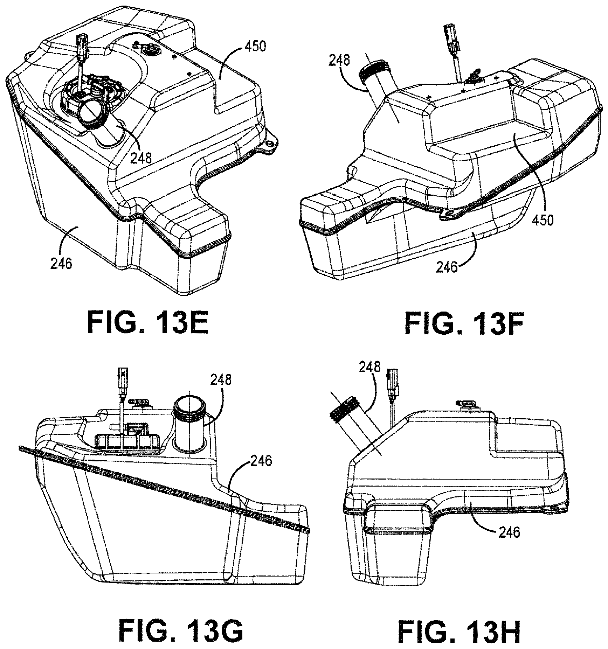

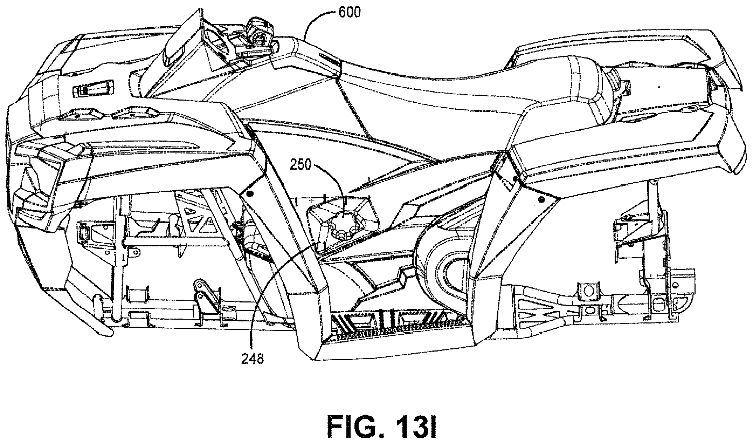

With regard to FIGS. 13A-I, a fuel system 244 includes a fuel tank 246, fuel filler neck 248, fuel cap 250, fuel lines 252, and evaporative emissions system 254. In some embodiments, the fuel tank 246 is located forwardly of the prime mover 30 and a top of the fuel tank 246 is located below a top of the prime mover 30. In some embodiments, the top of the fuel tank 246 is located below the top of the driven clutch 56 and, in some embodiments, below the top of the drive clutch 54. With further regard to FIG. 13B, in some embodiments. a portion of the fuel tank 246 extends below the driveshaft 142, while a portion of the fuel tank 246 extends above the drive shaft 141 and portions of the fuel tank 246 extend both to the left and right hand sides of the drive shaft 142. Because the fuel tank 246 is positioned substantially forward of the exhaust system 212, prime mover 30, and rear frame assembly 108, the need for a heat shield is eliminated, reducing parts and ultimately saving time and money in the assembly

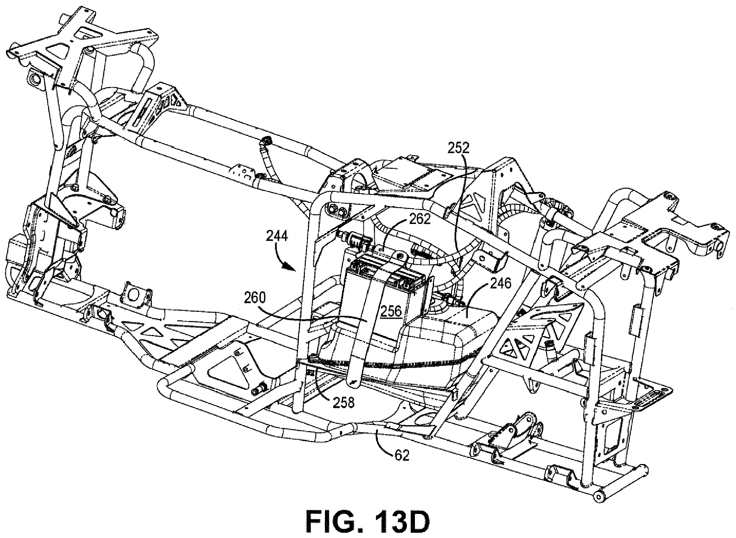

As shown in FIG. 13D, in some embodiments, a battery 256 rests on a portion of the fuel tank 246. The combined battery 256 and fuel tank 246 configuration saves space and positions the battery 256 at a higher position than traditional ATVs, which protects the battery 256 in more circumstances that involve driving through mud or water.

Further, in some embodiments, a portion of the fuel tank 246 is at least partially supported by fuel tank support member 258. Further, in some embodiments, band 260 extends from fuel tank support member 258 over the top of battery 256 to secure battery 256 and fuel tank 246 to main frame 62. In some embodiments, band 260 is coupled to battery bracket 262. Battery bracket 262 is, in some embodiments, coupled to a portion of the fuel tank 246, for example with one or more fasteners. At the rear of the fuel tank 246, in some embodiments, a fuel tank retainer 264 further secures the fuel tank 246 to the frame 12. Referring to FIG. 131, in some embodiments, the fuel filler neck 248 protrudes through an opening in a body panel such that a fuel cap 250 is accessible to put fuel in the fuel tank 246. As shown in FIGS. 13E-F, the battery supporting recess 450 is shaped to receive and secure one or more batteries 246. The recess 450 can accommodate multiple sizes (varying height and width) of batteries 246 and also allows for direct access by the user or technician to the battery from the side of the vehicle.

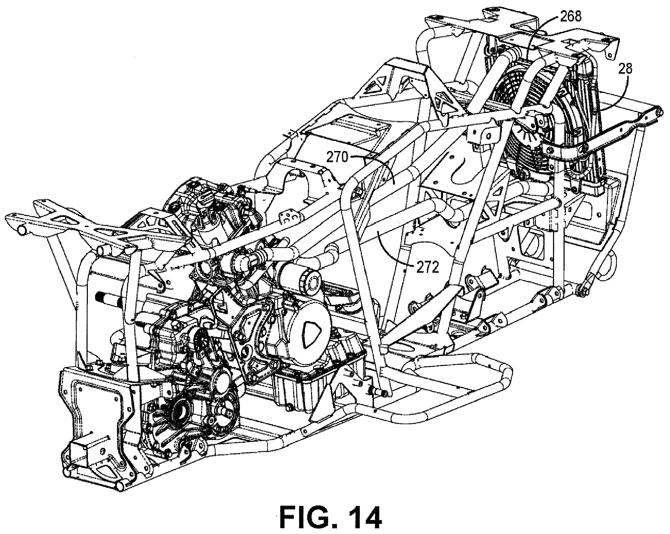

FIG. 14 shows an embodiment of an off-road vehicle cooling system 266. In some embodiments, the cooling system 266 includes a radiator 28, cooling fan 268, return line 270 (flow from the prime mover 30 to the radiator 28), and cooling line 272 (flow from the radiator 28 to the prime mover 30). In some embodiments, one or both of the return line 270 and cooling line 272 extend over the fuel tank 246.

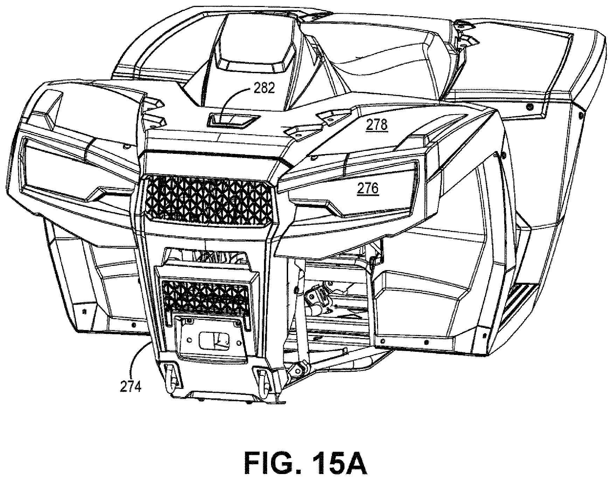

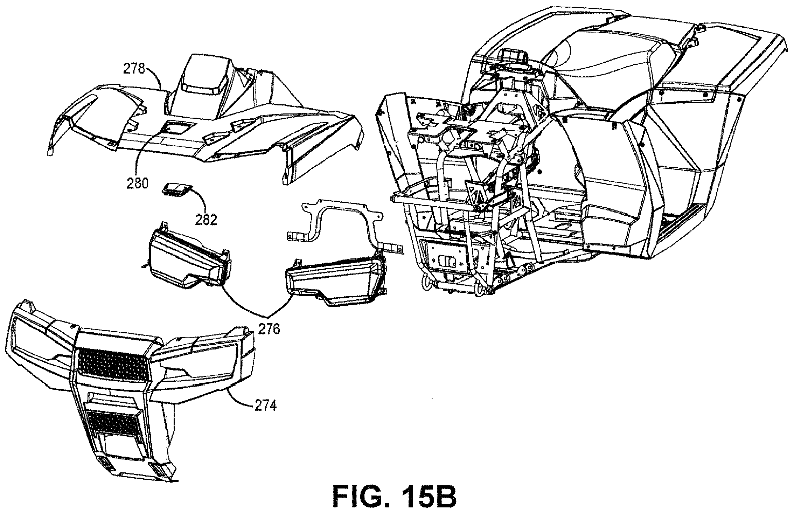

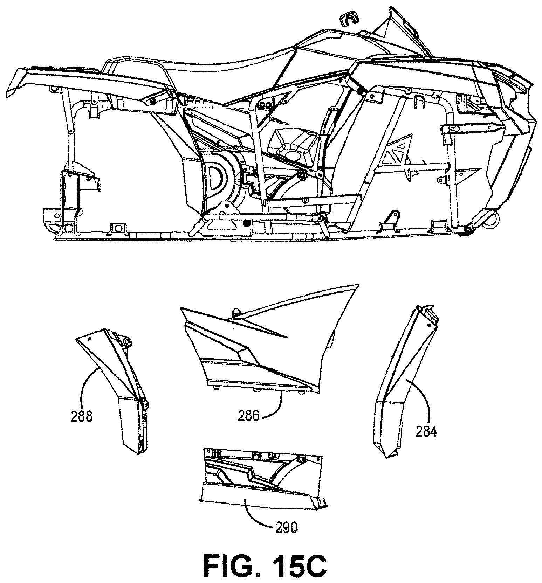

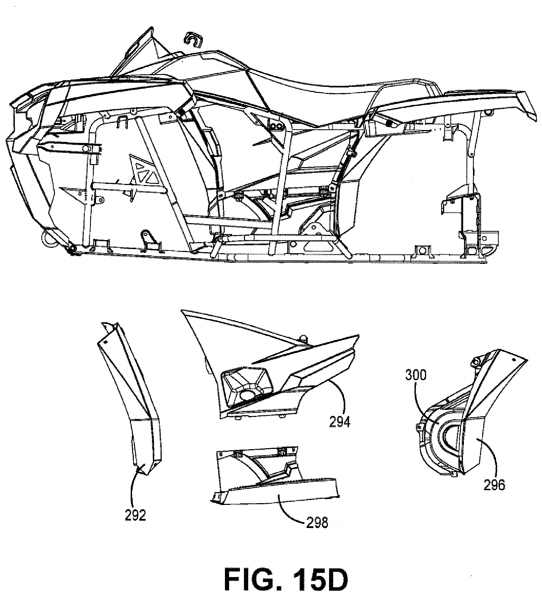

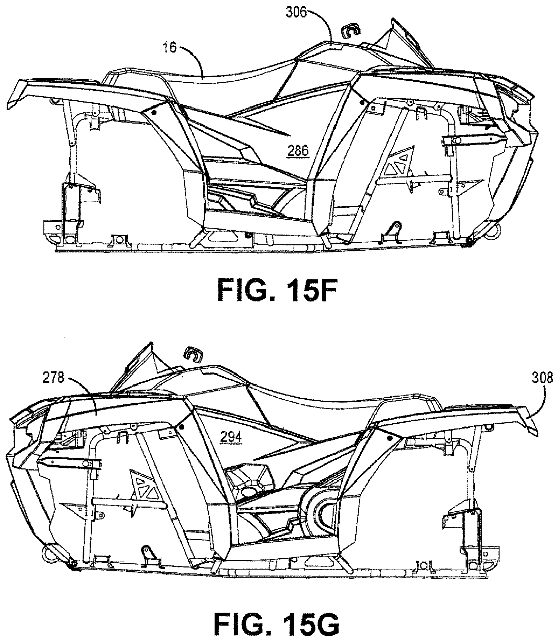

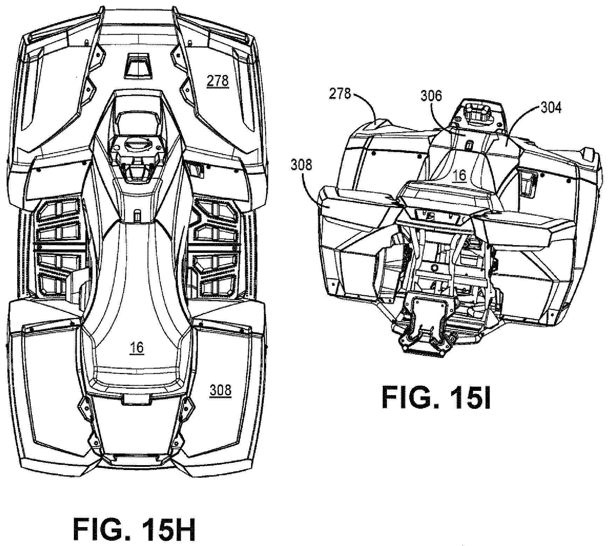

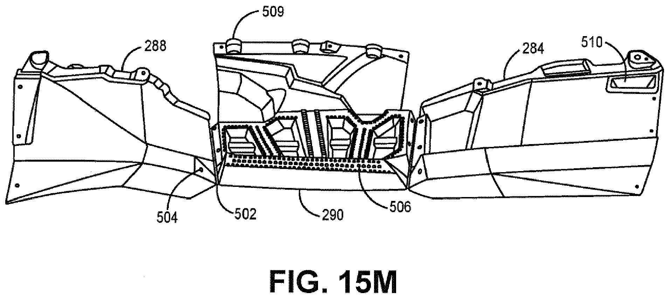

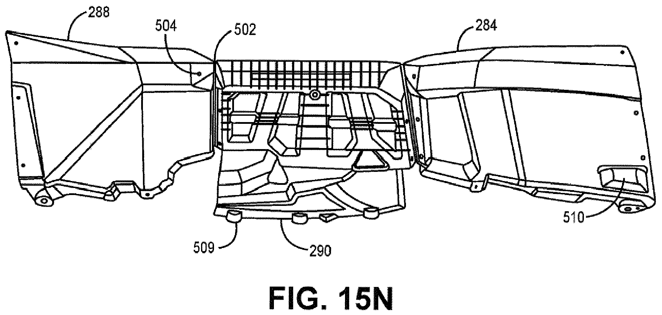

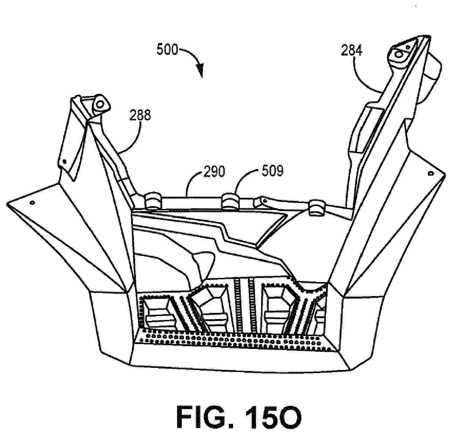

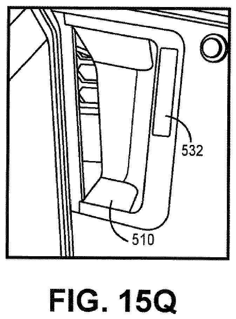

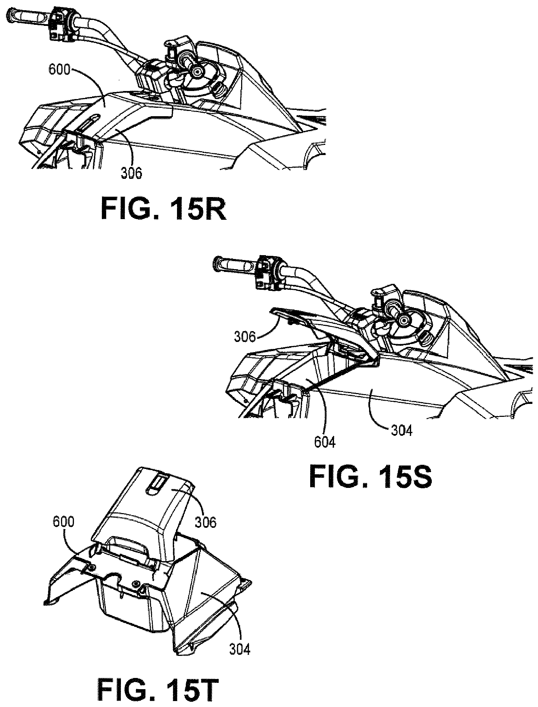

FIGS. 15A-O show illustrative examples of the body panels and footwells of the off-road vehicle 10. In some embodiments, the off-road vehicle 10 has a front fascia 274, which extends forwardly beyond at least a portion of headlights 276, and an upper front panel 278. In some embodiments, the upper front panel 278 has an opening 280 and an access tab panel 282 to permit access to the radiator cap. Regarding FIG. 15C, in some embodiments, a right side of the vehicle includes right front splash panel 284, right closeout panel 286, right rear splash panel 288, and right foot rest panel 290. Regarding FIG. 15D, in some embodiments, a left side of the vehicle includes a left front splash panel 292, left closeout panel 294, left rear splash panel 296, and left foot rest panel 298. In some embodiments, the left rear splash panel 296 includes a clutch recess portion 300 to provide clearance for the CVT housing 234 (FIG. 12B). As shown in FIGS. 15C and 15D, portions of the right foot rest panel 290 and left foot rest panel 298 extend upwardly to meet the respective closeout panels 286, 294 and also extend outwardly in the lateral direction of the vehicle to support the operator's foot. In some embodiments, the right foot rest panel 290 and left foot rest panel 298 are supported by respective foot support members 98 (FIG. 4B).

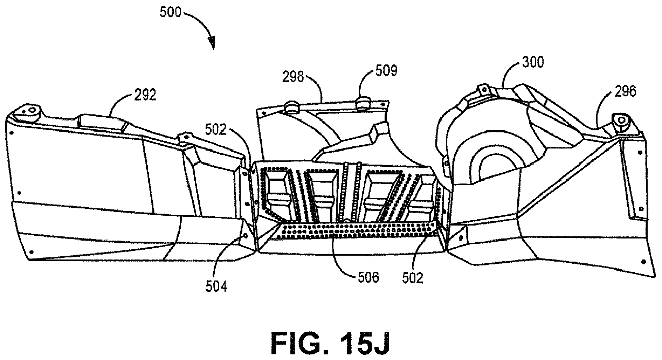

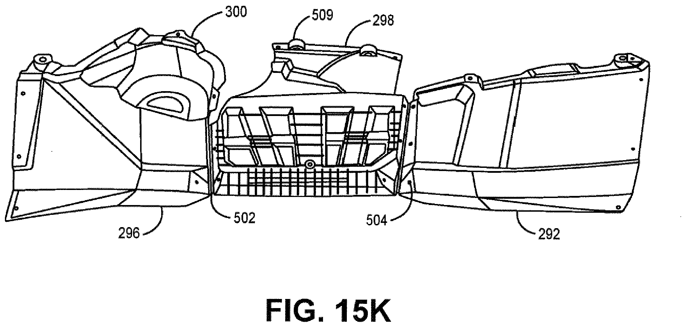

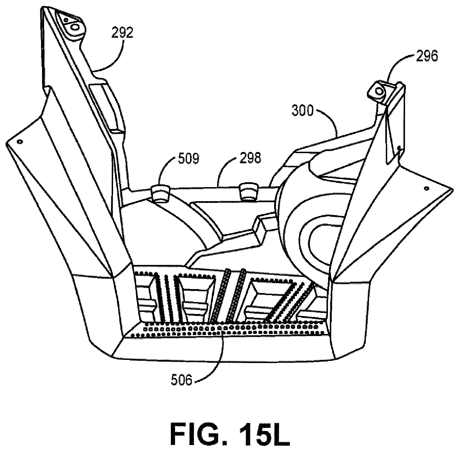

Referring to FIGS. 15J-0, perspective views of a single-piece, molded foot well system 500 is shown, according to some embodiments. Fully molded foot well systems have been used in the past, but suffer from extremely deep and costly molds and also do not stack or ship efficiently. Additionally, the size of a single molded foot well piece makes it difficult to form complex shapes due to tooling cost and mold limitations. As shown in FIGS. 15J-0, a foot well system 500 can utilize living hinges 502 to connect individual components in a mold, but have all components lay flat for storage and shipping. A living hinge 502 includes a thinner section of material between components to connect them, but be thin enough to fold them into a second or subsequent position for attachment. In this example (see FIG. 15J). left front splash panel 292 is connected to left foot rest panel 298 by living hinge 502. Similarly, left rear splash panel 296 is connected by a second living hinge 502 to left foot rest panel 298. FIGS. 15J and K show a flat configuration for storing or shipping. When folded into place and secured via securement holes 504, the foot well system 500 forms a complete unit (see configuration in FIG. 15L). FIGS. 15L-O show similar configurations on the right side of the vehicle. Clips 509 help secure the panels 298, 290 to additional engine panels, such as panel 286 or 294. The living hinge 502 can be contiguous material, or include windows between connection material or include any shape of material that connects components in a mold, but allows for bending into a second configuration when in an installation position. The system 500 can optionally include one hinge or two hinges, on either the right or left side of the vehicle.

Because the system 500 can be formed in a single mold, the front panels 292, 284 and rear panels 288, 296 can be a longer, higher panel and connect with vehicle fender paneling at higher points (see seams 520 and 530 in FIGS. 1A-B, for example). The higher seam with front and rear fender allows for the fender to also be manufactured in a shallow or flat configuration, which saves on tooling and shipping costs. The seams 520, 530 can be positioned such that the fender panels they connect with allow for a substantially flat fender panel (see panel 278 for example). The rear seam 520 can be positioned in a horizontal plane with or adjacent to frame portion 110 (see FIG. 4C). The seam 520 may be higher in one example. The front seam 530 can be positioned in a horizontal plane with or adjacent to upper longitudinal frame member 88 (see FIG. 4C). The seam 530 may be higher in one example.

Additionally, the upper fenders are usually made with pigments and coatings (high gloss) that are more expensive than the textured/wear resistant material of the foot well system 500. Extending the wear resistant material up higher protects the appearance of the vehicle when used (this area is a relatively high wear/contact area for passengers). In one embodiment, any panels that connect via the living hinge 502 create an overlap of material when in an installation configuration and that overlap connection point is used to connect to the frame 12, such creates a stronger foot well system 500.

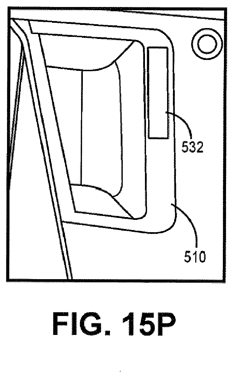

Shifter pass-through feature 510 (i.e., shift gate or recessed cavity) removes parts as it is integral to right front splash panel 284 (see FIGS. 15P-Q). The feature 510 allows for the shifter 22 to pass through and also includes molded shifter position indicators 532 (i.e., Park, Neutral, Drive, Reverse, etc.). This can be accomplished in the injection mold without the use of actions, due to the pull direction in the mold- ultimately reducing parts and producing a more aesthetically pleasing feature without witness lines.

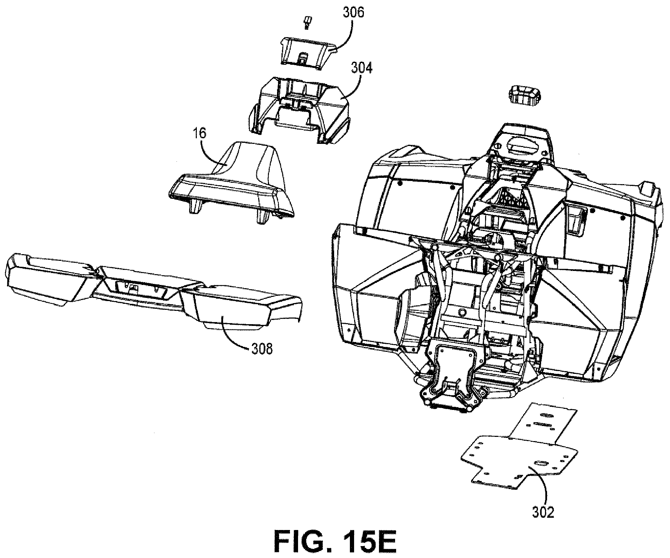

With regard to FIGS. 15E-I, in some embodiments, the off-road vehicle 10 includes a skid plate 302. Additionally, in FIGS. 15R-T, in some embodiments, a console panel 304 and console panel cover 306 provide a storage area 600 forward of the straddle seat 16. An upper rear panel 308 extends over the rear ground engaging members.

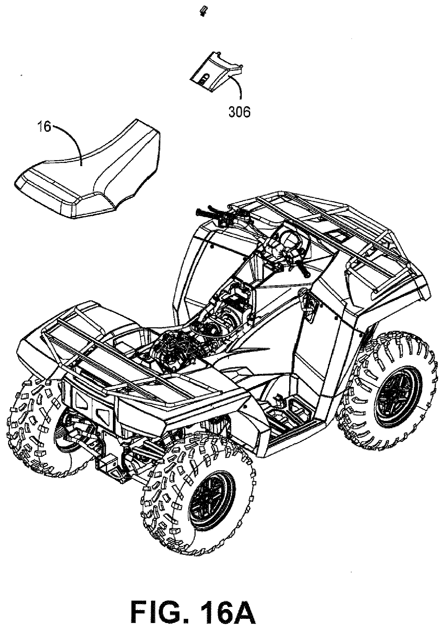

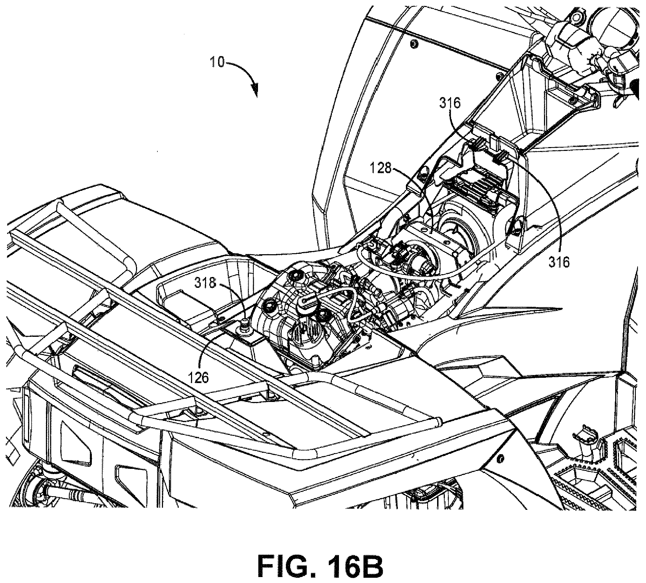

FIGS. 16A and 16B show views of the seat supports, such as rear seat support bracket 126 and front seat support bracket 128. In some embodiments, the straddle seat 16 is positioned on the off-road vehicle 10 via seat locating tabs 316. The seat locating tabs 316 fit into corresponding openings in a front portion of the straddle seat 16. Then, the straddle seat 16 can be rotated downwardly in the rear of the straddle seat 16 until a retaining feature on the bottom of the straddle seat 16 interfaces with retaining hub 318.

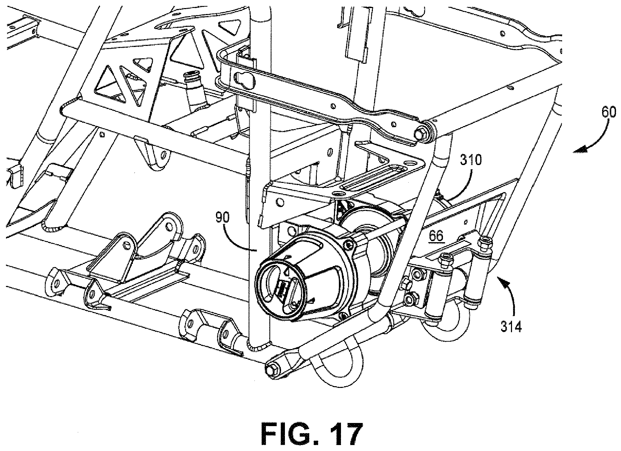

With regard to FIG. 17, a winch 310 is situated between middle cross member 66 of removable front frame portion 60 and first vertical members 90. In some embodiments, the winch is coupled to winch bracket 312 (FIG. 4B). In some embodiments, the winch guide assembly 314 is coupled to the middle cross member 66.

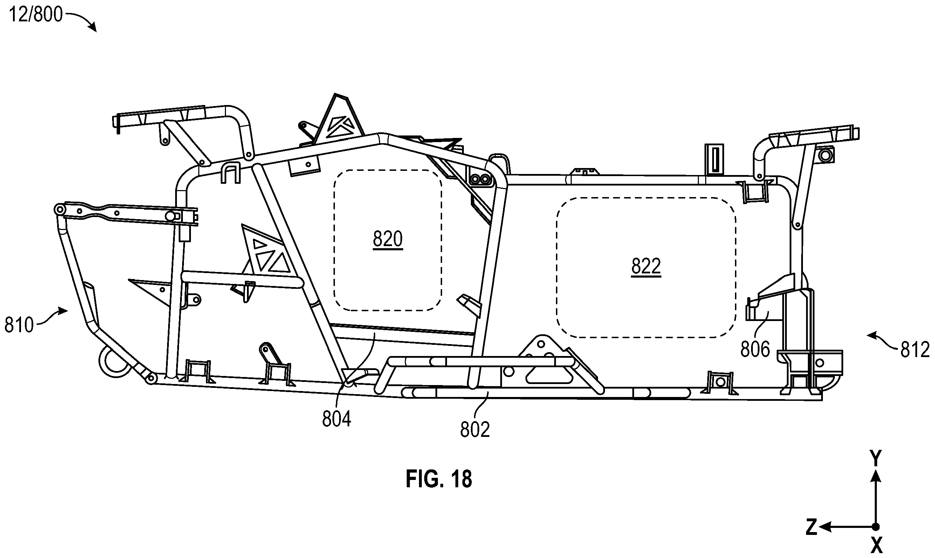

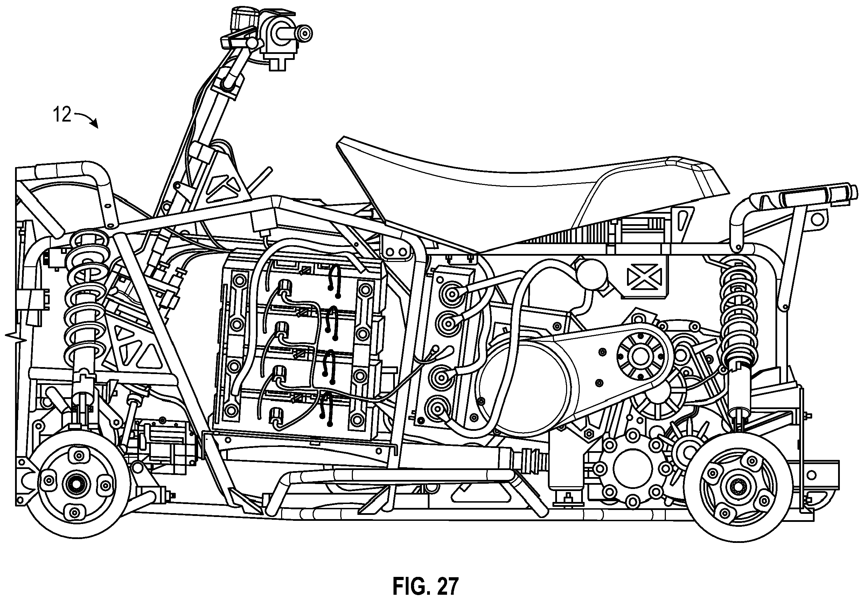

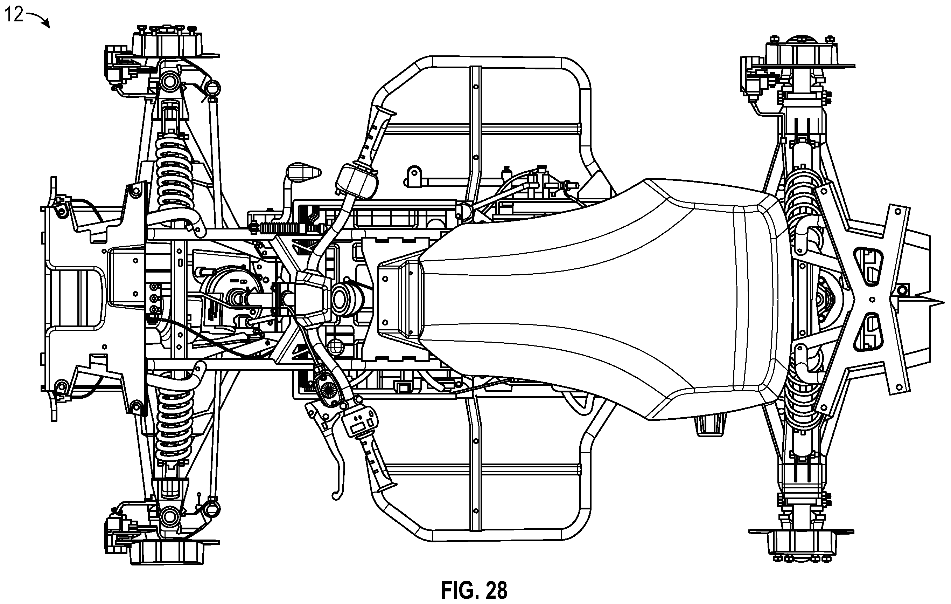

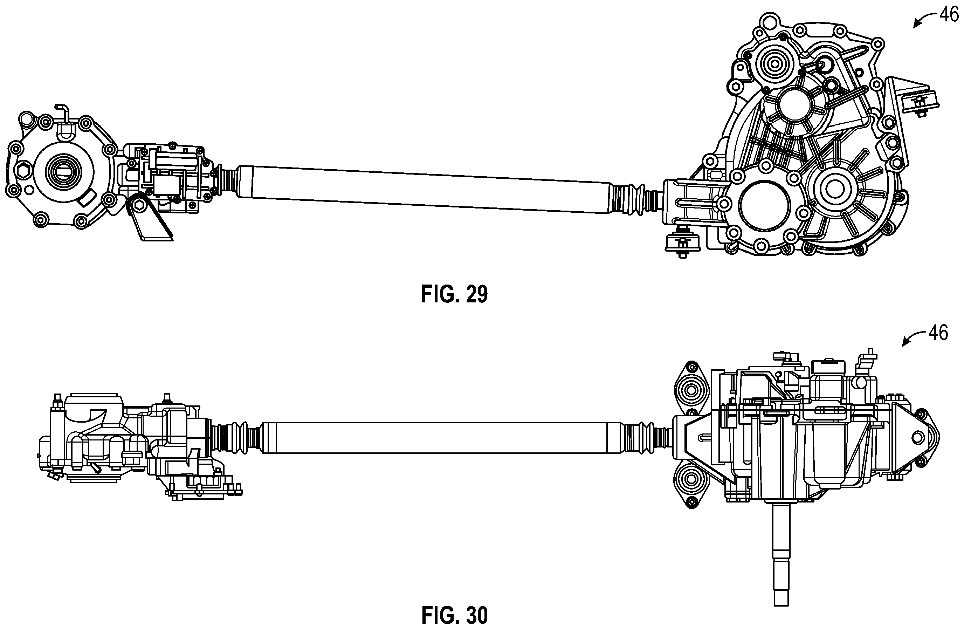

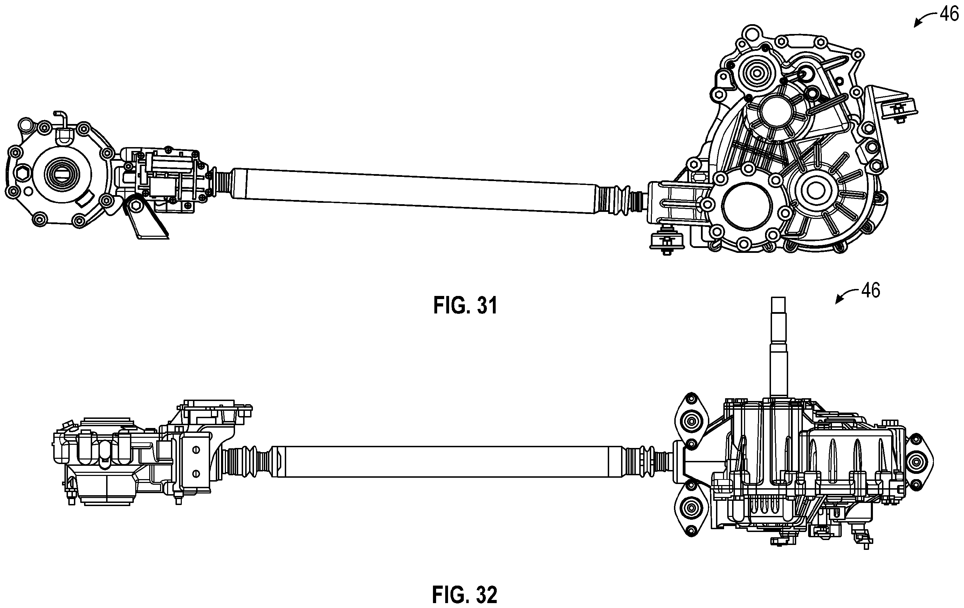

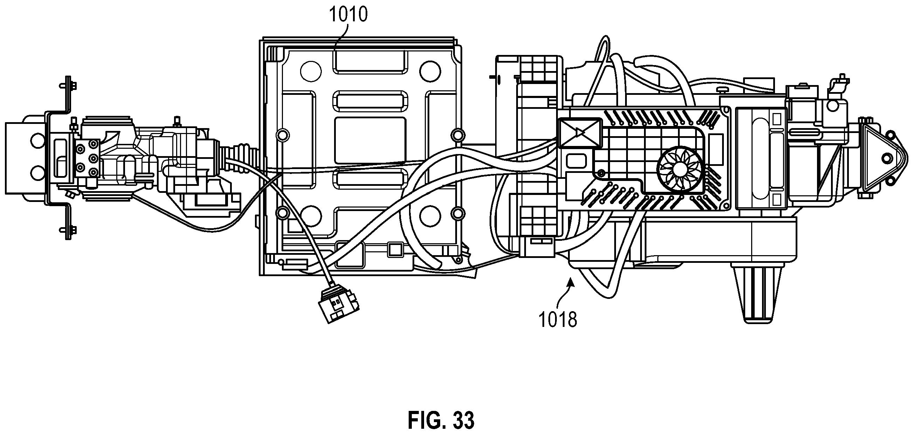

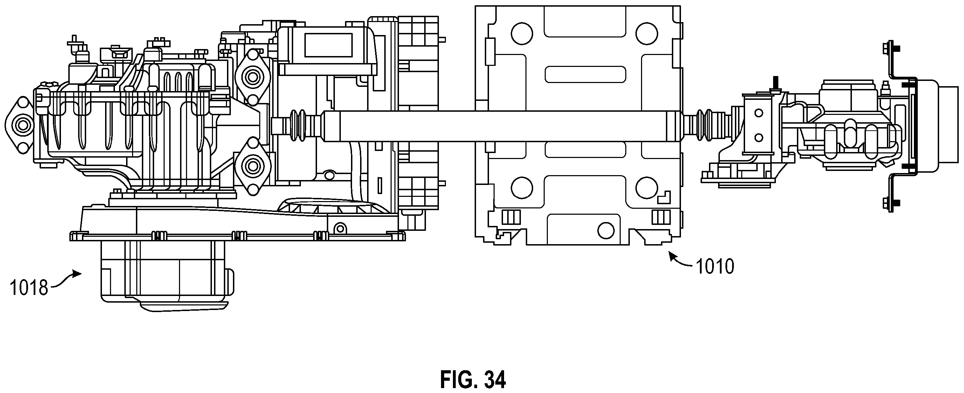

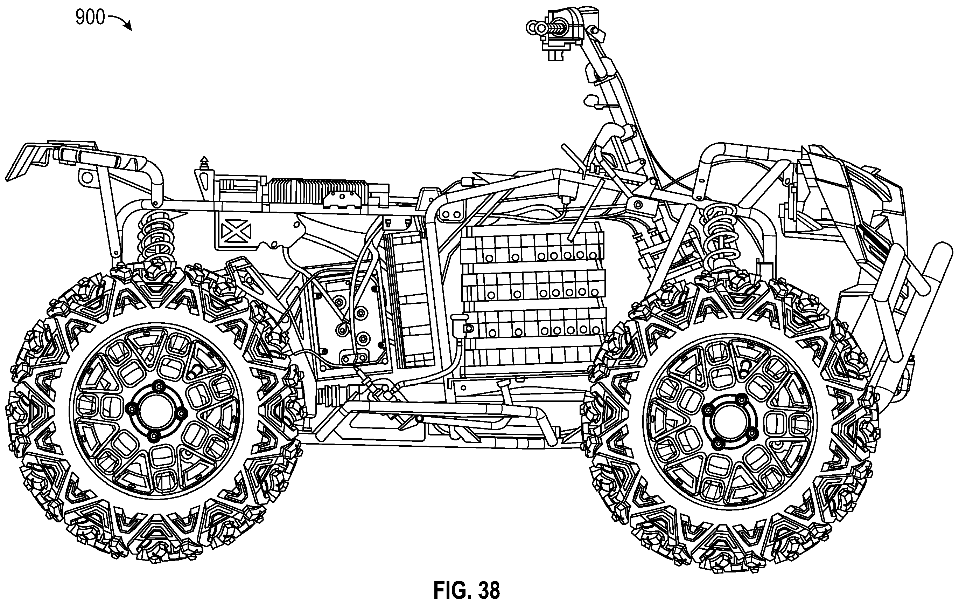

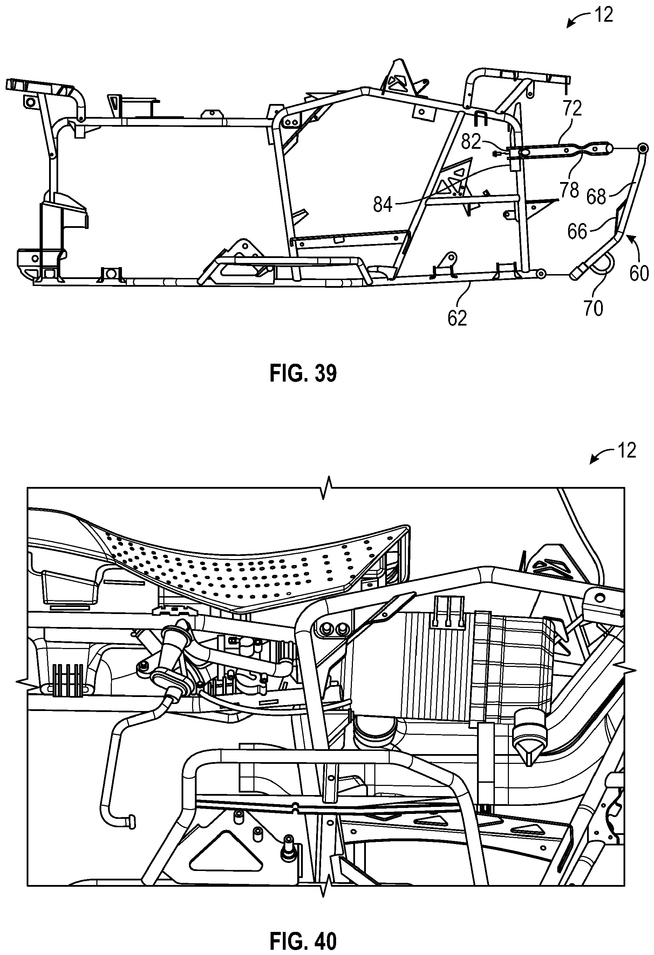

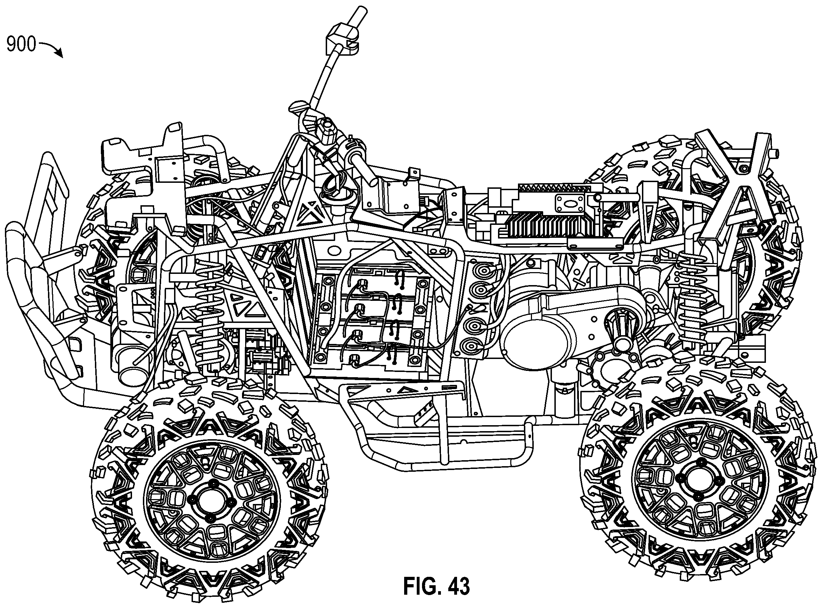

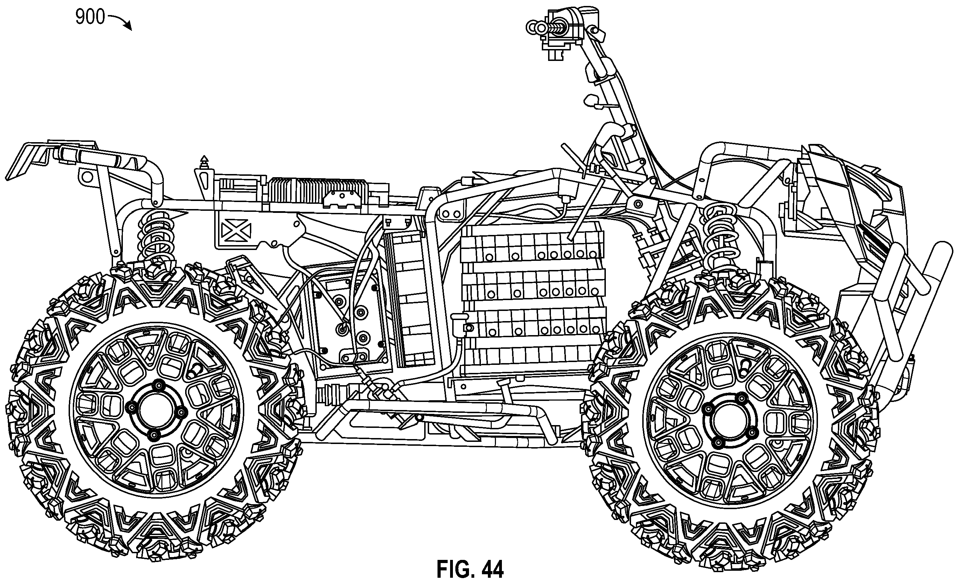

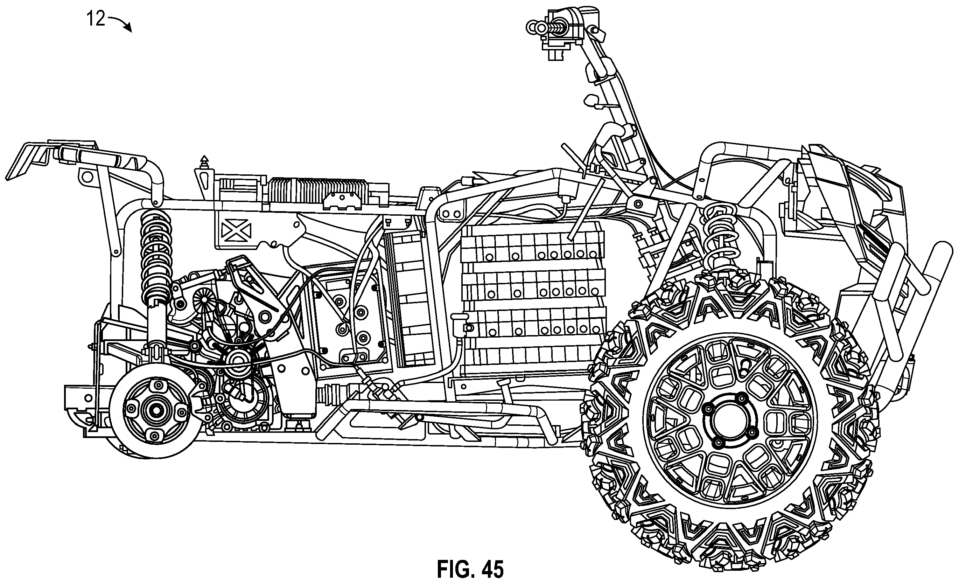

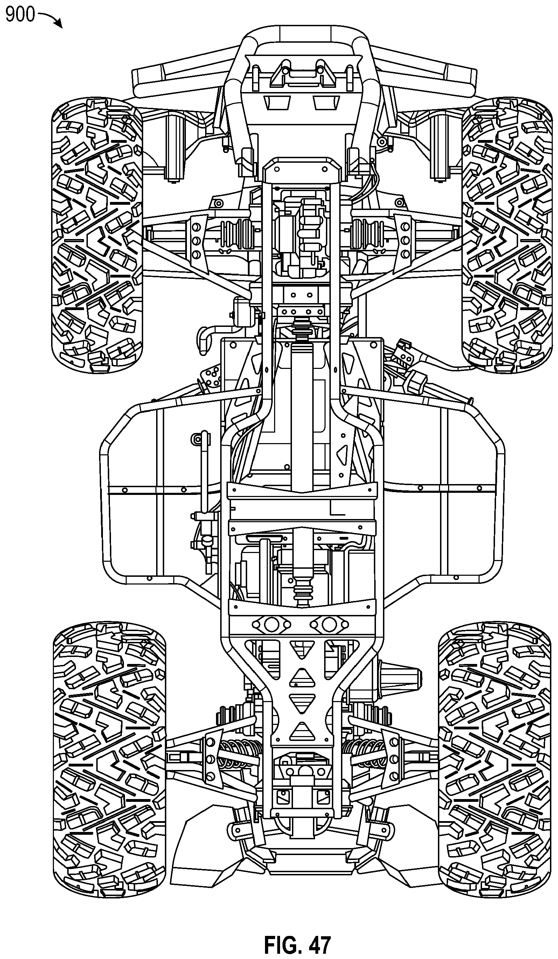

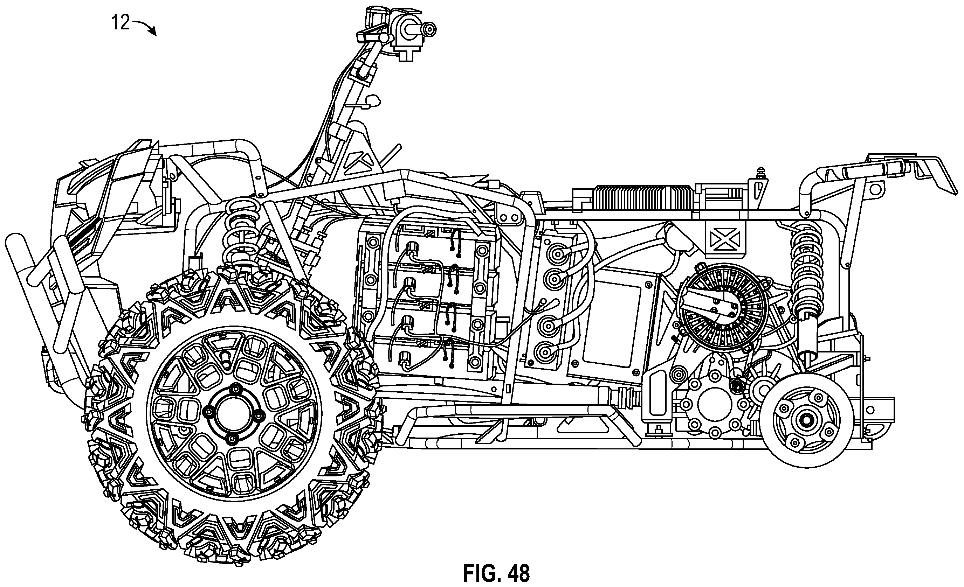

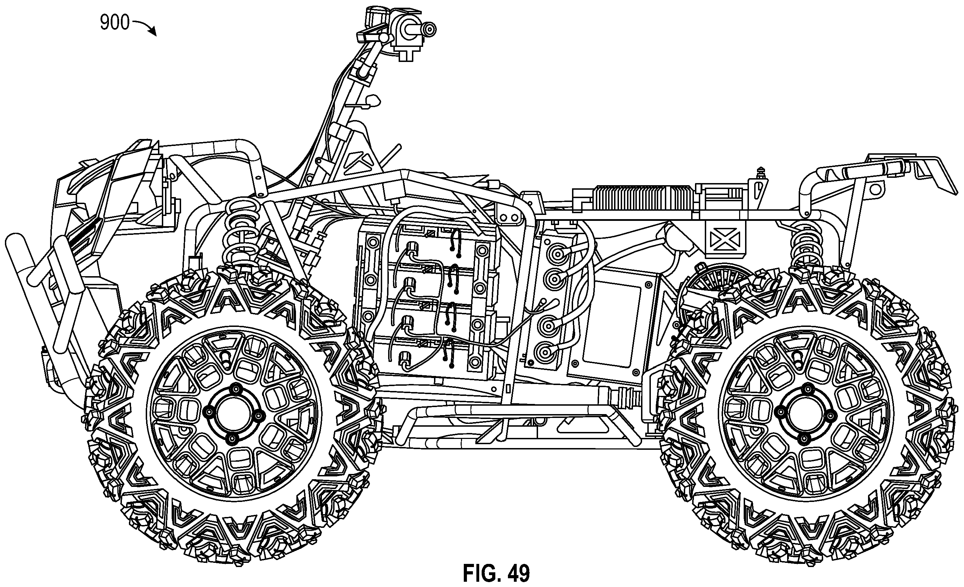

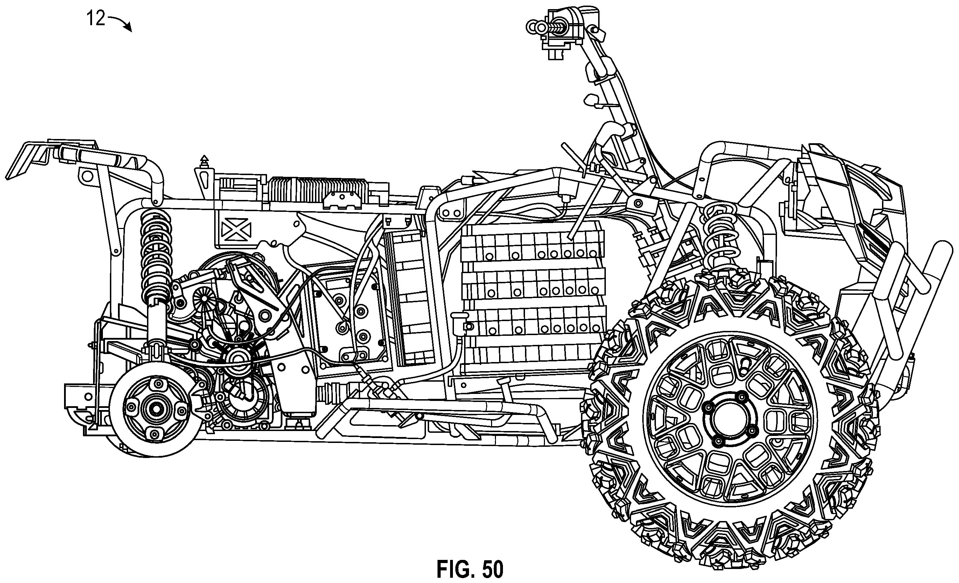

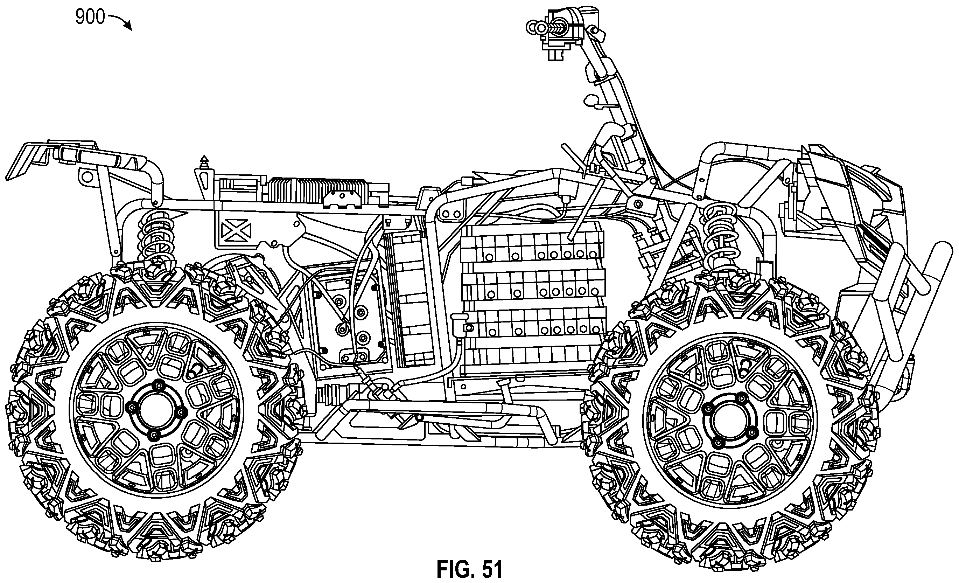

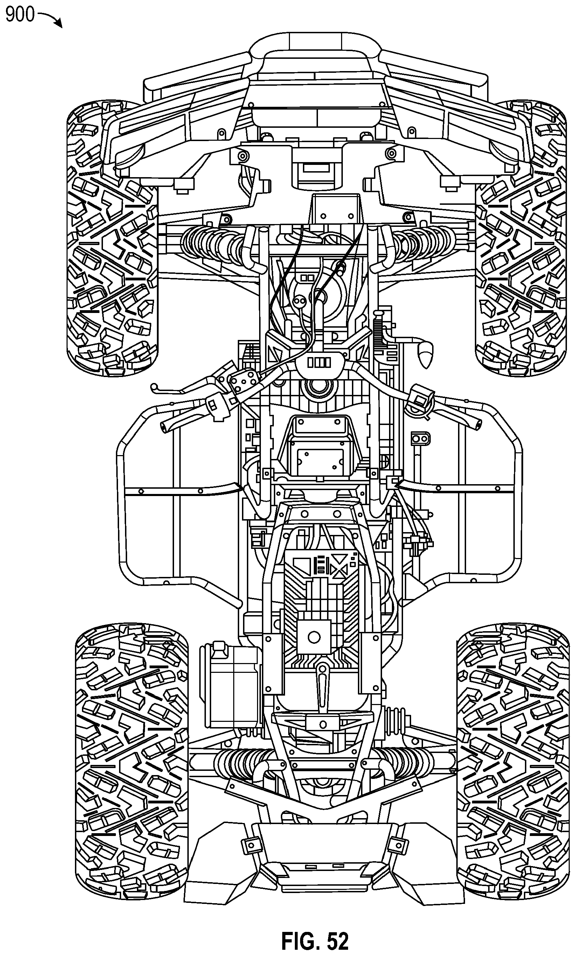

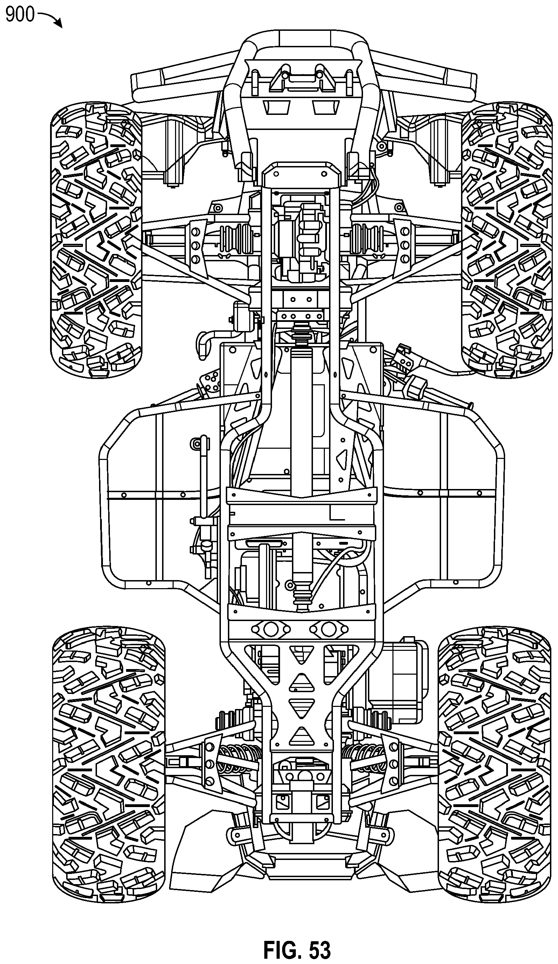

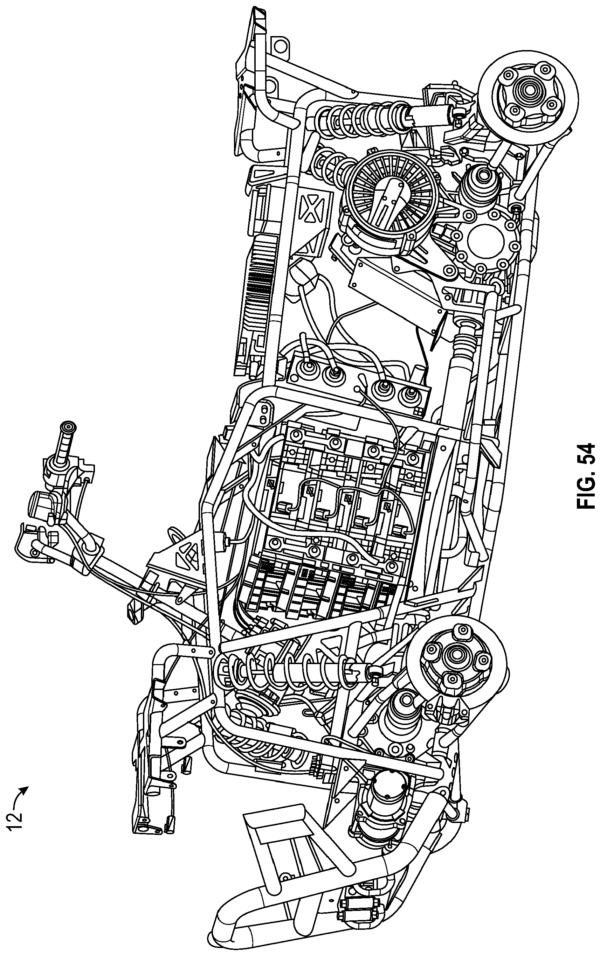

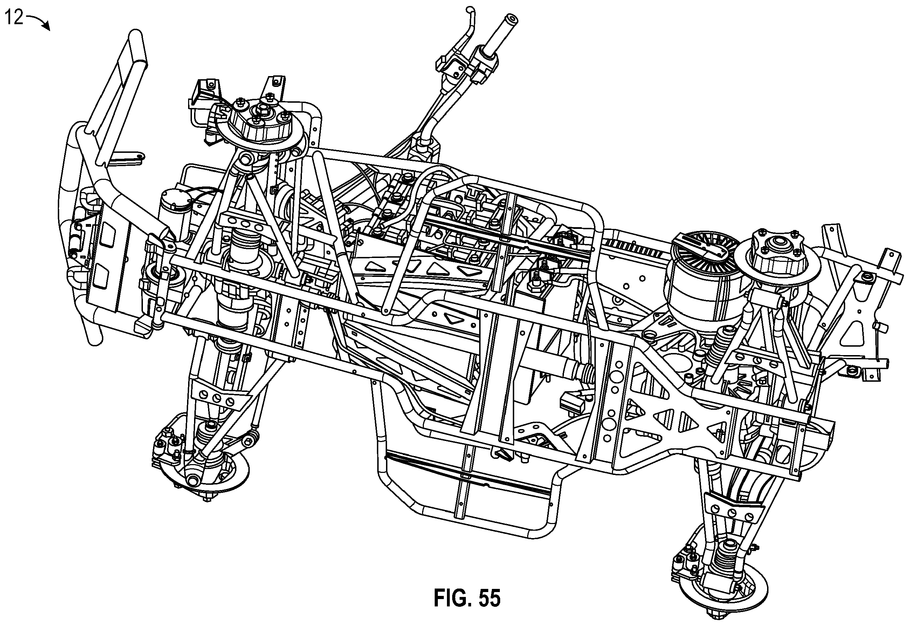

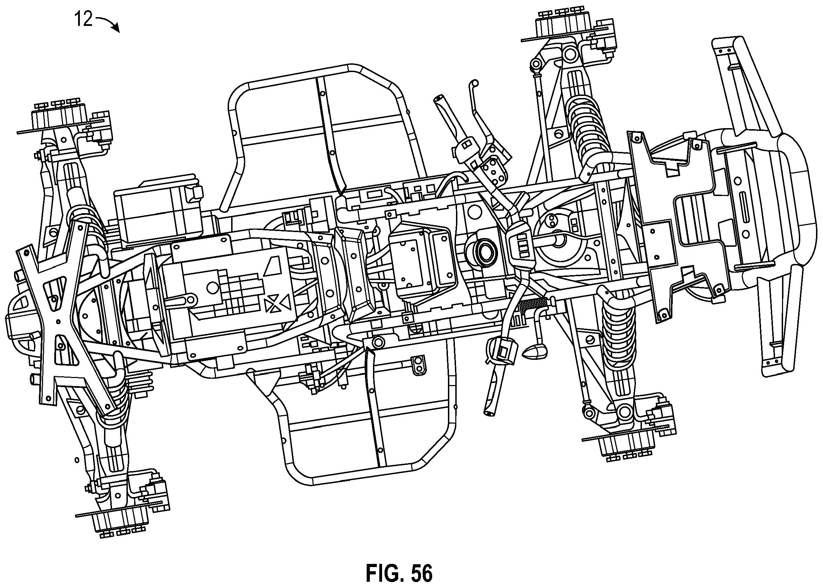

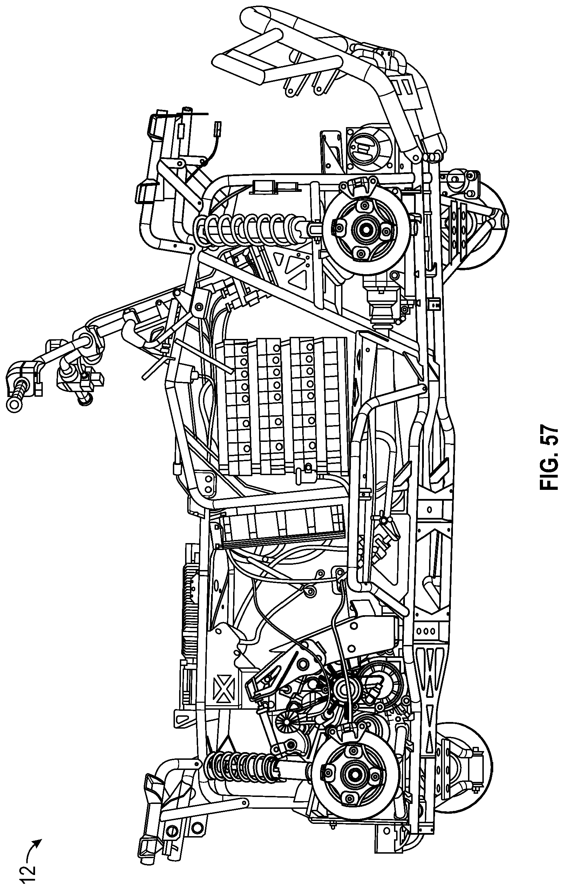

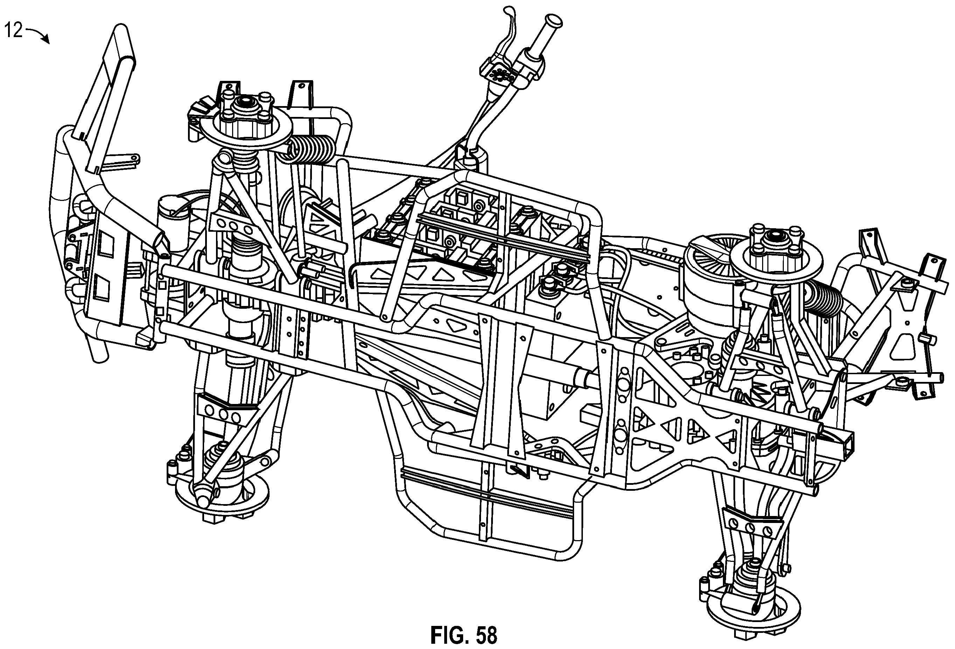

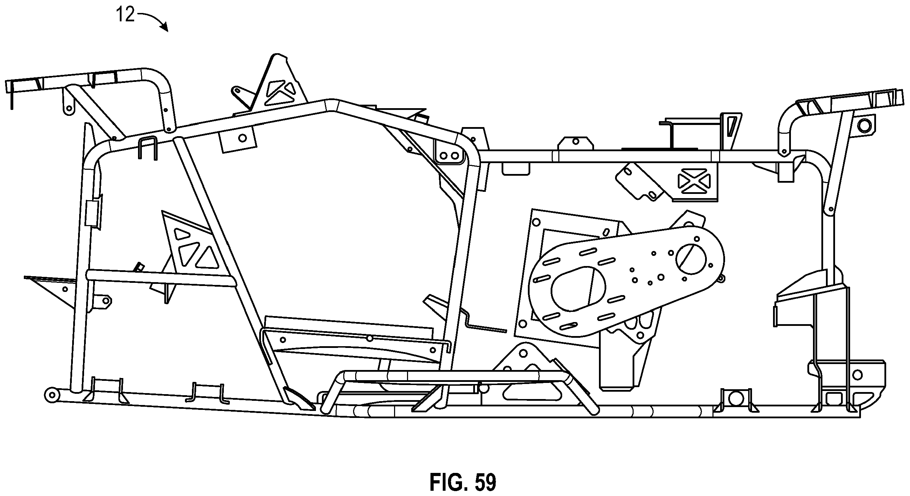

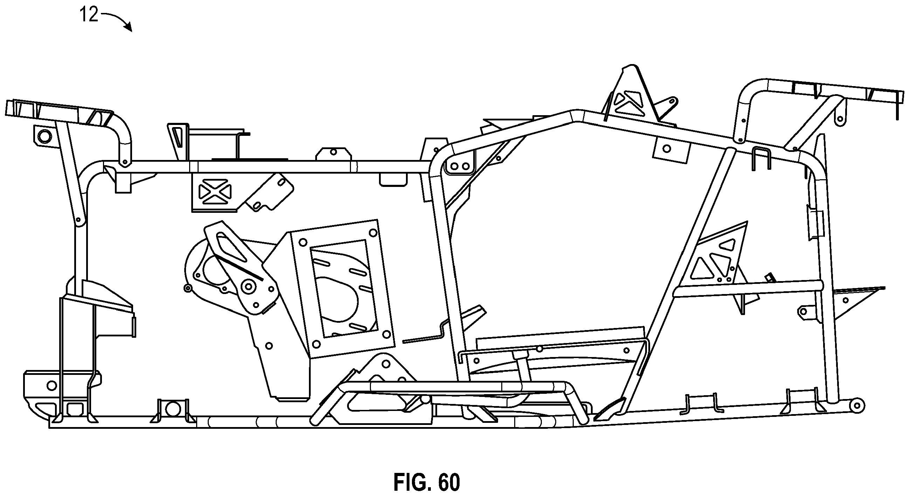

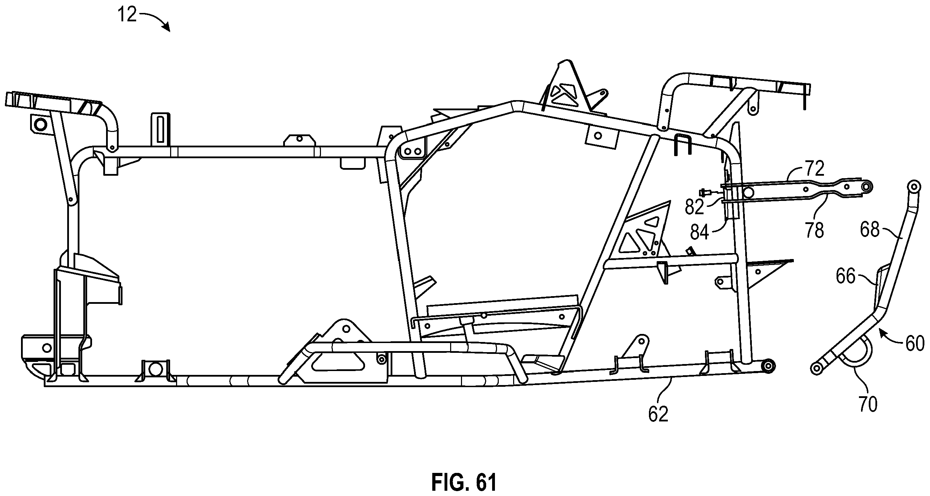

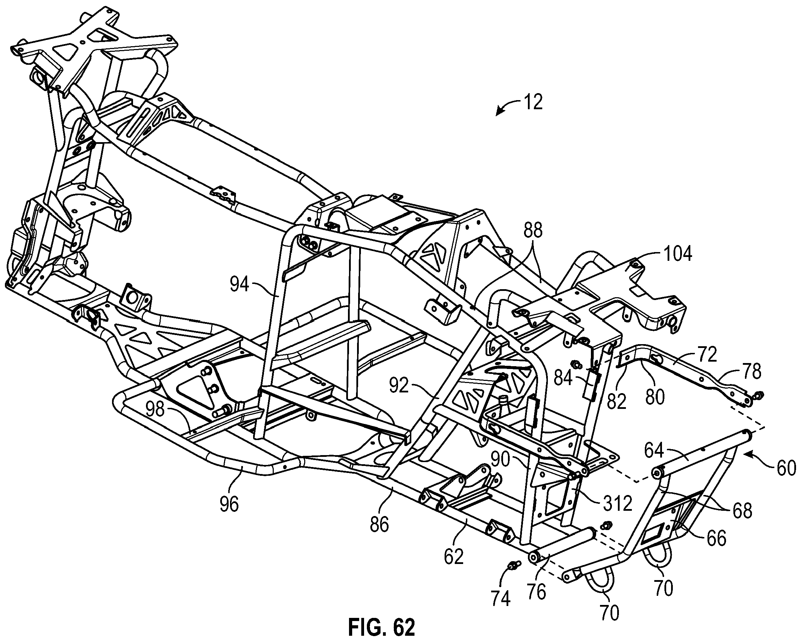

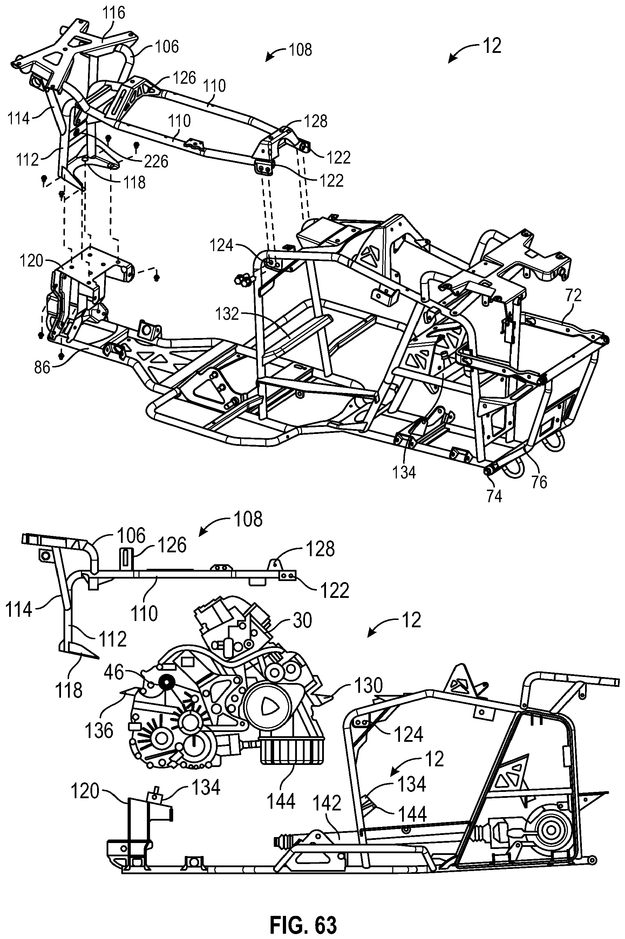

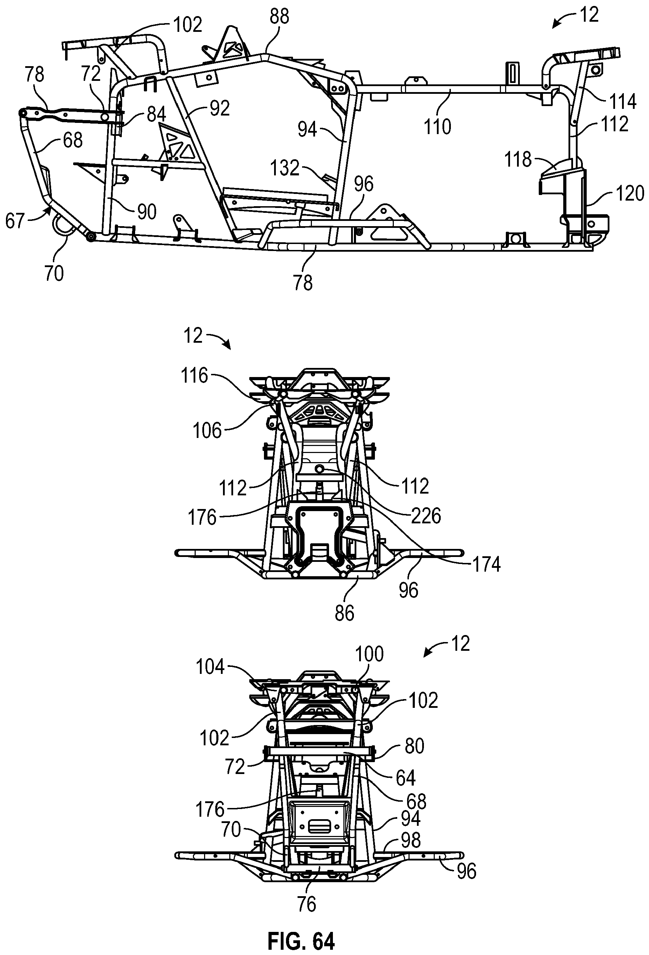

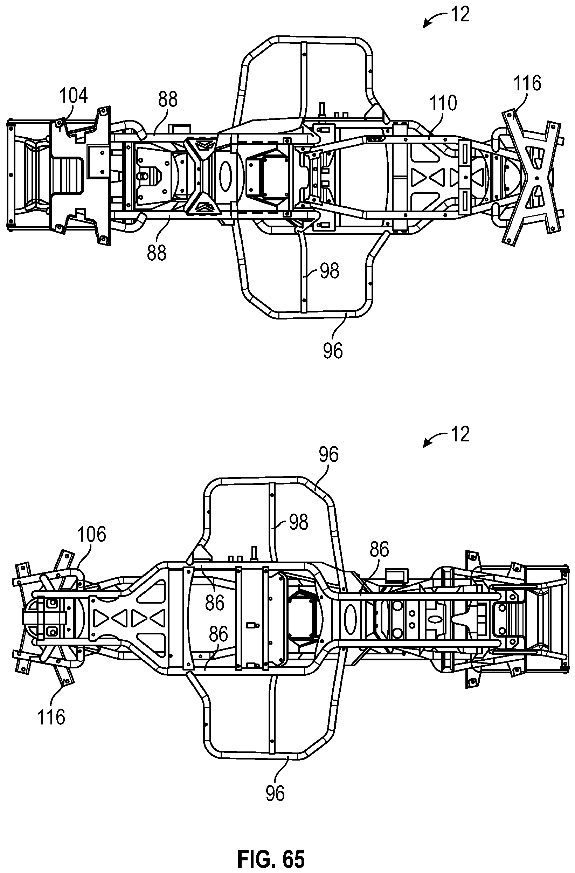

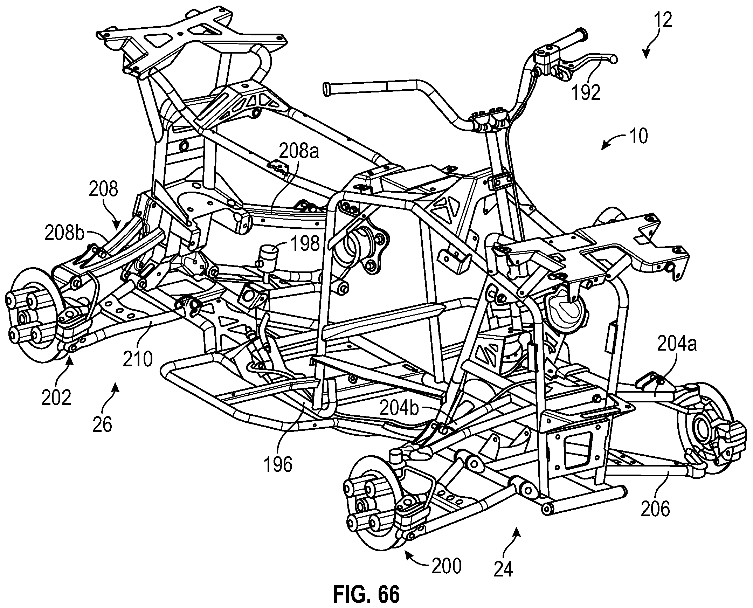

FIGS. 18-68 illustrate various details of electric off-road vehicles in accordance with certain embodiments.

FIG. 18 shows particular aspects of the frame 12 in accordance with certain embodiments. It should be understood that FIG. 18 is similar to FIG. 4C, but that FIG. 18 may highlight certain features/details that are less emphasized and/or omitted in FIG. 4C, and may de-emphasize and/or omit other features/details that are shown in FIG. 4C for simplicity, viewability, etc.

As should be apparent, the frame 12 is well-suited for a variety of off-road applications such as serving as the framework/skeletal structure 800 for an off-road vehicle (also see FIGS. 1A-F). Along these lines, as illustrated in FIG. 18, the frame 12 may be viewed as including a main frame section 802, a first subsection 804, and a second subsection 806.

The main frame section 802 defines a front 810 of the off-road vehicle and a rear 812 of the off-road vehicle. As shown in FIG. 18, the front 810 points or faces toward the positive Z-direction (i.e., the forward vehicle direction) and the rear 814 points or faces toward the negative Z-direction (i.e., the backward vehicle direction).

Additionally, the main frame section 802 defines a first frame space 820 for housing certain vehicle components, and a second frame space 822 for housing other vehicle components. The first frame space 820 resides between the off-road vehicle front 810 and the second frame space 822. The second frame space 822 resides between the first frame space 820 and the off-road vehicle rear 812.

As mentioned earlier in connection with other figures, other frame-related features/aspects may be defined by the frame 12. For example, the main frame section 802 may further define loop/tow members, foot members, and so on.

As further shown in FIG. 18, the first subsection 804 and the second subsection couple with the main frame section 802. The first subsection 804 is closer to the off-road vehicle front 810 than the second subsection 806. Additionally, and the second subsection 806 is closer to the off-road vehicle rear 812 than the first subsection 804.

In accordance with certain embodiments and as will be further explained shortly, the first subsection 804 is suitable for supporting a battery assembly that stores electric power, and the second subsection 806 is suitable for supporting an electric propulsion motor that provides off-road vehicle propulsion using the electric power. In some arrangements, one or both of the subsections 804, 806 may include one or more support members, brackets, beams, plates, hardware, portions of other vehicle components, combinations thereof, etc. to robustly and reliably provide support. Such features are suitable for an electric propulsion motor off-road vehicle or simply "an electric off-road vehicle".

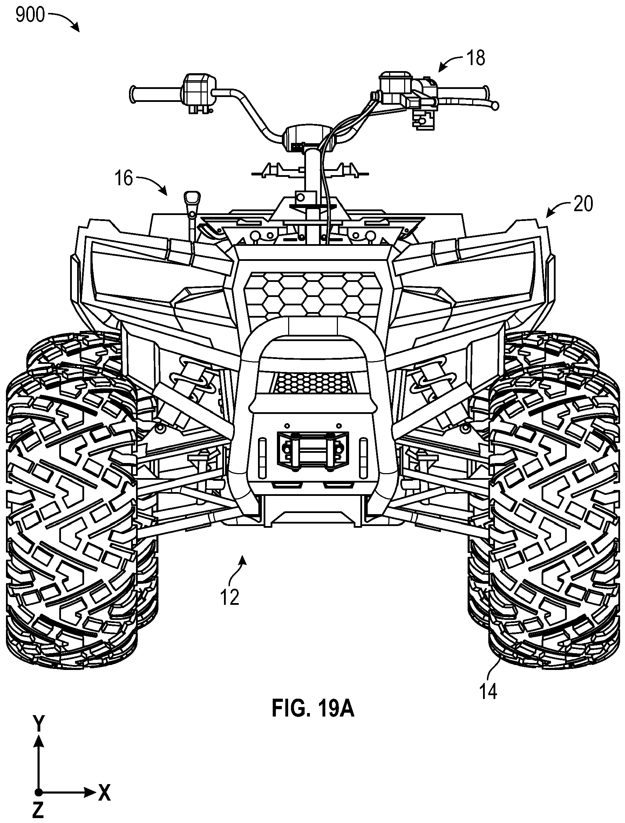

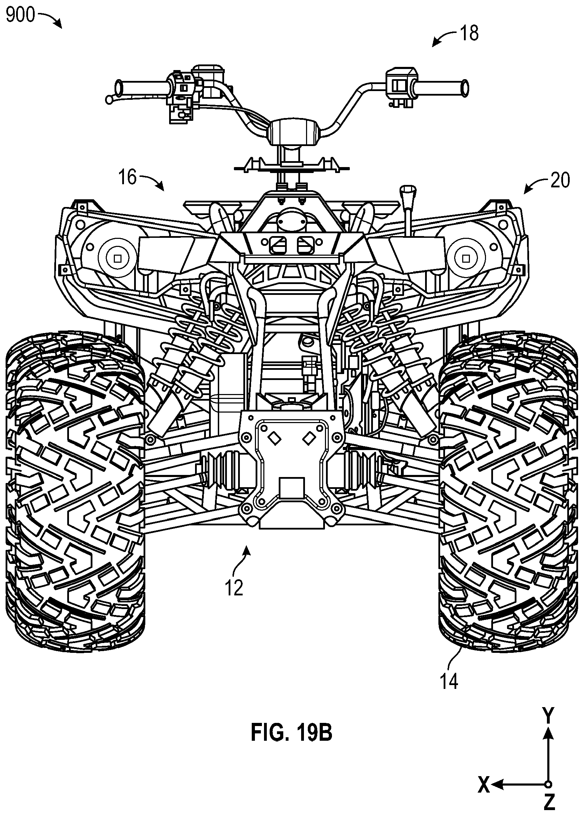

FIGS. 19A and 19B show views of an electric off-road vehicle 900 that utilizes the frame 12 (also see FIGS. 1A-F and 18) to support various vehicle components. The electric off-road vehicle 900 includes, in addition to the frame 12, a set of ground engaging members 14 (e.g., four tires), a straddle seat 16, operator controls 18, and a set of body panels 20. Other vehicle components, which were described above, may be included in the electric off-road vehicle 900 such as certain suspension components, certain steering components, certain braking components, and so on.

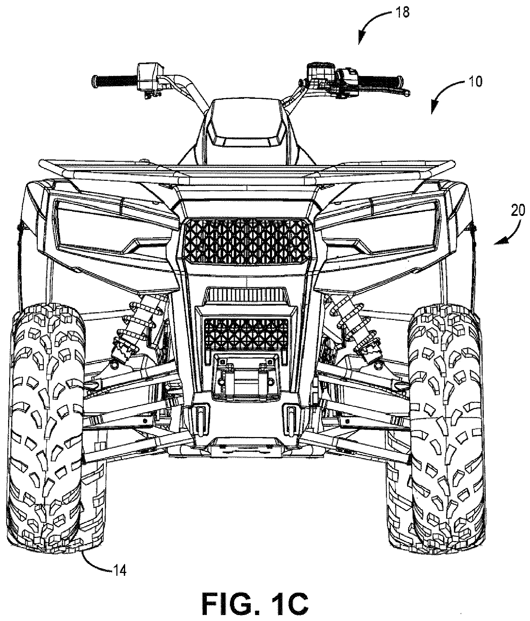

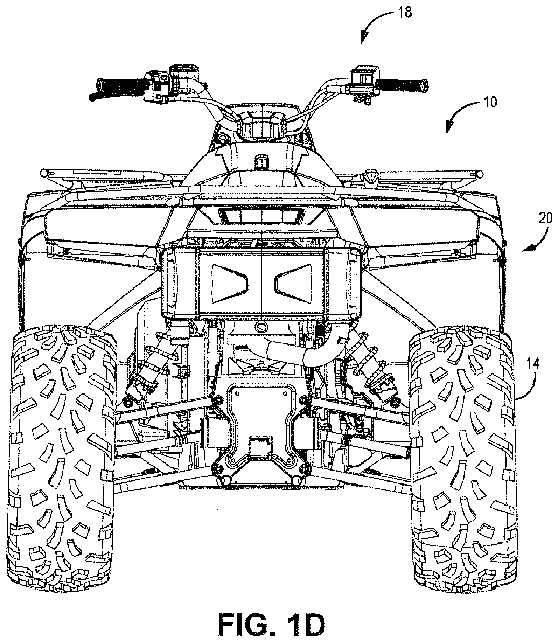

It should be understood that FIGS. 19A and 19B are similar to FIGS. 1C and 1D which illustrate an off-road vehicle 10 which utilizes a combustion engine. However, as will be explained in further detail shortly, the electric off-road vehicle 900 includes certain components that facilitate operation of an electric motor for propulsion rather than a combustion engine. Accordingly, the electric off-road vehicle 900 does not require various combustion engine componentry such as a liquid fuel tank, a liquid fuel pump, an air intake system, an exhaust system, a combustion engine cooling system, and so on.

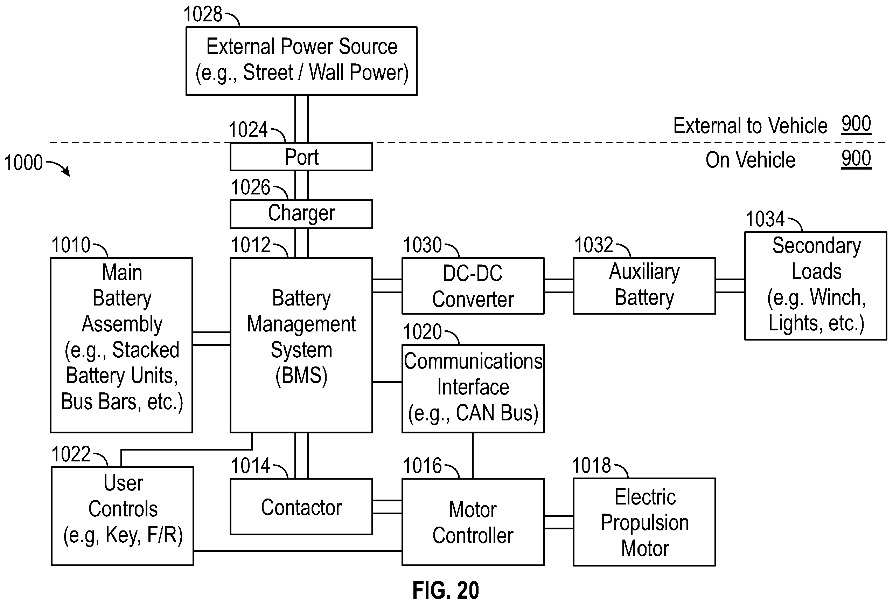

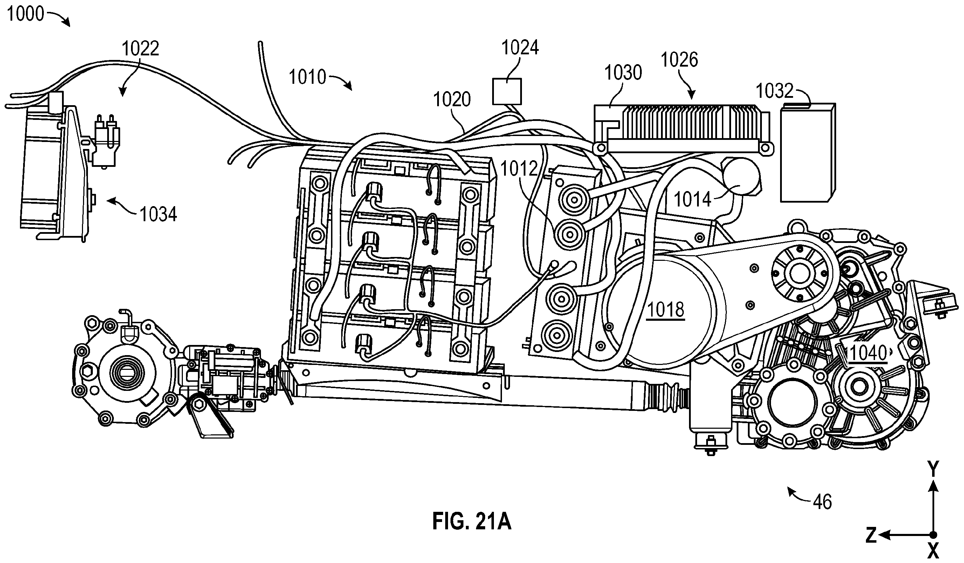

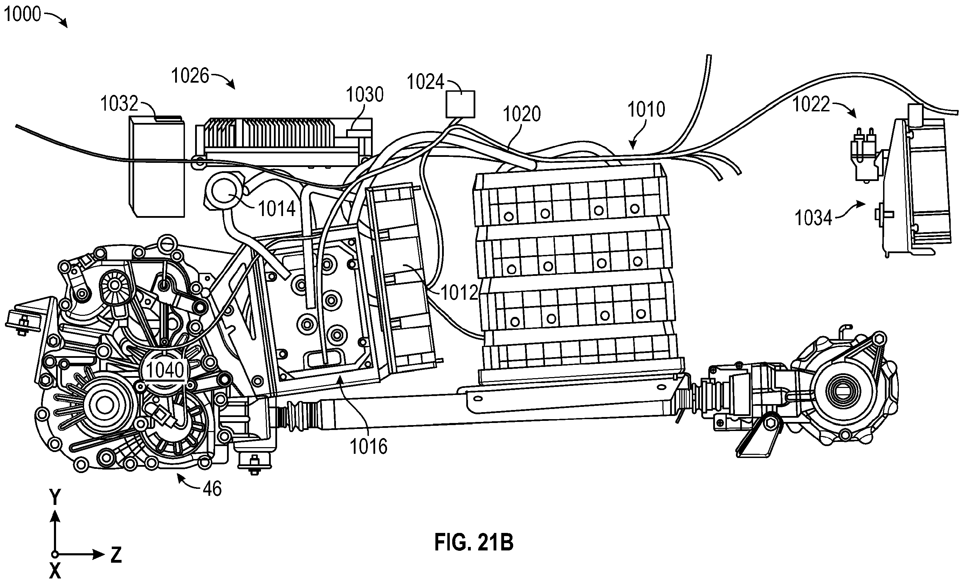

FIGS. 20, 21A, and 21B show various onboard electrical components 1000 for the electric off-road vehicle 900. FIG. 20 is a block diagram illustrating certain electrical relationships among the electrical components 1000. FIGS. 21A and 21B are example opposite side views of some of the electrical components 1000 in which certain drive related equipment is shown for context (e.g., the earlier-mentioned transaxle 46).

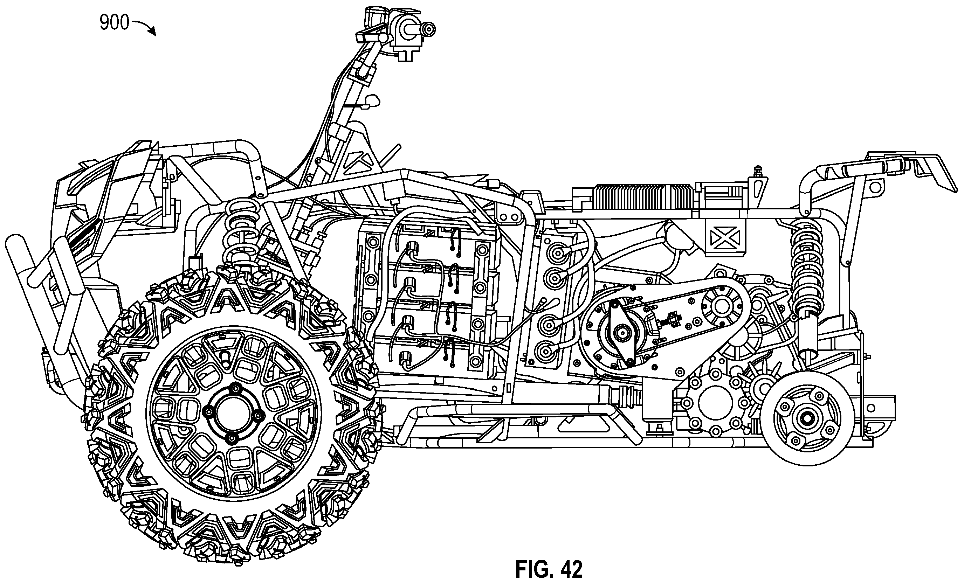

As shown in FIGS. 20, 21A, and 21B, the onboard electrical components 1000 include a main battery assembly 1010, a battery management system (BMS) 1012, a contactor 1014, a motor controller 1016, an electric propulsion motor 1018 (e.g., which may be protected behind a cover such as a belt case that covers a linking belt in some embodiments), a communications interface 1020, user controls 1022, a charge port 1024, and a charger 1026. FIG. 42 shows the belt case cover removed in order to provide a better view of the electric propulsion motor in accordance with certain embodiments.

The main battery assembly 1010 is constructed and arranged to store electric power for subsequent use by the electric off-road vehicle 900. Along these lines, the main battery assembly 1010 may include one or more rechargeable battery units (or cells). Suitable battery types include, but are not limited to, lithium ion, lead acid, nickelcadmium, nickel-metal hydride, nickel-zinc, lithium-sulfur, graphene, aluminum-graphite, combinations thereof, and the like.

The BMS 1012 is constructed and arranged to control electrical access to the main battery assembly 1010. To this end, the BMS 1012 maintains the state of charge (SOC) of the main battery assembly 1010 within a predefined operating range. Along these lines, the BMS 1012 protects against overcharging and over-discharging to improve battery performance (e.g., maximize battery capacity, extend battery life, etc.). In some arrangements, the BMS 1012 controls other operating aspects of the main battery assembly 1010 (e.g., battery temperature, charging/discharging rates, the SOC during long term storage or while the main battery assembly 1010 is in a long term sleep mode rather than a normal operating mode, etc.). Additionally, in some arrangements, the BMS 1012 is able to coordinate operation with other electrical components such as the motor controller 1016 and/or the charger 1024.

The contactor 1014 is constructed and arranged to open and close and thus control the exchange of electric power between the main battery assembly 1010 and the electric propulsion motor 1018. To this end, the contractor 1014 is disposed between the BMS 1012 and the motor controller 1016.

The motor controller 1016 is constructed and arranged to control operation of the electric propulsion motor 1018. The motor controller 1016 may coordinate this operation by communicating with the BMS 1012. For example, the motor controller 1016 may identify faults to the BMS 1012 and, in response to certain faults, direct the BMS 1012 to open the contactor 1014 in order to safeguard the main battery assembly 1010. In some arrangements, the motor controller 1016 may perform regenerative braking in which the motor controller 1016 uses the electric propulsion motor 1018 as an electric generator to provide vehicle braking and recharge the main battery assembly 1010.

The electric propulsion motor 1018 is constructed and arranged to provide drive to the transaxle 46 (also see FIG. 3B) using electric power from the main battery assembly 1010. Along these lines, the electric propulsion motor 1018 includes a stator and a rotor which is constructed and arranged to rotate relative to the stator. During operation, the motor controller 1016 provides signals to motor windings causing the rotor, which couples with the transaxle 46, to rotate at particular speeds and in particular directions and thus drive the transaxle 46 in a manner similar to that of a combustion engine. Additionally, as just mentioned, the electric propulsion motor 1018 may serve as an electric generator to recharge the main battery assembly 1010 when performing regenerative braking.

As will be explained in further detail below, a housing 1040 (FIGS. 21A and 21B) of the transaxle 46 mounts to the frame 12, and the transaxle 46 further includes an input that is constructed and arranged to receive rotational input about a transaxle input axis that extends in the X-direction while the transaxle housing 1040 mounts to the frame 12. In accordance with certain embodiments, the rotor (or output shaft) of the electric propulsion motor 1018 is constructed and arranged to rotate about a motor output axis that also extends in the X-direction thus simplifying interoperability between the electric propulsion motor 1018 and the transaxle 46. In some arrangements, the electric propulsion motor 1018 engages the transaxle 46 directly. In other arrangements, the electric propulsion motor 1018 links with the transaxle 46 via other componentry (e.g., a belt drive assembly).

The communications interface 1020 is constructed and arranged to convey communications signals between the BMS 1012 and the motor controller 1016, and perhaps among other electrical components 1000. In some arrangements, the communications interface 1020 includes a controller area network (CAN) bus enabling the BMS 1012 and the motor controller 1016 to exchange messages in accordance with the CAN bus protocol. In some arrangements, the CAN bus carries communications (e.g., messages) among several of the electrical components 1000 such as the BMS 1012, the motor controller 1016, the charger 1026, one or more gauges, a power steering controller, and so on.

The user controls 1022 are constructed and arranged to control electrical operation of the electric off-road vehicle 900. Along these lines, the user controls 1022 include a variety of user input/output devices such as a key switch that enables the electric off-road vehicle 900 to be turned on and off, a transmission control for forward/reverse/neutral, a throttle or vehicle speed controller which is supported by the handle bar, an electronic display panel, an audio output, combinations thereof, and so on.

Suitable throttle and other control mechanisms include position sensors such as Hall Effect sensors that can output signals indicating angular position signal relative to the handle bar and/or other portions of the off-road vehicle 900. Other position sensors that are suitable for use include potentiometers (e.g., that provide potentiometer signals), encoders, combinations thereof, etc. Control circuitry such as the motor controller 1016 can then operate based on their signals.

The charge port 1024 is constructed and arranged to connect the electric off-road vehicle 900 to an external power source 1028. In some arrangements, the charge port 1024 includes a standard connector enabling the charge port 1024 to connect to normal street/wall power 1028. Suitable locations for the charge port 1024 include a top region of the vehicle 900 (e.g., adjacent or under the seat), a back portion of the vehicle 900, a side of the vehicle 900, and so on.

The charger 1026 is interconnected between the charge port 1024 and the BMS 1012, and is constructed and arranged to provide electric charge to the main battery assembly 1010. In some embodiments, the charger 1026 is onboard thus enabling the electric off-road vehicle 900 to receive electric charge wherever there is an external power source 1028 available (e.g., when the charge port 1024 connects to normal street/wall power). However, nothing precludes the charger 1026 from alternatively being external to the electric off-road vehicle 900.

It should be understood that the electrical components 1000 may include additional componentry/devices/etc. In accordance with certain embodiments, the electrical components 1000 further include a DC-to-DC converter 1030, an auxiliary battery 1032, and a set of secondary loads 1034.

The DC-to-DC converter 1030 couples with the BMS 1012 and is constructed and arranged to control charging of the auxiliary battery 1032. Along these lines, the DC-to-DC converter 1030 may supply charge to the auxiliary battery 1032 when the charger 1026 is connected to an external power source 1028 (e.g., using street power), or even when the charger 1026 is not connected to an external power source 1028 (e.g., using electric power stored by the main battery assembly 1010).

The auxiliary battery 1032 serves as an auxiliary power source for the electric off-road vehicle 900. For example, the auxiliary battery 1032 may provide electric power to the BMS 1012 enabling the BMS 1012 to operate while maintaining the main battery assembly 1010 in a long term sleep mode. As another example, the auxiliary battery 1032 may provide electric power to close a relay that directs the BMS 1012 to wake up. As yet another example, the auxiliary battery 1032 may provide electric power to the secondary loads 1034 such as vehicle lights, a winch, and so on (also see FIG. 17).

It should be appreciated that the onboard electrical components 1000 of the electric off-road vehicle 900 may include additional electrical equipment. In some embodiments, the electrical components 1000 further include a variety of temperature sensors (e.g., a set of battery temperature sensors, an ambient air temperature sensor, etc.), motion sensors, brake sensors, fault sensors, cables/buses/connectors/ports/etc., combinations thereof, and so on.

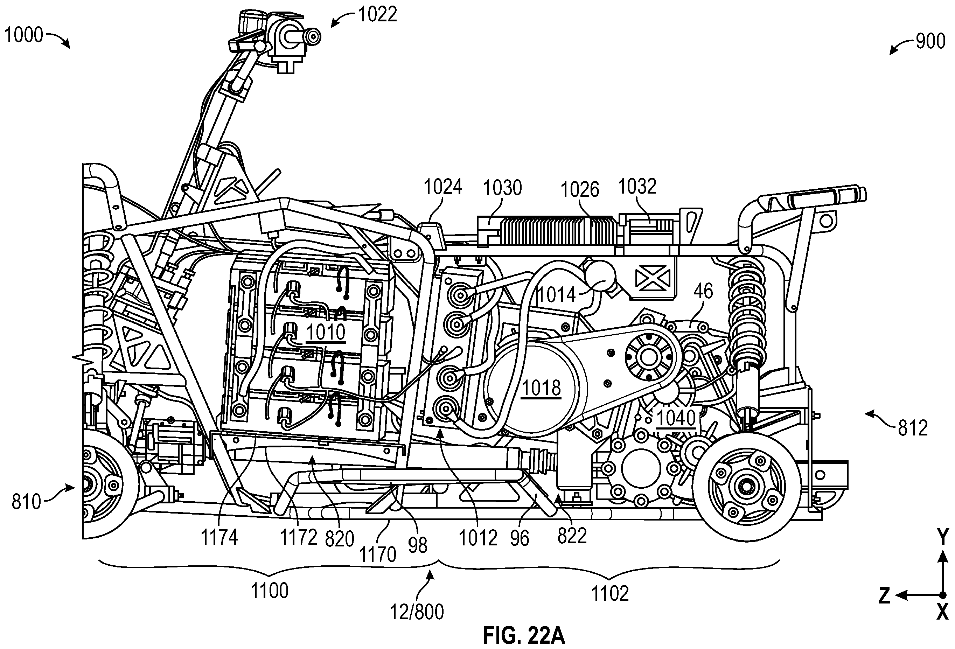

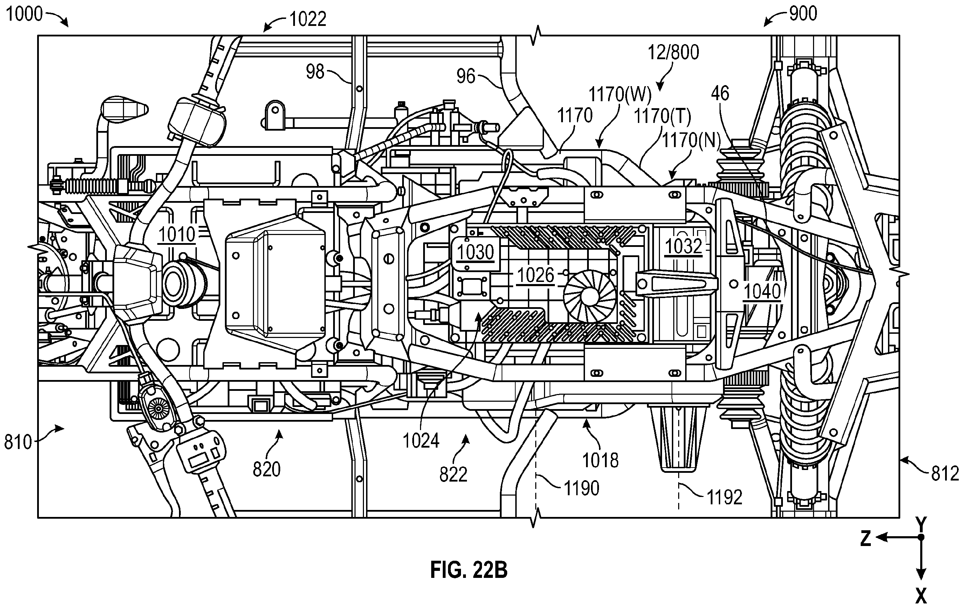

As indicated by the X, Y, and Z axes, FIGS. 21A and 21B are opposite side views showing at least some of the electrical components 1000 of the electric off-road vehicle 900. It should be understood that the electrical components 1000 may be positioned in this manner relative to the frame 12 (also see FIG. 18). Further details will now be provided with reference to FIGS. 22A and 22B.

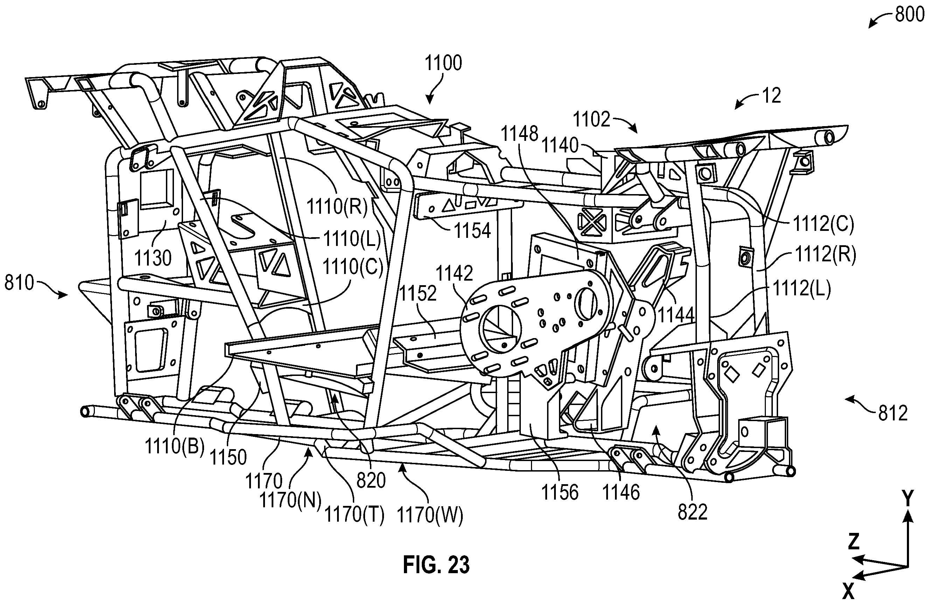

FIGS. 22A, 22B and 23 show particular details of the electrical components 1000 and the frame 12 of the electric off-road vehicle 900. FIG. 22A is a side view of the electrical components 1000 supported by the frame 12 (also see FIGS. 18 and 21A). FIG. 22B is a top view of the electrical components 1000 supported by the frame 12. FIG. 23 is a perspective view of at least a portion of the frame 12.

As mentioned earlier, the frame 12 is constructed and arranged to serve as a framework/skeletal structure 800 (also see FIG. 18) that supports the various onboard electrical components 1000 at certain predefined locations. Such locations may allow the electric off-road vehicle 900 to operate advantageously, e.g., for balance and weight distribution, for improved center of gravity, for optimized accessibility, etc.

As best seen in FIG. 22A and 23 and in accordance with certain embodiments, the frame 12 includes a first frame section 1100 and a second frame section 1102 which couples with the first frame section 1100. The first frame section 1100 supports a front suspension, and the second frame section 1102 supports a rear suspension (also see FIGS. 2A-F). In some arrangements, the first frame section 1100 and the second frame section 1102 are tightly integrated and may share one or more structural members.

As best seen in FIG. 23, the first frame section 1100 includes a left portion 1110(L), a right portion 1110(R), a set of cross-members 1110(C) extending between the left portion 1110(L) and the right portion 1110(R) to fixedly position the left portion 1110(L) and the right portion 1110(R) apart and to define the first frame space 820 between the front 810 and the second frame section 1102 (also see FIG. 23). Additionally, the first frame section 1100 includes a battery base portion 1110(B) that couples with the left portion 1110(L) and the right portion 1110(R), and that is disposed within a lower region of the first frame space 820 to support at least a portion of main battery assembly 1010 within the first frame space 820 (also see FIGS. 18 and 22A).

Similarly, the second frame section 1102 includes a left portion 1112(L), a right portion 1112(R), a set of cross-members 1112(C) extending between the left portion 1112(L) and the right portion 1112(R). These structures fixedly position the left portion 1112(L) and the right portion 1112(R) apart (FIG. 23), and define the second frame space 822 between the first frame section 1100 and the rear 812 (FIGS. 18 and 22A).

It should be understood that FIGS. 23, 59 and 60 show further frame details (which may or may not have been shown in FIG. 18) in accordance with certain embodiments. In particular, the frame 12 further includes a bracket 1130 constructed and arranged to mount the DC/DC converter and a winch contactor that controls the supply of power from the auxiliary battery to the winch. Additionally, the frame 12 may include one or more of a bracket 1140 constructed and arranged to mount the auxiliary battery and the contactor to the frame 12, a motor plate 1142 constructed and arranged to mount the electric propulsion motor 1018 to the rear-located transaxle 46 allowing for sliding to tension a belt drive system, a bracket 1144 constructed and arranged to support a shift cable in place to allow for shifting of the rear-located transaxle 46, a bracket 1146 constructed and arranged to mount the rear transaxle 46 to the frame 12, a bracket 1148 constructed and arranged to mount the motor controller 1016 to the rear-located transaxle 46, a bracket 1150 constructed and arranged to provide further support for the base portion 1110(B), a bracket 1152 constructed and arranged to mount a bottom of the BMS 1012 to the frame 12, a bracket 1154 constructed and arranged to mount a top of the BMS 1012 to the frame 12, and a bracket 1156 constructed and arranged to mount the rear-located transaxle 46 to the frame 12. Other framing structures are suitable for use with the frame 12 as well.

As best seen in FIG. 22A, the main battery assembly 1010 is positioned within the first frame space 820 between the off-road vehicle front 810 and the second frame space 822 defined by the frame 12. This forward position within the frame 12 may provide the off-road vehicle rear 812 with a balanced weight distribution along the Z-axis similar to that provided by a fuel tank in a combustion engine configuration in which the combustion engine drives the rear-located transaxle 46.

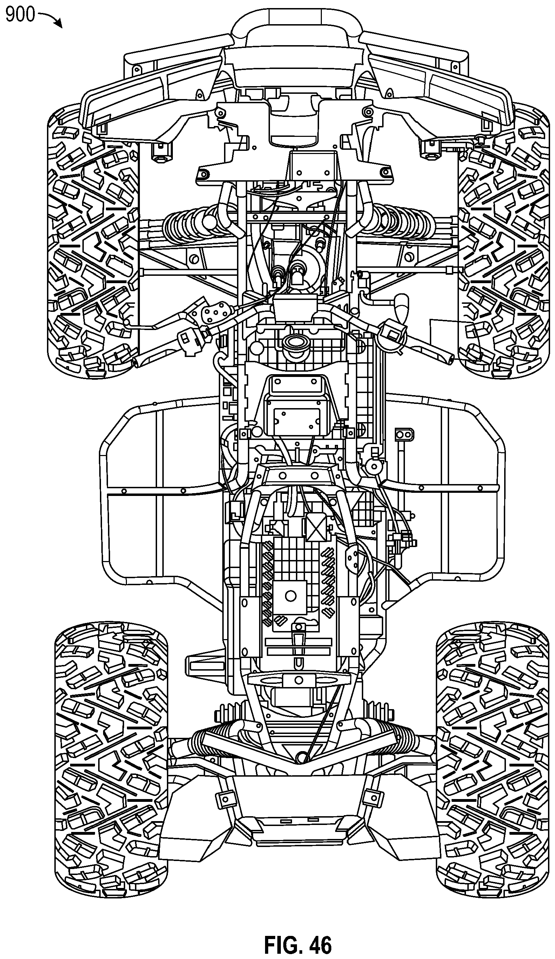

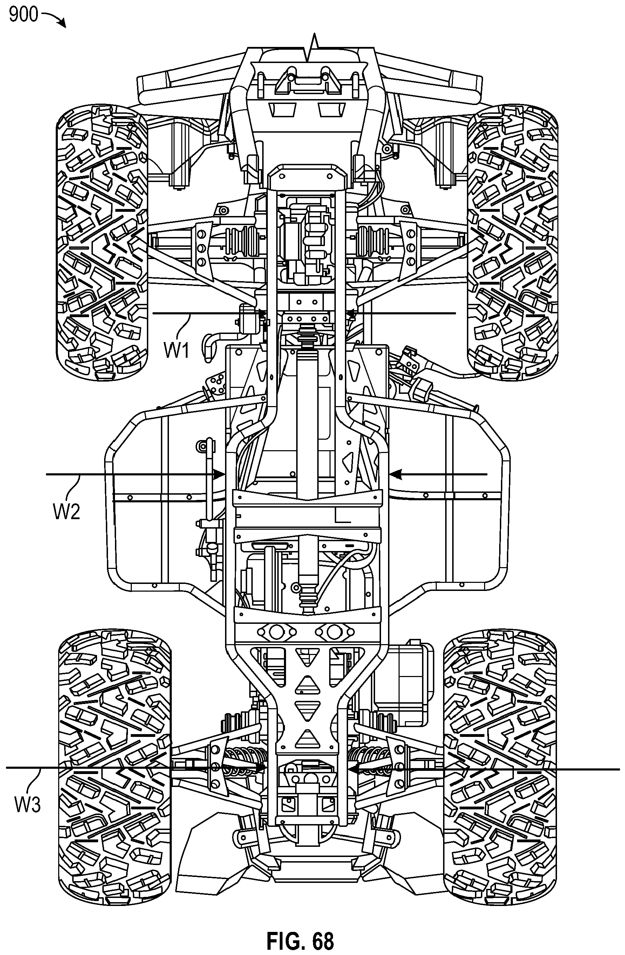

Additionally, if one were to look up in the positive Y-direction from a lower frame section (or frame bottom) 1170 of the frame 12, it would be clear that the main battery assembly 1010 is partially over a narrow portion 1170(N) of the lower frame section 1170 (as measured along the X-axis), partially over a wide portion 1170(W) of the lower frame section 1170 (as measured along the X-axis), and partially over a transitioning portion 1170(T) where the narrow portion 1170(N) transitions to the wide portion 1170(W). FIGS. 22B and 68 show this transition 1170(T) between the wide and narrow portions 1170(W), 1170(N) of the lower frame section 1170 (also see FIGS. 46, 47, 52 and 53). As shown in FIG. 68, narrow portions of the lower frame section define widths W1 and W3 which are narrower than the width W2 of a wider portion of the lower frame section. Accordingly, moving up in the positive Y-direction from the lower frame 1170, it would be noted that the main battery assembly 1010 extends laterally outward from the narrow portion 1170(N), and extends laterally outward to a similar distance over the wider portion 1170(W) of the lower frame section 1170.

Furthermore, it should be understood that the main battery assembly 1010 is elevated above the lower frame section 1170 (e.g., six inches, eight inches, etc.). Such positioning provides clearance for a drive shaft of the transaxle 46 (predominantly extending along the Z-axis between the front and rear suspensions) in a configuration in which the drive shaft positioned at a level that is higher than that of the lower frame section 1170 (also see FIG. 22A).

In some arrangements, the main battery assembly 1010 is positioned higher than one or more of the foot perimeter 96 and the foot support member 98 (also see FIGS. 22A and 22B). Additionally, at least a portion of the main battery assembly 1010 is positioned rearward of a forward end of the foot perimeter 96 along the longitudinal centerline of the off-road vehicle 900.

The base portion 1110(B) may include horizontal beams (or trusses) 1172 and a plate (or tray) 1174 which bears and distributes the weight on to the horizontal beams 1172 (e.g., see FIG. 22A). In some configurations, the beams 1172 extend slightly upward (or tilt) along the Z-axis thus positioning the main battery assembly 1010 such that a forward end (or front facing portion that faces the vehicle front 810) is higher than a rearward end (or rear facing portion that faces the vehicle rear 812). Such configurations may facilitate keeping the bottom of the main battery assembly 1010 firmly against a back lip of the plate 1174 during forward accelerations by the electric off-road vehicle 900.

As best seen in FIG. 22A and in accordance with certain embodiments, the main battery assembly 1010 includes a set of battery units (i.e., one or more battery units). Along these lines, the main battery assembly 1010 is shown as including an example configuration having four battery units although other numbers of battery units are also suitable for use (e.g., one, two, three, five, and so on).

In the example configuration, the battery units are arranged in a stack or column. The bottom most battery unit fastens directly to the plate 1174 via hardware (e.g., bolts, nuts, clips brackets, combinations thereof, etc.). In some arrangements, one or more corners of each battery unit may define holes or other mounting structures enabling the hardware to easily capture that battery unit.

In the example stack configuration, the battery unit second from the bottom then fastens directly to the bottom most battery unit via hardware. As a result, the battery unit second from the bottom is indirectly secured to the plate 1174 through the bottom most battery unit. Likewise, the battery unit third from the bottom then fastens directly to the battery unit that is second from the bottom, and so on. Furthermore, the tops and bottoms of the battery unit may define interlocking structures that prevent the battery units from laterally sliding relative to each other (e.g., along the X-axis and/or the Z-axis).

Moreover, the battery units may include terminals along the edges enabling the battery units to connect via a set of bus bars along just one side of the main battery assembly 1010 for easy serviceability (e.g., the left side as shown in FIG. 22A). In some arrangements, the set of bus bars provides electrical connectivity, as well as mechanical strength (e.g., physical support) to further hold the battery units together and in place relative to the frame 12. In some arrangements, cables are used in place of, or in combination with, bus bars.

It should be understood that each battery unit may include one or more batteries or cells. Such batteries may be connected together to form an array. Additionally, each battery unit may include a set of sensors enabling the BMS 1012 to monitor battery state of charge, temperature, and/or other health-related characteristics.

In an embodiment, looking down in the negative Y-direction in FIG. 22B, the handlebars 148 are located rearward of the forward end of the main battery assembly 1010 (also see FIGS. 7A-H). In addition to, or alternatively, looking at the side view in FIG. 22A, at least a portion of the main battery assembly 1010 is positioned below a rotor (or drive axis) of the electric propulsion motor 1018 (as measured along the Y-axis). Furthermore, the forward end of the main battery assembly 1010 is between the front and rear wheel axles. Also, the rearward end of the main battery assembly 1010 is positioned below a forward end of the seat 16.

As shown in FIGS. 22A and 22B, the BMS 1012 is disposed between the main battery assembly 1010 and the electric propulsion motor 1018. Such placement enables shorter cabling while providing serviceability convenience. At least a portion of the BMS 1012 is supported by the upper frame section 1180 which may include one or more lateral cross-members. In an illustrative example, the bracket 1154 is secured to the upper frame section 1180, and the upper portion of the BMS 1012 is secured to the bracket 1154 beneath the seat 16.

In some arrangements, the bottom of the BMS 1012 is positioned higher than the bottom of the main battery assembly 1010. In some arrangements, at least a portion of the BMS 1012 is positioned forward of the charger 1026 and the auxiliary battery 1032. In some arrangements, at least a portion of the BMS 1012 is below the axis of rotation of the electric propulsion motor 1018 and/or the axis of rotation of the transaxle 46.

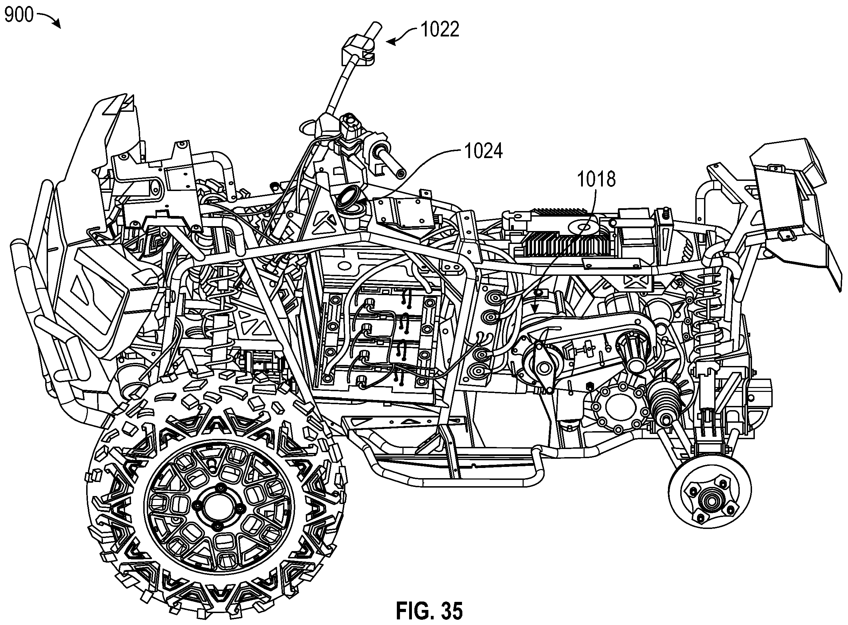

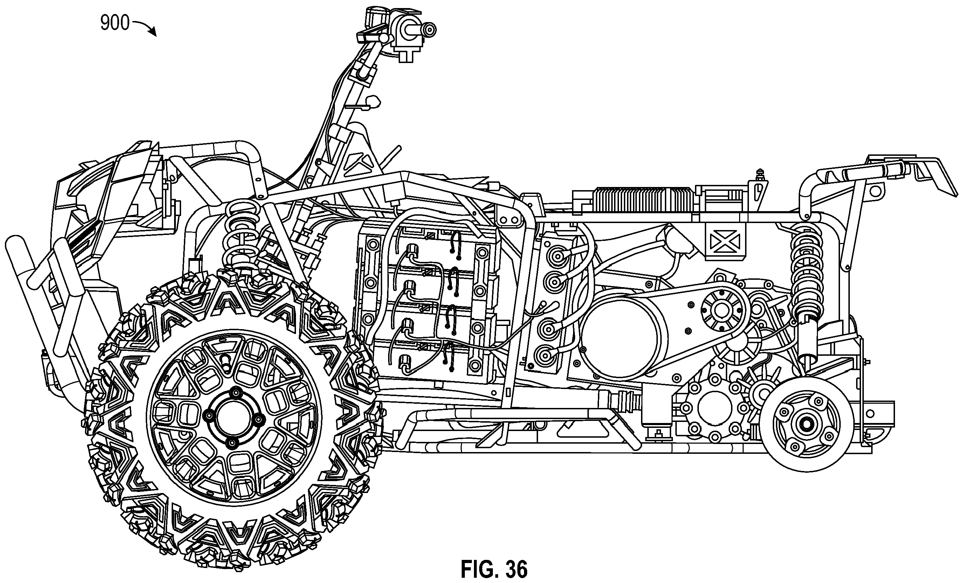

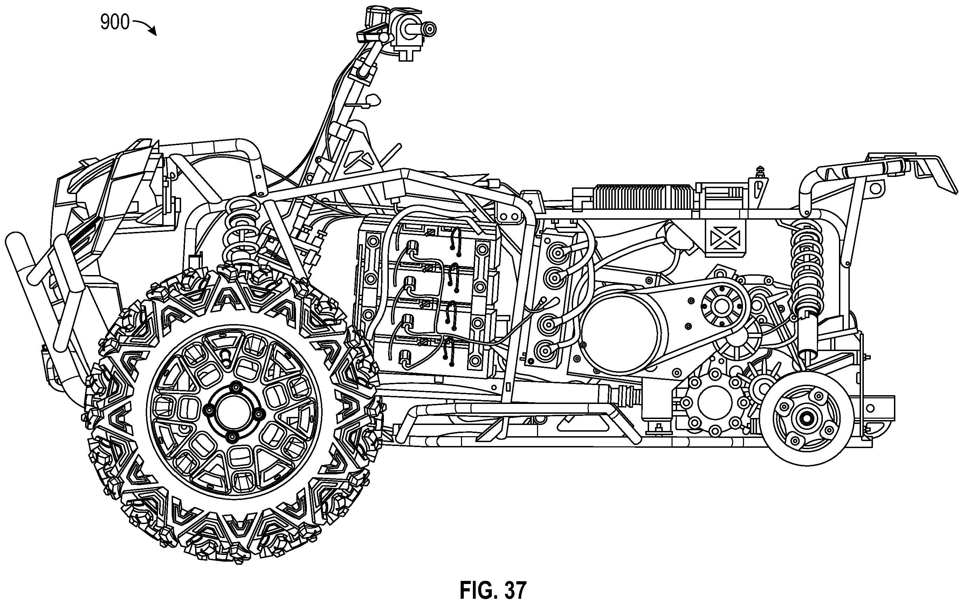

As mentioned earlier, the electric propulsion motor 1018 links with the transaxle 46 via other componentry (e.g., a belt drive assembly) in accordance with certain embodiments (e.g., see FIG. 35). Such detail is best seen in FIG. 22B in which the rotor (or output shaft) of the electric propulsion motor 1018 defines an axis of rotation 1190 that extends in the X-direction. The transaxle 46 includes an input (e.g., a gear) that receives rotation about a transaxle input axis 1192 that also extends in the X-direction. Accordingly, the electric propulsion motor 1018 is able to link with the transaxle 46 via linkage such as a belt under tension. It should be understood that other linking componentry is suitable for use as well (e.g., one or more gears, shafts, cables, chains, belts, combinations thereof, etc.). As shown in FIG. 22B, the electric propulsion motor 1018 may be positioned along the longitudinal centerline of the vehicle between the main battery assembly 1010 and the transaxle 46, with the axis of rotation 1190 positioned rearward of at least a forwardmost portion of a coupler (or coupling member) positioned on a rearward end of the drive shaft 142, and optionally rearward of the outboardmost portion of the foot perimeter members 96. The electric propulsion motor 1018, and optionally the belt cover (e.g., FIGS. 36 and 37), may be positioned entirely between the outboardmost sides of the lower frame 1170 (e.g., FIG. 22B).

In accordance with certain embodiments, the rearward positioning of the axis of rotation 1190 for the electric propulsion motor 1018 is different from that of the combustion engine which is positioned forward of the coupling. This difference may be seen in certain figures such as Fig. 35 vs. FIG. 11C.

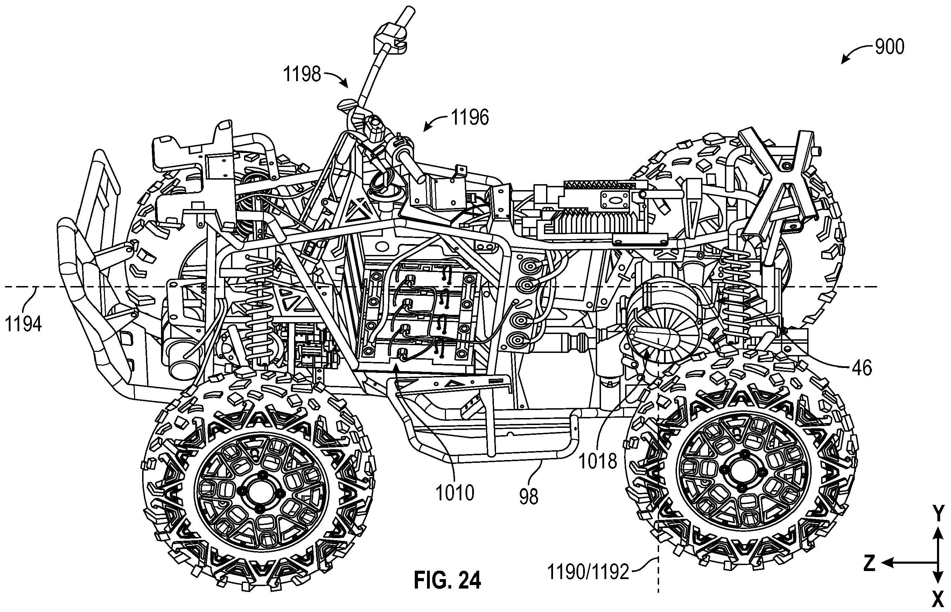

As also mentioned earlier, the electric propulsion motor 1018 directly engages with the transaxle 46 in accordance with other embodiments. Here, the stator of the electric propulsion motor 1018 fastens (or mounts) directly to the housing of the transaxle 46. Such detail is best seen in FIG. 24 which shows a perspective view of the electric off-road vehicle 900 which certain body panels and other components removed. As shown in FIG. 24, the rotor (or output shaft) of the electric propulsion motor 1018 directly engages the transaxle 46. Here, the axis of rotation 1190 of the output shaft of the electric propulsion motor 1018 aligns with the transaxle input axis 1192 along the X-axis. Accordingly, the electric propulsion motor 1018 is able to directly interface with the transaxle 46. Advantageously, such a configuration is simple and minimizes possible points of failure. In an illustrative example, the electric propulsion motor 1018 is positioned at least partially between the rear wheels and extends outboard of at least a portion of the lower frame that is positioned between the rear wheels 14, optionally with the axis of rotation 1190 of the electric propulsion motor 1018 being positioned higher than the axis of rotation of the rear wheels, and optionally higher than the rear wheel 14 rims. Optionally, the electric propulsion motor 1018 is positioned rearward along the centerline of the vehicle of the forwardmost portion of the tires of the rear wheels 14.

At this point, it is further worth noting that, for both the linkage configuration (e.g., see FIG. 22B) and the direct engagement configuration (e.g., see FIG. 24), the axis of rotation 1190 of the motor output shaft intersects a line 1194 extending parallel to a longitudinal centerline of the electric off-road vehicle 900. This feature is best seen in FIG. 24 but is present in both configurations. In particular, the line 1194 is positioned above at least a portion of the main battery assembly 1010 when the main battery assembly 1010 couples with the electric propulsion motor 1018.

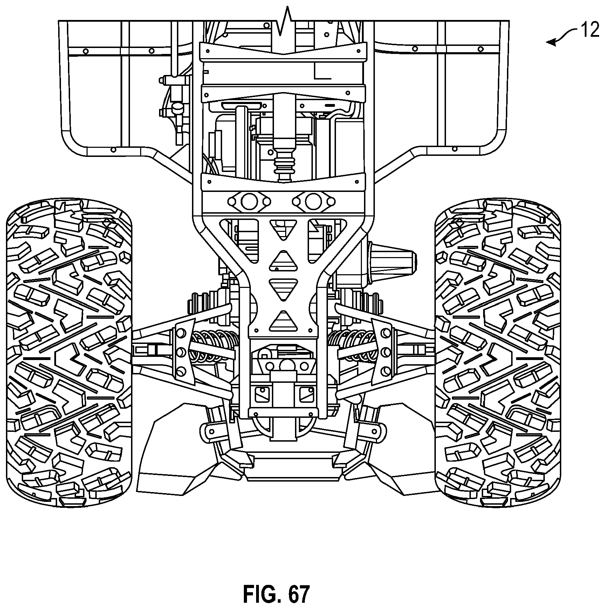

For both the linkage configuration (e.g., see FIG. 22B) and the direct engagement configuration (e.g., see FIG. 24), the motor controller 1016 may be disposed close to the electric propulsion motor 1018 such as on the opposite side of the electric off-road vehicle 900 (also see FIG. 21B). The motor controller 1016 may be supported in this manner by a bracket (or support member) 1148 that mounts to the housing 1040 of the transaxle 46. In such an arrangement, the bracket 1148 may extend forward of the transaxle 46 to support the motor controller 1016 vertically between the upper frame 1180 and the lower frame 1170, at a position that is rearward of the BMS 1012 and below the charger 1026. The housing 1040 of the transaxle 46 may also provide the mounting point for the motor plate 1142 for the linkage configuration (e.g., see FIG. 22B). The rearward end of the motor plate 1142 is secured to the transaxle 46 housing and the motor plate extends forward to provide a mounting point for the electric propulsion motor 1018 that positions the electric propulsion motor 1018 between the motor plate 1142 and the bracket 1148 (e.g., see FIG. 67). Accordingly, the electric propulsion motor 1018 may be suspended between the upper frame 1180 and the lower frame 1170, and be positioned adjacent the motor controller 1016.

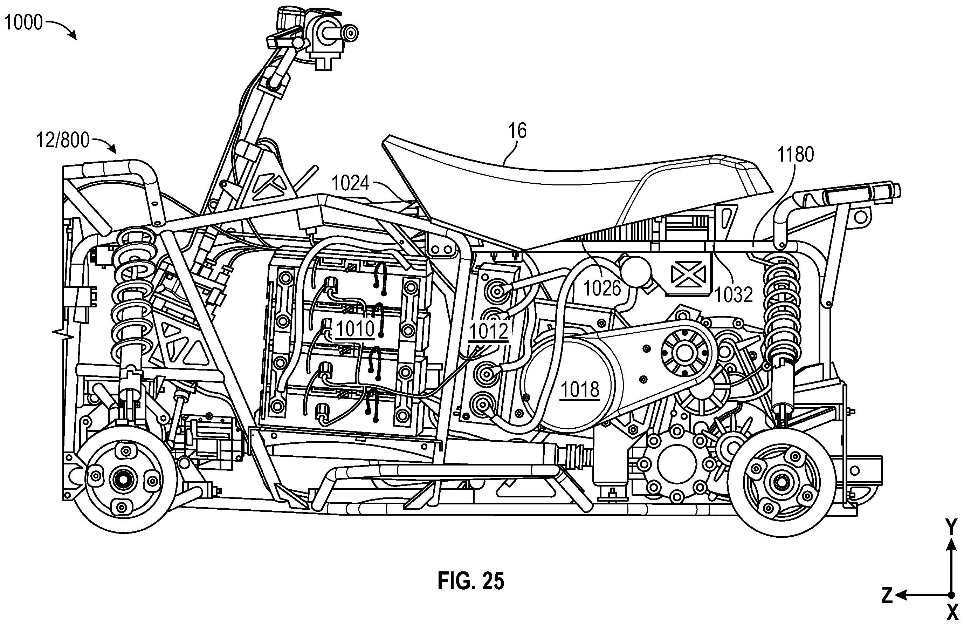

FIG. 25 shows further details of the electric off-road vehicle 900 in accordance with certain embodiments. In particular, the straddle seat 16 (also see FIGS. 1A and 1B) is illustrated in a normal operating position adjacent an upper frame section (or frame top) 1180 of the frame 12. It should be understood that the upper frame section 1180 serves as a flat horizontal portion of the frame 12 at and/or above which various electrical components 1000 may be positioned for improved operability, accessibility, etc.

As shown in FIG. 25 and in accordance with certain embodiments, the charge port 1024 is positioned forward of at least a lower portion of the straddle seat 16 and rearward of the steering assembly. Additionally, the charge port 1024 is positioned forward and vertically above the charger 1026. Such a position for the charge port 1024 enables the charge port 1024 to be connected to an external power source 1028 regardless of whether the straddle seat 16 is in the normal operating position or pivoted up (e.g., in order to access a storage space).

As further shown in FIG. 25 and in accordance with certain embodiments, the charger 1026 is located adjacent the charge port 1024 and underneath the straddle seat 16. This location enables the charger 1026 to access ambient air flow during operation (e.g., for heat dissipation). Additionally, the charger 1026 is positioned at least partially above the upper frame section 1180, as well as rearward and at least partially above the main battery assembly 1010. Furthermore, the charger 1026 is positioned rearward and at least partially above the BMS 1012 (also see FIG. 22B). Also the charger 1026 may be positioned directly over the electric propulsion motor 1018.

As yet further shown in FIG. 25 and in accordance with certain embodiments, the auxiliary battery 1032 is located adjacent the charger 1026 underneath the straddle seat 16. This co-location of the auxiliary battery 1032 with the charger 1026 at or at least partially above the upper frame section 1180 facilitates auxiliary battery accessibility (e.g., the auxiliary battery 1032 may have many of the same placement features as those mentioned above for the charger 1026). The auxiliary battery 1032 may be suspended from the rear upper frame members (e.g., see members 110 in FIG. 5E) by the bracket 1140 that includes a basket portion that is positioned between the rear upper frame members (e.g., see members 110 in FIG. 5E) and extends at least partially below the upper frame member 1180 to receive the auxiliary battery 1032 and position at least a portion of the auxiliary battery 1032 below the upper frame member 1180 in the second frame space 822. The bracket 1140 includes flanges extending outward from the basket portion that extend over and are secured to the rear upper frame members (e.g., see members 110 in FIG. 5E). A portion of the bracket 1140 extends forward from the basket to provide a mounting point for the contactor 1014 (e,g, see FIGS. 20, 54, and 57).

In accordance with certain embodiments, at least a portion of the charge port 1024 (e.g., see FIG. 35), the charger 1026, and the auxiliary battery 1032 reside above the upper frame section 1180. It should be appreciated that other electrical components may at least partly reside above the upper frame section 1180 as well. For example, FIG. 24 shows a position sensor 1196 that is supported by the handle bar and that provides speed control.

As further shown in FIG. 24 and in accordance with certain embodiments, at least a portion of the charge port 1024, the charger 1026, and the auxiliary battery 1032 reside rearward of a point 1198 (e.g., see FIG. 42) on the steering column that is positioned above at least a portion of the upper frame. In particular, the point 1198 on the steering column is positioned above the highest portion of the upper frame and forward along the centerline of the vehicle of a rearwardmost portion of a front tire.

It should be further appreciated that the particular positions of the electrical components 1000 may provide for an advantageous center of gravity (COG) for the electric off-road vehicle 900. Along these lines, the main battery assembly 1010, the BMS 1012, and the motor controller 1016 are at least partially positioned toward the middle of the electric off-road vehicle 900 (e.g., each is at least partially positioned along the foot perimeter members 96 at the middle of vehicle 900 as measured along the Z-axis, also see FIGS. 4B and 24).

Other electrical component weight distribution features exist for the off-road vehicle 900. In accordance with certain embodiments, at least 95% of the mass of the motor controller 1016, the battery management system 1012, and the main battery assembly 1010 is positioned along a longitudinal centerline of the vehicle 900 between the forwardmost portion of the rear tires (or wheels) and the rearwardmost portion of the front tires (or wheels).

Additionally, in accordance with certain embodiments, at least a portion of each of the main battery assembly 1010, the BMS 1012, and the motor controller 1016 is positioned below a motor axis of rotation 1190 and/or 1192 (also see FIG. 24). Furthermore, in accordance with certain embodiments, at least a portion of the battery units of the main battery assembly 1010 is equal to or within the width of the lower frame 1170 (e.g., the widest portion of the lower frame 1170, also see FIG. 22B).

Furthermore, it should be understood that various portions of the lower frame section may have different widths. As shown in FIG. 68 and in accordance with certain embodiments, the forward portion (measured by width W1) and rearward portion (measured by width W3) of the lower frame section are narrower than the mid-portion of the lower frame section (measured by width W2). In some arrangements, the transition portions between the front narrow section and wide mid-section is where the main battery assembly 1010 is placed. Additionally, in some arrangements, the transition between the mid-section and the rear narrow section is where the electric propulsion motor 1018 is positioned for a direct transaxle input axis configuration.

Additionally, FIG. 25 conveniently shows that the majority of electrical components 1000 reside within the space between the four wheels of the electric off-road vehicle 900. That is, a front pair of wheels is supported by the front suspension, and a rear pair of wheels supported by the rear suspension. The front and rear pairs of wheels are arranged in a quad configuration in which at least a portion of the first frame section 1100 is between the wheels of the front pair and at least a portion of the second frame section 1102 is between the wheels of the back pair.

Moreover, at least a portion of the main battery assembly 1010 resides between a first vertical plane (an XY-plane) passing through the front suspension and a second vertical plane (another XY-plane) passing through the rear suspension. Also, at least a portion of the electric propulsion motor 1018 resides between the first vertical plane passing through the front suspension and the second vertical plane passing through the rear suspension.

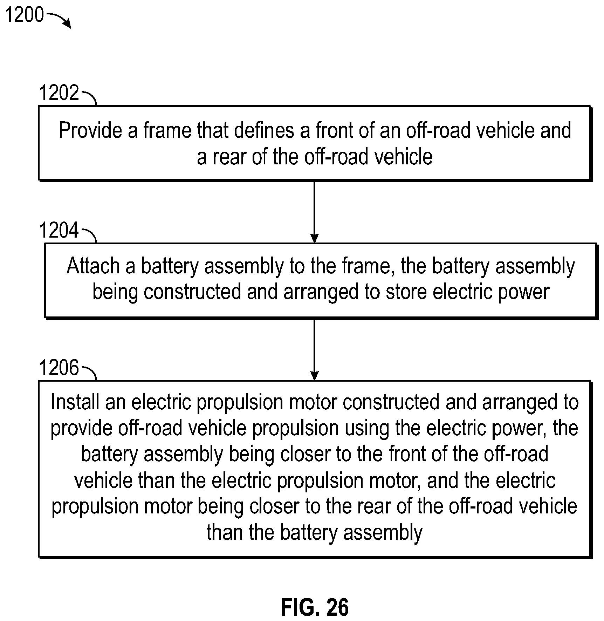

In some arrangements, the two front wheels define a first axis of rotation, and the two rear wheels define a second axis of rotation. Additionally, the main battery assembly 1010 is positioned entirely above a line extending through the first axis of rotation and the second axis of rotation (e.g., a horizontal line, a line defined by the draft shaft of the transaxle 46, etc.). Further details will now be provided with reference to FIG. 26.

FIG. 26 is a flowchart of a procedure 1200 which is performed when providing an off-road vehicle in accordance with certain embodiments. Example performers of the procedure 1200 include an off-road vehicle manufacturer, automated equipment, a human, combinations thereof, etc.

At 1202, the provider furnishes a frame that defines a front of the off-road vehicle and a rear of the off-road vehicle. A suitable frame is shown in FIG. 24.

At 1204, the provider attaches a battery assembly to the frame, the battery assembly being constructed and arranged to store electric power. Such a battery assembly is shown in FIGS. 21A and 21B.

At 1206, the provider installs an electric propulsion motor constructed and arranged to provide off-road vehicle propulsion using the electric power, the battery assembly being closer to the front of the off-road vehicle than the electric propulsion motor, and the electric propulsion motor being closer to the rear of the off-road vehicle than the battery assembly. For example, a transaxle may be fastened to the frame, and installing the electric propulsion motor may involve connecting the electric propulsion motor to the transaxle.

In some arrangements, such installation involves attaching a housing of the electric propulsion motor to the transaxle to engage a rotor of the electric propulsion motor directly with an input of the transaxle. Accordingly, the electric propulsion motor is able to directly drive the transaxle.

In other arrangements, such installation involves mounting a housing of the electric propulsion motor to a bracket extending from the transaxle, and tensioning a belt that connects a rotor of the electric propulsion motor with an input of the transaxle. For example, the bracket may enable the electric propulsion motor to slide relative to the transaxle and thus tension a belt drive system that interconnects the rotor to the transaxle input.

In some arrangements, installing the electric propulsion motor includes coupling the electric propulsion motor to a transaxle having a transaxle housing (e.g., see FIG. 21A). At least a portion of the electric propulsion motor is supported by the transaxle housing.

Other embodiments of the present disclosure are possible. Although the description above contains much specificity, these should not be construed as limiting the scope of the disclosure, but as merely providing illustrations of some of the presently preferred embodiments of this disclosure. It is also contemplated that various combinations or sub-combinations of the specific features and aspects of the embodiments may be made and still fall within the scope of this disclosure. It should be understood that various features and aspects of the disclosed embodiments can be combined with or substituted for one another in order to form various embodiments. Thus, it is intended that the scope of at least some of the present disclosure should not be limited by the particular disclosed embodiments described above.

Thus the scope of this disclosure should be determined by the appended claims and their legal equivalents. Therefore, it will be appreciated that the scope of the present disclosure fully encompasses other embodiments which may become obvious to those skilled in the art, and that the scope of the present disclosure is accordingly to be limited by nothing other than the appended claims, in which reference to an element in the singular is not intended to mean "one and only one" unless explicitly so stated, but rather "one or more." All structural. chemical, and functional equivalents to the elements of the above-described preferred embodiment that are known to those of ordinary skill in the art are expressly incorporated herein by reference and are intended to be encompassed by the present claims. Moreover, it is not necessary for a device or method to address each and every problem sought to be solved by the present disclosure, for it to be encompassed by the present claims. Furthermore, no element, component, or method step in the present disclosure is intended to be dedicated to the public regardless of whether the element, component, or method step is explicitly recited in the claims.

The foregoing description of various preferred embodiments of the disclosure have been presented for purposes of illustration and description. It is not intended to be exhaustiye or to limit the disclosure to the precise embodiments, and obviously many modifications and variations are possible in light of the above teaching. The example embodiments, as described above, were chosen and described in order to best explain the principles of the disclosure and its practical application to thereby enable others skilled in the art to best utilize the disclosure in various embodiments and with various modifications as are suited to the particular use contemplated. It is intended that the scope of the disclosure be defined by the claims appended hereto.

Various examples have been described. These and other examples are within the scope of the following claims.

## Claims

1. An off-road vehicle, comprising:
a frame defining a front of the off-road vehicle and a rear of the off-road vehicle;
a battery assembly supported by the frame, the battery assembly being constructed and arranged to store electric power; and
an electric propulsion motor constructed and arranged to provide off-road vehicle propulsion using the electric power, the battery assembly being closer to the front of the off-road vehicle than the electric propulsion motor, and the electric propulsion motor being closer to the rear of the off-road vehicle than the battery assembly.

2. The off-road vehicle as in claim 1 wherein the frame includes a first frame section
and a second frame section;
wherein the first frame section supports a front suspension and the battery assembly; and
wherein the second frame section couples with the first frame section and supports a rear suspension and the electric propulsion motor.

3. The off-road vehicle as in claim 2 wherein the battery assembly includes a set of
battery units; and
wherein the first frame section includes:
a left portion,
a right portion,
a set of cross-members extending between the left portion and the right portion to fixedly position the left portion and the right portion apart and define a first frame space between the front of the off-road vehicle and the second frame section, and
a base portion coupled with the left portion and the right portion and disposed within a lower region of the first frame space, the base portion supporting at least a portion of the set of battery units within the first frame space.

4. The off-road vehicle as in claim 3 wherein the set of battery units includes:
a stack of battery units including a bottom battery unit and a top
battery unit;
wherein the bottom battery unit (i) fastens directly to the base portion and (ii) supports at least one other battery unit of the set of battery units above the base portion; and
wherein the top battery unit fastens indirectly to the base portion via at least the bottom battery unit.

5. The off-road vehicle as in claim 3 wherein the battery units of the set of battery
units are physically arranged in a stacked configuration; and
wherein the battery assembly further includes a set of bus bars constructed and arranged to electrically connect the battery units of the set of battery units together and physically support to the battery units of the set of battery units in respective positions within the stack configuration.

6. The off-road vehicle as in claim 2, further comprising:
a motor controller coupled with the electric propulsion motor, the motor controller being constructed and arranged to control operation of the electric propulsion motor; and
wherein the second frame section includes:
a left portion,
a right portion, and
a set of cross-members extending between the left portion and the right portion to fixedly position the left portion and the right portion apart and define a second frame space between the first frame section and the rear of the off-road vehicle, the motor controller and at least a portion of the electric propulsion motor residing within the second frame space.

7. The off-road vehicle as in claim 6, further comprising:
a transaxle having a housing supported by the frame, an input portion constructed and arranged to receive rotation about a transaxle input axis from the electric propulsion motor, an output portion that couples with at least one of the front and rear suspensions, and
wherein the electric propulsion motor includes a stator fastened to the housing of the transaxle, and a rotor that engages directly with the input portion of the transaxle, the rotor being constructed and arranged to rotate relative to the stator about a rotor axis that is parallel to the transaxle input axis in response to operation of the motor controller.

8. The off-road vehicle as in claim 6, further comprising:
a transaxle having a housing supported by the frame, an input portion constructed and arranged to receive rotation about a transaxle input axis from the electric propulsion motor, an output portion that couples with at least one of the front and rear suspensions, and
a belt drive assembly coupled with the input portion; and
wherein the electric propulsion motor includes a stator supported by the frame,
and a rotor that engages with the belt drive assembly to drive the input portion of the transaxle, the rotor being constructed and arranged to rotate relative to the stator about a rotor axis that is parallel to the transaxle input axis in response to operation of the motor controller.

9. The off-road vehicle as in claim 6, further comprising:
a position sensor coupled with the motor controller, the position sensor being supported by a handlebar which is able to pivot relative to the frame, the position sensor being constructed and arranged to provide a position sensor signal to the motor controller for off-road vehicle speed control.

10. The off-road vehicle as in claim 6, further comprising:
a battery management system (BMS) coupled with the battery assembly, the BMS being constructed and arranged to control electrical access to the battery assembly; and
wherein the second frame section further includes:
a set of BMS brackets coupled with the set of cross-members, the set of BMS brackets supporting at least a portion of the BMS within the second frame space.

11. The off-road vehicle as in claim 10, further comprising:
an onboard charger coupled with the BMS, the onboard charger being constructed and arranged to charge the battery assembly through the BMS;
wherein the second frame section is constructed and arranged to support a seat at a seat location above the second frame space; and
wherein the onboard charger is supported by the second frame section and disposed at least partly between the second frame space and the seat location.

12. The off-road vehicle as in claim 11, further comprising:
a charge port coupled with the onboard charger, the charge port being constructed and arranged to provide the onboard charger with electrical access to an external power source, the charge port being supported by the frame at a charge port location which is higher than the onboard charger and forward of the seat location.

13. The off-road vehicle as in claim 11, further comprising:
an auxiliary power supply coupled with the BMS, the auxiliary power supply being constructed and arranged to store auxiliary power, the auxiliary power supply being supported by the frame at an auxiliary power supply location which is adjacent to the onboard charger and under the seat location.

14. The off-road vehicle as in claim 13 wherein the auxiliary power supply is constructed and arranged to provide power to the BMS when the BMS transitions the battery assembly between a long term sleep mode and a normal operating mode.

15. The off-road vehicle as in claim 13, further comprising:
a winch supported by the frame and coupled with the auxiliary power supply, the auxiliary power supply being constructed and arranged to provide power to the winch during winch operation.

16. The off-road vehicle as in any of claims 2 through 15, further comprising:
a front pair of wheels supported by the front suspension; and
a rear pair of wheels supported by the rear suspension, the front and rear pairs of wheels being arranged in a quad configuration in which at least a portion of the first frame section is between the wheels of the front pair and at least a portion of the second frame section is between the wheels of the back pair.

17. The off-road vehicle as in claim 16 wherein at least a portion of the battery
assembly resides between a first vertical plane passing through the front suspension and a second vertical plane passing through the rear suspension; and
wherein at least a portion of the electric propulsion motor resides between the first vertical plane passing through the front suspension and the second vertical plane passing through the rear suspension.

18. The off-road vehicle as in any of claims 1 through 17, further comprising:
a transaxle having a transaxle housing, wherein the electric propulsion motor is supported by the transaxle housing.

19. A method of providing an off-road vehicle, the method comprising:
providing a frame that defines a front of the off-road vehicle and a rear of the off-road vehicle;
attaching a battery assembly to the frame, the battery assembly being constructed and arranged to store electric power; and
installing an electric propulsion motor constructed and arranged to provide off-road vehicle propulsion using the electric power, the battery assembly being closer to the front of the off-road vehicle than the electric propulsion motor, and the electric propulsion motor being closer to the rear of the off-road vehicle than the battery assembly.

20. The method as in claim 19 wherein installing the electric propulsion motor includes:
coupling the electric propulsion motor to a transaxle having a transaxle housing, wherein the electric propulsion motor is supported by the transaxle housing.
